# EUROPÄISCHE PATENTSCHRIFT

(11) **EP 2 517 574 B1**
(45) Veröffentlichungstag und Bekanntmachung des Hinweises auf die Patenterteilung: **11.11.2015**
(21) Anmeldenummer: 11164373.0
(22) Anmeldetag: 29.04.2011
(51) Int. Cl.: A23L 1/221, A23L 1/22

(54) **Bestimmte Vanillyllignane und deren Verwendung als Geschmacksverbesserer**
Specific vanillyl lignanes and their use as taste enhancers
Lignanes vanillyl spécifiques et leur utilisation comme améliorateurs de goût

(43) Veröffentlichungstag der Anmeldung: 31.10.2012
(73) Patentinhaber: Symrise AG, 37603 Holzminden (DE)
(72) Erfinder: Backes, Dr. Michael, 37603, Holzminden (DE); Reichelt, Dr. Katharina, 37603, Holzminden (DE); Ley, Dr. Jakob, 37603, Holzminden (DE); Paetz, Susanne, 37671, Höxter (DE)
(74) Vertreter: Eisenführ Speiser

(56) Entgegenhaltungen:
- WO-A1-02/080702
- WO-A1-2004/020474
- US-A1- 2004 048 804
- US-A1- 2010 129 302
- DATABASE WPI Week 201022 Thomson Scientific, London, GB; AN 2010-D15543 XP002667324, & JP 2010 057367 A (NITTO BOSEKI CO LTD) 18. März 2010 (2010-03-18)
- DATABASE WPI Week 200351 Thomson Scientific, London, GB; AN 2003-536168 XP002667325, & JP 2003 063971 A (TAMA SEIKAGAKU KK) 5. März 2003 (2003-03-05)
- MILDER IVON E J ET AL: "Lignan contents of Dutch plant foods: a database including lariciresinol, pinoresinol, secoisolariciresinol and matairesinol", BRITISH JOURNAL OF NUTRITION, Bd. 93, Nr. 3, März 2005 (2005-03), Seiten 393-402, XP002667326, ISSN: 0007-1145

## Beschreibung

Die Erfindung betrifft die Verwendung bestimmter Verbindungen aus der Strukturklasse der Vanillyllignane bzw. deren Salze und/oder Gemische zur Maskierung unangenehmer Geschmackseindrücke, insbesondere bitterer, adstringierender und/oder metallischer Geschmackseindrücke. Die Erfindung betrifft auch ein entsprechendes Verfahren zur Maskierung unangenehmer Geschmackseindrücke, insbesondere bitterer, adstringierender und/oder metallischer Geschmackseindrücke. Ferner betrifft die Erfindung bestimmte Zubereitungen, die einen wirksamen Gehalt an erfindungsgemäß einzusetzenden Vanillyllignanen bzw. deren Salzen und/oder Gemischen enthalten.

Nahrungs- oder Genussmittel enthalten häufig eine Vielzahl verschiedener Bitterstoffe, die zwar einerseits in bestimmten Lebensmitteln in Maßen erwünscht sind und zu deren charakteristischen Geschmack beitragen (z.B. Coffein in Tee oder Kaffee, Chinin in so genannten Bitter-Lemon-Getränken, Bitterstoffe aus Hopfen in Bier), andererseits den Wert aber auch stark mindern können (z.B. Flavonoidglycoside und Limonoide in Zitrussäften, bitterer Nachgeschmack vieler hochintensiver Süßstoffe wie Aspartam, Cyclamat, Acesulfam K, Rebaudiosid A, Glyccyrhizinsäure oder Saccharin, hydrophobe Aminosäuren und/oder Peptide in Käse).

Bittergeschmack wird regelmäßig durch einzelne Stoffe (Beispiele siehe unten) verursacht, die an spezielle Bitterrezeptoren auf Geschmackszellen (die in den sogenannten Geschmacksknospen auf der Zunge zu finden sind) binden und über neurochemische Kaskaden ein Signal an das Gehirn senden, dass eine Abwehrreaktion und einen negativen Geschmackseindruck verursacht (vgl. Wolfgang Meyerhof, Reviews of Physiology, Biochemistry and Pharmacology 2005, 154, 37-72).

Adstringierender Geschmack wird in der Regel durch Fällung von Prolin-reichen Proteinen im Speichel durch Adstringenzien, z.B. Metallsalze, Polyphenole wie (Gallo-)Catechine, Proanthocyanidine, andere Flavonoide oder Tannine, verursacht. Der normalerweise als "Schmiermittel" dienende homogene Speichel enthält dann denaturierte Proteine, die die Gleitfähigkeit herabsetzen und dadurch ein raues oder trockenes, auch als adstringierend empfundenes Gefühl im Mund hinterlassen (Am. J. Clin. Nutr. 2005, 81, 330S-335S).

Zur Senkung des Gehalts an Bitterstoffen in Lebensmitteln, die entweder bereits im Ausgangsmaterial enthalten sind, wie z.B. in Zitrusfrüchten oder während des Herstellungsprozesses entstehen, wie beispielsweise bei der Käseherstellung, ist daher oft eine nachträgliche Behandlung nötig. Dies kann zum einen extraktiv geschehen, wie bei der Entcoffeinierung von Tee bzw. Kaffee, oder enzymatisch, z.B. Behandlung von Orangensaft mit einer Glycosidase zur Zerstörung des bitteren Naringins oder Spaltung von Gallusestern der Catechine zu den freien Catechinen mit Esterasen oder Einsatz von speziellen Peptidasen bei der Reifung von Käse. Diese Behandlung ist belastend für das Produkt, erzeugt Abfallstoffe und bedingt z.B. auch Lösungsmittelreste und andere Rückstände (Enzyme) in den Produkten.

Daher ist es wünschenswert, Stoffe zu finden, die unangenehme Geschmackseindrücke, insbesondere bittere, adstringierende und/oder metallische Geschmackseindrücke wirkungsvoll unterdrücken, oder zumindest vermindern können, ohne dabei die Qualität des Lebensmittels durch zusätzliche Prozessschritte zu beeinflussen.

Bei vielen pharmazeutischen Wirkstoffen ist die Unterdrückung des bitteren Geschmacks besonders wichtig. Dadurch kann die Bereitschaft der Patienten, insbesondere bei bitterempfindlichen Patienten wie Kindern, die pharmazeutische Zubereitung oral zu sich zu nehmen, deutlich erhöht werden. Viele pharmazeutische Wirkstoffe, beispielsweise Aspirin, Salicin, Paracetamol, Ambroxol, Antibiotika wie Oxafloxazin oder Chinin, sowie eine ganze Reihe weiterer pharmazeutisch aktiver Verbindungen, weisen einen ausgeprägten bitteren, adstringierenden und/oder metallischen Geschmack und/oder Nachgeschmack auf.

Des Weiteren weisen auch verschiedene nicht-nutritive, hochintensive Süßstoffe oft geschmackliche Probleme auf. So sind sie zwar durch ihre geringe Einsatzkonzentration gut geeignet, Süße in Nahrungsmittel zu bringen, zeigen jedoch oft geschmackliche Probleme durch im Vergleich zu Zucker unähnliche Zeit-Intensitätsprofile (z.B. Sucralose, Stevioside, Cyclamat), einen bitteren und/oder adstringierenden Nachgeschmack (z.B. Acesulfam K, Saccharin, Steviosid, Rebaudiosid A, Rebaudiosid C) und/oder ausgeprägte zusätzliche Aromaeindrücke (z.B. Glycerrhyzinsäureammoniumsalz). Insbesondere bei süßen, kalorienfreien oder nahezu kalorienfreien Lebensmitteln, beispielsweise Getränken, die mit Hilfe solcher Süßstoffe hergestellt wurden, senkt dieser unangenehme Neben- und/oder Nachgeschmack häufig die sensorische Akzeptanz und sollte daher maskiert werden.

Inzwischen sind zwar einige Ansätze zur, zumindest partiellen, Bitter-Reduzierung beschrieben worden (z.B. Chemosensory Perception 2008, 1(1): 58-77): zum einen die Entfernung des Bitterstoffes aus dem Lebensmittel, wie bei der Entbitterung von Zitrussäften, die Verwendung von Verkapselungssystemen oder das Überdecken von bitter schmeckenden Verbindungen mit Hilfe anderer Geschmacks- oder Aromastoffe, wie z.B. Süßstoffe (Recent Patents on Drug Delivery and Formulation, 2009, 3, 26-39). Die beschriebenen Ansätze zeigen aber alle in der Anwendung zum Teil starke Limitationen, wie nicht-Natürlichkeit, teure Rohstoffe, Nebeneffekte (z.B. gleichzeitige Süßunterdrückung, gleichzeitig salziger Geschmack etc.), und/oder Löslichkeitsprobleme, so dass weiterhin Bedarf an natürlichen, einfach zu verwendenden maskierenden, insbesondere bittermaskierenden, Stoffen besteht.

Es war die primäre Aufgabe der vorliegenden Erfindung, Stoffe (Substanzen oder Substanzgemische) zu finden, die eine teilweise, weitgehende oder vollständige Verminderung unangenehmer Geschmackseindrücke, insbesondere bitterer, adstringierender und/oder metallischer Geschmackseindrücke, von unangenehm schmeckenden Stoffe ermöglichen.

Diese Stoffe sollten vorzugsweise einen bittermaskierenden Effekt aufweisen, bevorzugt gegen eine Vielzahl von Bitterstoffen wie sie insbesondere in Nahrungs- und Genussmitteln sowie pharmazeutischen Mitteln vorkommen, vorzugsweise ohne dabei den sonstigen, erwünschten Geschmackseindruck dieser Mittel wesentlich zu beeinflussen.

Weiterhin sollten die gesuchten Stoffe bevorzugt breit anwendbar sein. Ferner sollten die gesuchten Stoffe vorzugsweise möglichst leicht zugänglich sein.

Die gestellte Aufgabe wird erfindungsgemäß gelöst durch Verwendung eines, zweier oder mehrerer verschiedener Vanillyllignane ausgewählt aus der Gruppe bestehend aus
(1) Matairesinol (3,4-Bis[(4-hydroxy-3-methoxyphenyl)methyl]oxolan-2-on);
(2) 7-Hydroxymatairesinol (4-[Hydroxy-(4-hydroxy-3-methoxyphenyl)methyl]-3-[(4-hydroxy-3-methoxyphenyl)methyl]oxolan-2-on); (nachfolgend teilweise auch als "Hydroxymatairesinol" bezeichnet);
(3) Lariciresinol (4-[[5-(4-Hydroxy-3-methoxyphenyl)-4-(hydroxymethyl)-oxolan-3-yl]methyl]- 2-methoxyphenol);
(4) Arctigenin (4-[(3,4-Dimethoxyphenyl)methyl]-3-[(4-hydroxy-3-methoxyphenyl) methyl]oxolan-2-on);
(5) Isolariciresinol (1,2,3,4-Tetrahydro-7-hydroxy-1-(4-hydroxy-3-methoxyphenyl)-6-methoxy-2,3-naphthalendimethanol);
(6) α-Conidendrin (7-Hydroxy-9-(4-hydroxy-3-methoxyphenyl)-6-methoxy-3a,4,9,9a-tetrahydro-1H-benzo[f][2]benzofuran-3-on);
(7) Nortrachelogenin (3-Hydroxy-3,4-bis[(4-hydroxy-3-methoxyphenyl)methyl]-oxolan-2-on);
(8) Pinoresinol (4-[6-(4-Hydroxy-3-methoxyphenyl)-1,3,3a,4,6,6a-hexahydrofuro[3,4-c] furan-3-yl]-2-methoxyphenol);
(9) 5-Hydroxylariciresinol (3,5-Bis[(4-hydroxy-3-methoxy-phenyl)methyl]-4-(hydroxylmethyl)tetrahydrofurn-2-ol);
(10) 2-Hydroxyarctigenin (4-[(3,4-Dimethoxyphenyl)-hydroxy-methyl]-3-[(4-hydroxy-3-methoxyphenyl)methyl]tetrahydrofuran-2-on);
(11) Trachelogenin (3-Hydroxy-3,4-bis[(4-hydroxy-3-methoxy-phenyl)methyl]tetrahydrofuran-2-on);
(12) Thujastandin (3,4-Dihydroxy-3,4-bis[(4-hydroxy-3-methoxy-phenyl)methyl]tetrahydrofuran-2-on);
(13) Busaliol (4-[[Hydroxy-[4-(4-hydroxy-3-phenyl)methyl]-tetrahydrofuran-3-yl]-methyl]-2,6-dimethoxyphenol);
(14) Shonanin (4-[[Hydroxy-(4-hydroxy-3-methoxyphenyl)methyl]tetrahydrofuran-3-yl]methyl]-2-methoxyphenol);
(15) Liovil (4-[Hydroxy-[4-[hydroxy-(4-hydroxy-3-methoxyphenyl)methyl]tetrahydrofuran-3-yl]methyl]-2-methoxyphenol);
(16) Isoliovil (Todolactol A) (4-[Hydroxy-(4-hydroxy-3-methoxyphenyl)methyl)-3-[4-hydroxy-3-methoxyphenyl)methyl]tetrahydrofuran-2-ol);
(17) Koreanol (4-[[4-[Hydroxy-(4-hydroxy-3-methoxyphenyl)methyl]-2-methoxy-tetrahydrofuran-3-yl]methyl]-2-methoxyphenol);
(18) Taxiresinol (4-[4-[(4-Hydroxy-3-methoxyphenyl)methyl]-3-(hydroxymethyl]tetrahydrofuran-2-yl]benzen-1,2-diol);
(19) Phillygenol (4-[6-(3,4-Dimethoxyphenyl)-1,3,3a,4,6,6a-hexahydrofuro[3,4-c]furan-3-yl]2-methoxyphenol);
(20) Guaiaretinsäure (4-[E-4-(4-Hydroxy-3-methoxyphenyl)-2,3-dimethyl-but-3-enyl]-2-methoxyphenol);
(21) Gnidifolin (3-[(2,4-Dihydroxy-3-methoxyphenyl)methyl]-4-[(4-hydroxy-3-methoxyphenyl)methyl]tetrahydrofuran-2-on);
(22) Fragransin A₂ (4-[5-(4-Hydroxy-3-methoxyphenyl)-3,4-dimethyl-tetrahydrofuran-2-yl]-2-methoxyphenol);
(23) Fragransin C_{3b} (4-[5-(4-Hydroxy-3-methoxyphenyl)-3,4-dimethyl-tetrahydrofuran-2-yl]-2,6-dimethoxyphenol);
(24) Astralignin (4-[5-(3,4-Dimethoxyphenyl)-3,4-dimethyl-tetrahydrofuran-2-yl]-2-methoxyphenol);
(25) Massoniresinol (2-(4-Hydroxy-3-methoxyphenyl)-4-[(4-hydroxy-3-methoxy-phenyl)methyl]-3-(hydroxymethyl)tetrahydrofuran-3,4-diol);
(26) Olivil (5-(4-Hydroxy-3-methoxyphenyl)-3-[(4-hydroxy-3-methoxyphenyl)methyl]-4-(hydroxymethyl)tetrahydrofuran-3-ol);
(27) Isoolivil (Cycloolivil) (4-(4-Hydroxy-3-methoxyphenyl)-2,3-bis(hydroxymethyl)-7-methoxy-tetralin-2,6-diol);
(28) Neo-Olivil (4-[5-(4-Hydroxy-3-methoxphenyl)-3,4-bis(hydroxymethyl)-tetrahydrofuran-2-yl]-2-methoxyphenol);
(29) Vitedoin (6-Hydroxy-4-(4-hydroxy-3-methoxyphenyl)-3-(hydroxymethyl)-5-methoxy-3,4-dihydronaphthalen-2-carbaldehyd); und
(30) Vitrofolal E (6-Hydroxy-4-(4-hydroxy-3-methoxyphenyl)-7-methoxy-naphthalen-2-carbaldehyd).
oder
eines, zweier oder mehrerer verschiedener Salze eines, zweier oder mehrerer verschiedener Vanillyllignane ausgewählt aus der Gruppe wie oben definiert
oder
eines Gemisches eines, zweier oder mehrerer verschiedener Vanillyllignane ausgewählt aus der Gruppe wie oben definiert mit einem, zwei oder mehreren verschiedenen Salzen eines, zweier oder mehrerer verschiedener Vanillyllignane ausgewählt aus der Gruppe wie oben definiert
zum Maskieren des unangenehmen Geschmackseindrucks, vorzugsweise des bitteren, adstringierenden und/oder metallischen Geschmackseindrucks, eines unangenehm schmeckenden Stoffes, vorzugsweise eines Bitterstoffes.

Überraschenderweise wurde gefunden, dass die erfindungsgemäß einzusetzenden Vanillyllignane, deren Gemische und/oder deren Salze in der Lage sind unangenehme, insbesondere bittere, adstringierende und/oder metallische, Geschmackseindrücke, einer Vielzahl von unangenehm schmeckenden Stoffen und oral konsumierbaren Zubereitungen, die einen oder mehrere unangenehm, insbesondere bitter, adstringierend und/oder metallisch, schmeckende Stoffe enthalten, maskieren, d.h. verringern oder sogar vollständig unterdrücken, können. Entsprechendes gilt auch für die nachfolgend beschriebenen erfindungsgemäßen Zubereitungen.

Unter Maskieren oder Maskierung wird im Rahmen des vorliegenden Textes eine Reduzierung, d.h. eine Verminderung, bzw. eine vollständige Unterdrückung verstanden.

Das Maskieren des unangenehmen Geschmackseindrucks bedeutet damit im Ergebnis regelmäßig eine Geschmacksverbesserung, insbesondere in Bezug auf bittere, adstringierende und/oder metallische Geschmackseindrücke.

Die Strukturen der erfindungsgemäß einzusetzenden Verbindungen (1) bis (30) sind zur Verdeutlichung nachfolgend angegeben:

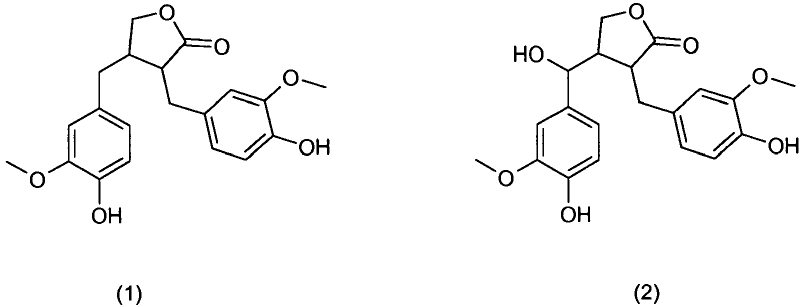

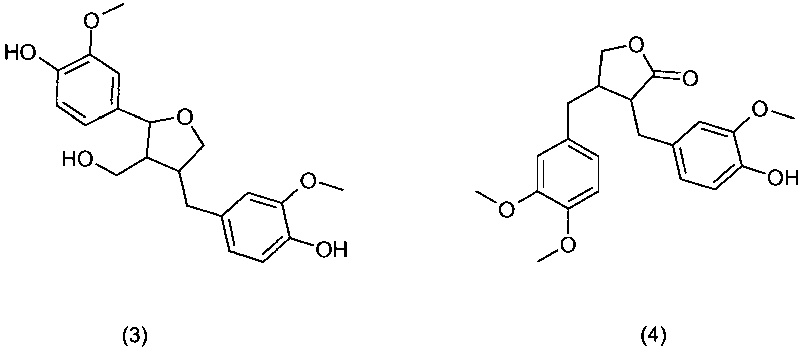

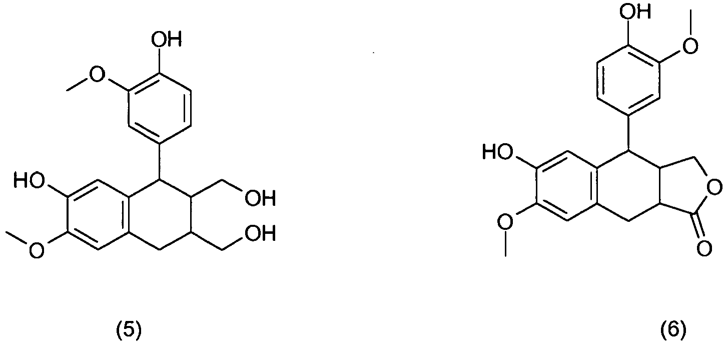

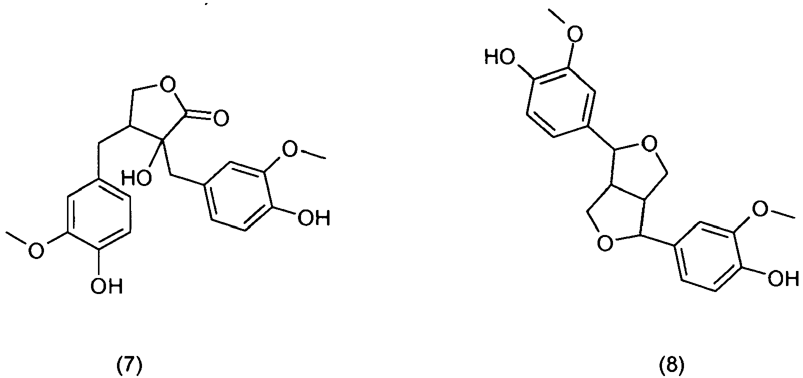

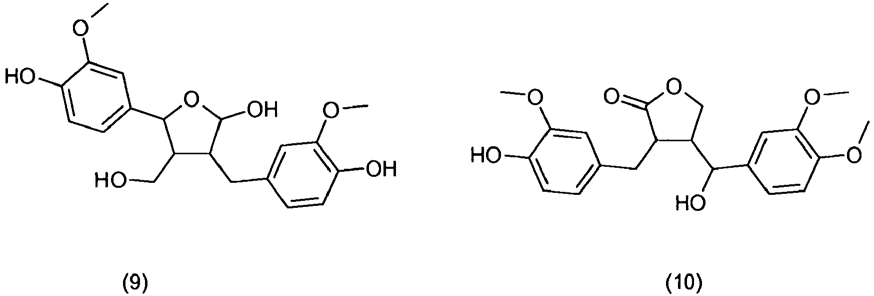

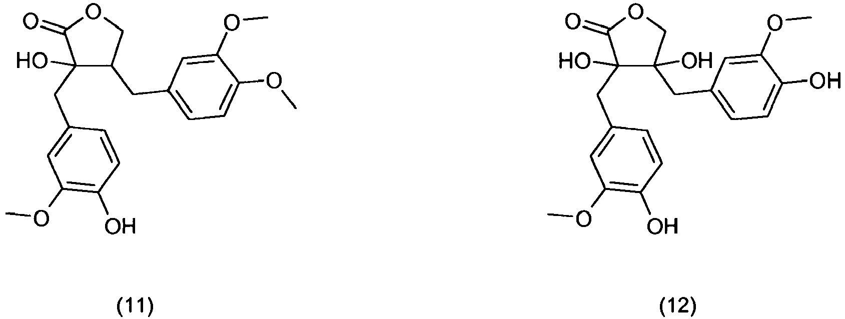

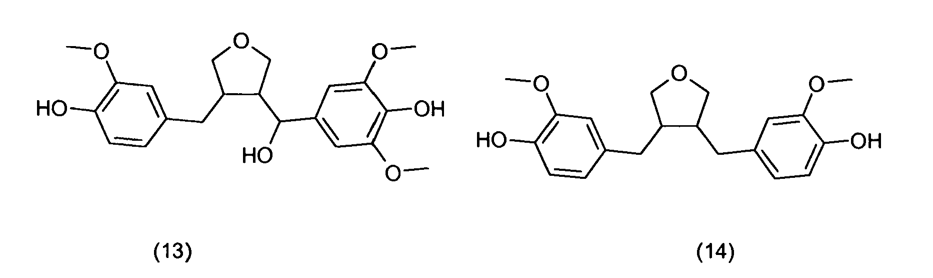

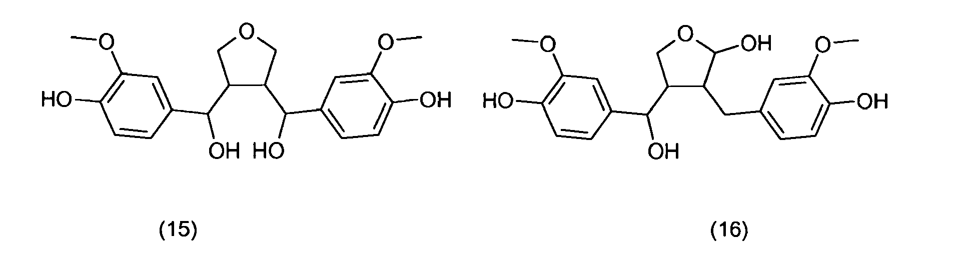

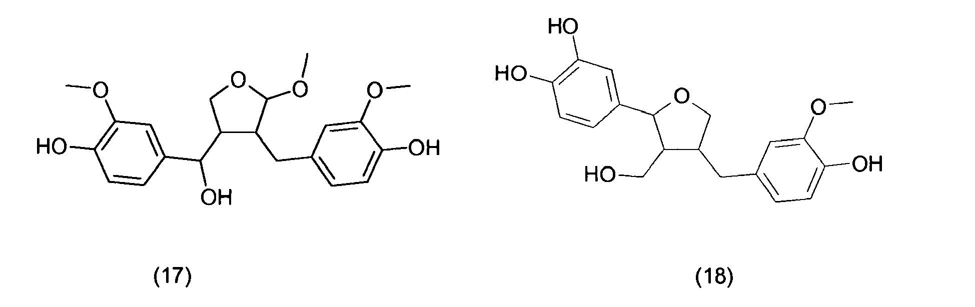

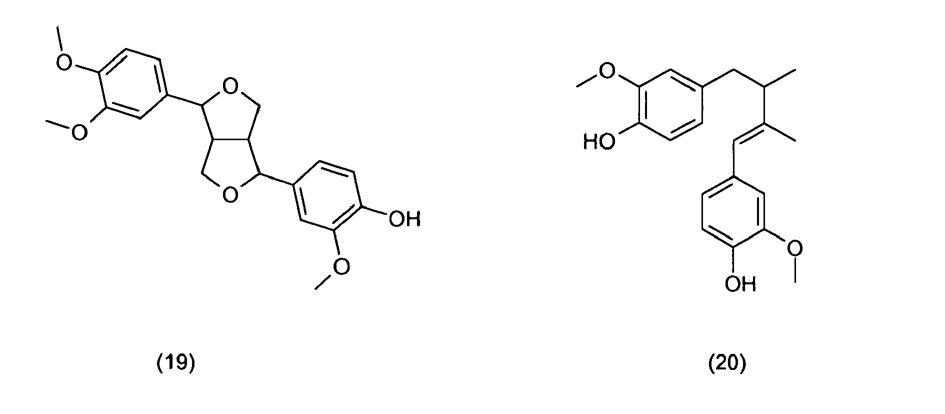

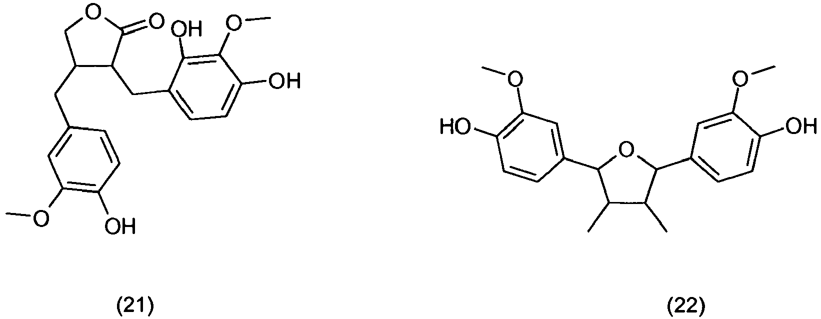

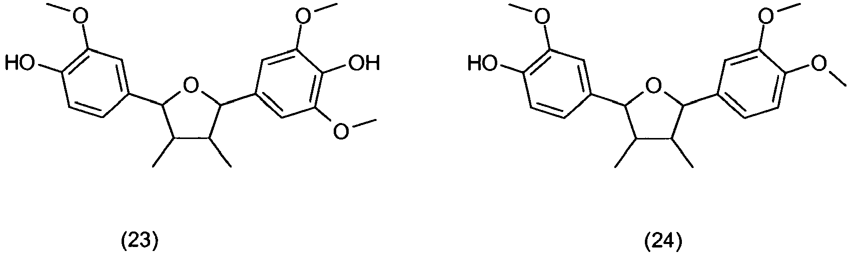

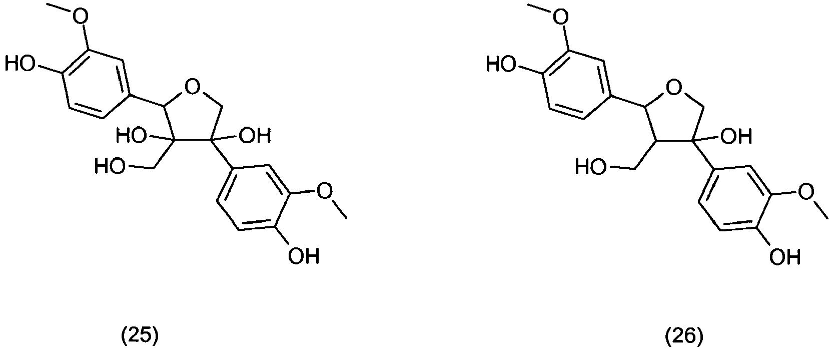

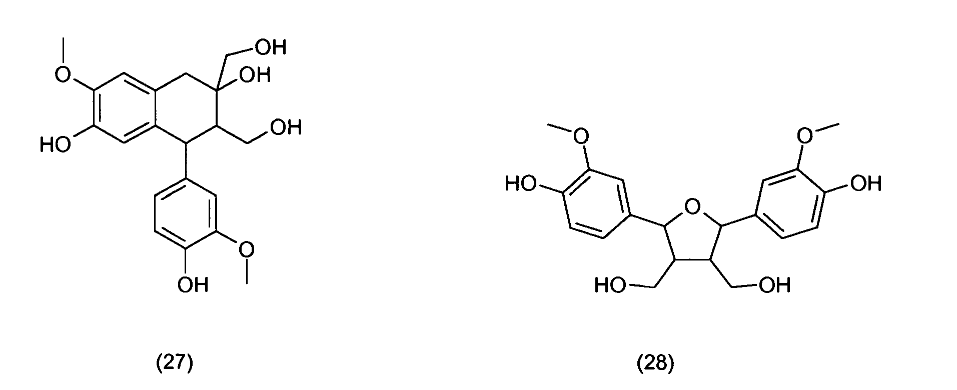

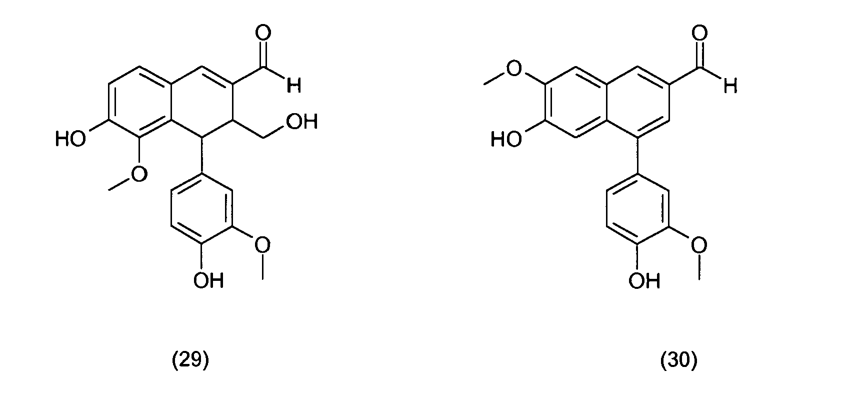

Sofern in Rahmen dieses Textes ein Widerspruch zwischen dem chemischen Namen und der entsprechenden Strukturformel auftreten sollten, gilt die entsprechende Strukturformel.

Besonders vorteilhaft und daher im Rahmen der vorliegenden Erfindung bevorzugt ist eine wie oben beschriebene Verwendung, wobei ein, zwei, mehrere oder sämtliche der eingesetzten Vanillyllignane jeweils ausgewählt sind aus der Gruppe bestehend aus
(1) Matairesinol (3,4-Bis[(4-hydroxy-3-methoxyphenyl)methyl]oxolan-2-on);
(2) 7-Hydroxymatairesinol (4-[Hydroxy-(4-hydroxy-3-methoxyphenyl)methyl]-3-[(4-hydroxy-3-methoxyphenyl)methyl]oxolan-2-on);
(3) Lariciresinol (4-[[5-(4-Hydroxy-3-methoxyphenyl)-4-(hydroxymethyl)-oxolan-3-yl]methyl]- 2-methoxyphenol);
(4) Arctigenin (4-[(3,4-Dimethoxyphenyl)methyl]-3-[(4-hydroxy-3-methoxyphenyl)methyl]oxolan-2-on);
(5) Isolariciresinol (1,2,3,4-Tetrahydro-7-hydroxy-1-(4-hydroxy-3-methoxyphenyl)-6-methoxy-2,3-naphthalendimethanol);
(6) α-Conidendrin (7-Hydroxy-9-(4-hydroxy-3-methoxyphenyl)-6-methoxy-3a,4,9,9a-tetrahydro-1H-benzo[f][2]benzofuran-3-on);
(7) Nortrachelogenin (3-Hydroxy-3,4-bis[(4-hydroxy-3-methoxyphenyl)methyl]-oxolan-2-on);
(8) Pinoresinol (4-[6-(4-Hydroxy-3-methoxyphenyl)-1,3,3a,4,6,6a-hexahydrofuro[3,4-c] furan-3-yl]-2-methoxyphenol).
und deren Salzen.

Insbesondere bevorzugt ist die Verwendung der natürlich vorkommenden Stereoisomere der erfindungsgemäß einzusetzenden Vanillyllignane oder deren Gemische, wobei die Stereoisomerenreinheit größer 50 %, bevorzugt > 80 %, besonders bevorzugt > 90 % beträgt, bezogen auf alle Stereoisomere des bzw. der jeweiligen Vanillyllignane.

Besonders bevorzugt ist eine wie oben beschriebene Verwendung, wobei eine, zwei, mehrere oder sämtliche der eingesetzten Vanillyllignane jeweils ausgewählt sind aus der Gruppe bestehend aus
(1-(-)) (-)-Matairesinol ((3R,4R)-3,4-Bis[(4-hydroxy-3-methoxyphenyl)methyl]oxolan-2-on);
(2-(-)) (-)-7-Hydroxymatairesinol ((3R,4R)-4-[(S)-Hydroxy-(4-hydroxy-3-methoxyphenyl)methyl]-3-[(4-hydroxy-3-methoxyphenyl)methyl]oxolan-2-on);
(3-(+) (+)-Lariciresinol (4-[[(3R,4R,5S)-5-(4-Hydroxy-3-methoxyphenyl)-4-(hydroxymethyl)-oxolan-3-yl]methyl]- 2-methoxyphenol);
(4-(-)) (-)-Arctigenin ((3R,4R)-4-[(3,4-Dimethoxyphenyl)methyl]-3-[(4-hydroxy-3-methoxyphenyl)methyl]oxolan-2-on);
(5-(+)) (+)-Isolariciresinol (1,2,3,4-Tetrahydro-7-hydroxy-1-(4-hydroxy-3-methoxy-phenyl)-6-methoxy-2,3-naphthalendimethanol);
(6-(-)) (-)-α-Conidendrin ((3aR,9R,9aS)-7-Hydroxy-9-(4-hydroxy-3-methoxyphenyl)-6-methoxy-3a,4,9,9a-tetrahydro-1H-benzo[f][2]benzofuran-3-on);
(7-(-)) (-)-Nortrachelogenin ((3S,4S)-3-Hydroxy-3,4-bis[(4-hydroxy-3-methoxyphenyl)methyl]-oxolan-2-on);
(8-(+)) (+)-Pinoresinol (4-[(3S,3aR,6S,6aR)-6-(4-Hydroxy-3-methoxyphenyl)-1,3,3a,4,6,6a-hexahydrofuro[3,4-c]furan-3-yl]-2-methoxyphenol),
und deren Salzen.

Die Strukturen der oben genannten Verbindungen (1-(-)) bis (8-(+)) sind zur Verdeutlichung nachfolgend angegeben:

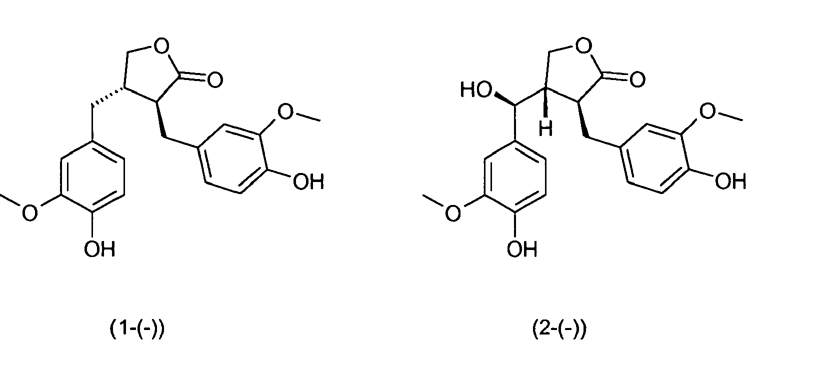

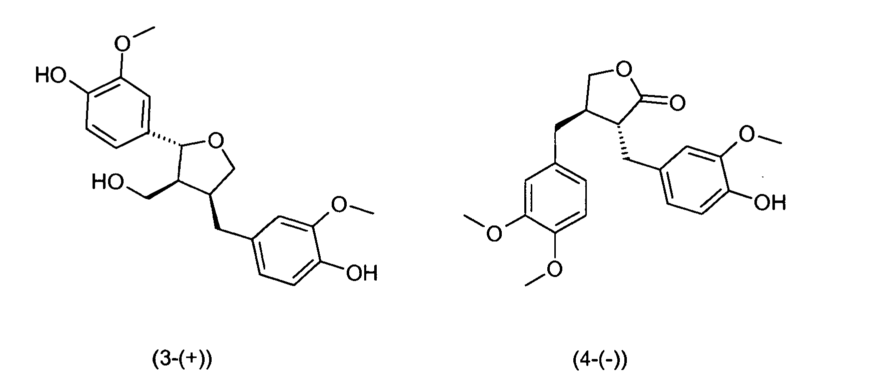

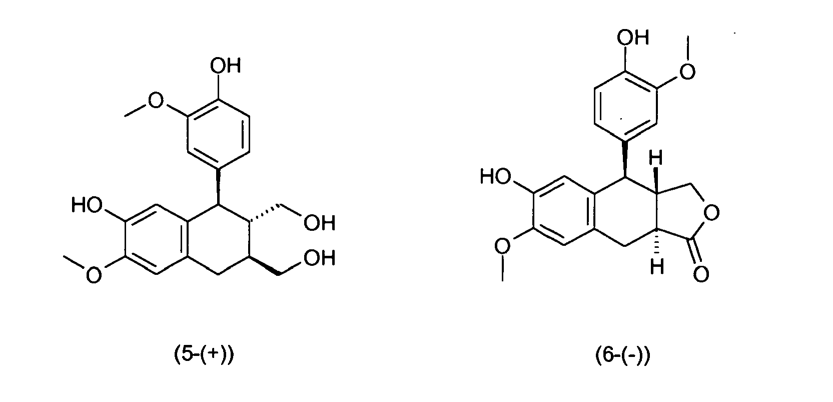

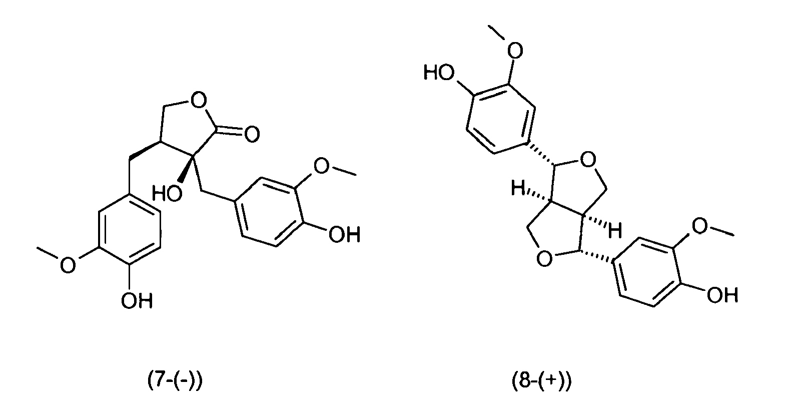

Erfindungsgemäß am meisten bevorzugt sind Matairesinol (Verbindung 1), 7-Hydroxymatairesinol (Verbindung 2), Lariciresinol (Verbindung 3) und α-Conidendrin (Verbindung 6) wobei diese jeweils als racemische Gemische vorliegen oder bevorzugt jeweils mit einem Anteil von größer als 50 %, bevorzugt von größer als 80 %, besonders bevorzugt von größer als 90 % von 1-(-), 2-(-), 3-(+) bzw. 6-(-) enthalten, jeweils bezogen auf alle Stereoisomere der Verbindungen (1), (2), (3) bzw. (6).

Sofern im Rahmen des vorliegenden Textes bevorzugte bzw. besonders bevorzugte Verbindungen genannt sind, sind selbstverständlich auch die physiologisch akzeptablen und vorzugsweise verzehrbaren Salze solcher Verbindungen erfindungsgemäß (besonders) bevorzugt zu verwenden. Die erfindungsgemäß einzusetzenden Vanillyllignane können bevorzugt als ein-, oder im Fall mehrerer Hydroxygruppen, mehrwertige Anionen vorliegen, wobei als Gegenkation vorzugsweise die einfach positiv geladenen Kationen der ersten Haupt- und Nebengruppe, das Ammoniumion, ein Trialkylammoniumion, die zweiwertig geladenen Kationen der zweiten Nebengruppe, sowie die dreiwertigen Kationen der 3. Haupt- oder Nebengruppe dienen, bevorzugt Na⁺, K⁺, NH₄⁺, Ca²⁺, Mg²⁺, Al³⁺ und Zn²⁺.

Erfindungsgemäß bevorzugt ist daher auch die Verwendung eines, zweier oder mehrerer verschiedener Salze eines, zweier oder mehrerer verschiedener Vanillyllignane wie oben definiert
oder
eines Gemischs eines, zweier oder mehrerer verschiedener Vanillyllignane wie oben definiert mit einem, zwei oder mehreren verschiedenen Salzen eines, zweier oder mehrerer verschiedener Vanillyllignane wie oben definiert,
wobei das bzw. die Gegenkationen des bzw. eines, mehrerer oder sämtlicher der Salze vorzugsweise ausgewählt ist bzw. sind aus der Gruppe bestehend aus Na⁺, K⁺, NH₄⁺, Ca²⁺, Mg²⁺, Al³⁺ und Zn²⁺.

Lignane sind definiert als eine Klasse phenolischer Verbindungen, die ein 2,3-Dibenzylbutan-Skelett aufweisen. Sie werden durch die Verknüpfung monomerer Einheiten, z.B. Zimtsäure, Kaffeesäure, Ferulasäure, Cumarsäure, oder Gallussäure gebildet. In der Natur sind diese Verbindungen in einer Vielzahl von Pflanzen zu finden. Sie können in verschiedenen Pflanzenteilen, z.B. Wurzeln, Blättern, Ästen, Samen oder Früchten nachgewiesen werden, sind dort jedoch häufig nur in sehr geringen Konzentrationen enthalten.

Lignane liegen in ihren natürlichen Quellen oftmals auch nicht in freier Form vor, sondern in glycosidischer Form in Verbindung mit in den Pflanzen vorkommenden Faserbestandteilen. Für die Quantifizierung der in Lebensmitteln vorkommenden Lignane wird das Material daher vor der Analyse enzymatisch oder chemisch hydrolysiert (z.B. Br. J. Nutr., 1998, 79, 37-45; 2005, 93, 393-402; J. Agric. Food Chem., 2007, 55, 1337-1346; 2008, 56, 7311-7315). Die größten Gehalte an glycosidisch gebundenen Lignanen lassen sich in Ölsaaten und Nüssen, sowie Getreideprodukten, vor allem Vollkornprodukten, nachweisen, in geringeren Mengen aber auch in Obst und Gemüse (Br. J. Nutr., 2005, 93, 393-402; J. Agric. Food Chem., 2007, 55, 1337-1346; 2008, 56, 7311-7315).

Neben Nahrungspflanzen enthalten auch verschiedene Nadelbäume große Mengen an Lignanen (J. Agric. Food Chem., 2003, 51, 7600-7606). Auch die oben definierten erfindungsgemäß zu verwendenden Verbindungen aus der Gruppe der Vanillyllignane kommen in diversen natürlichen Quellen vor, darunter auch diverse Nahrungspflanzen. Zu den natürlichen Quellen gehören unter anderem Linum sp., Sesamum indicum, Secale cereale, Triticum ssp., Brassica sp., Capsicum sp., Abies sp., Picea sp., Pinus sp. oder Larix sp. (z.B. J. Agric. Food Chem., 2003, 51, 7600-7606; 2007, 55, 1337-1346; Br. J. Nutr., 2005, 93, 393-402).

Ein Überblick über die verschiedenen, in der Natur vorkommenden Vanillyllignane ist unter anderem zu finden in Nat. Prod. Rep., 1985, 2, 191-211; 1987, 4, 499-525; 1990, 7, 349-364; 1995, 12, 183-205; 2005, 22, 696-716).

Die Synthese der erfindungsgemäß zu verwendenden Verbindungen wird beispielsweise Org. Lett., 2003, 5 (4), 491-493, J. Chem. Soc., Perkin Trans. 2002, 1, 1906-1910, Org. Lett., 2004, 6 (9), 1345-1348 und Steroids, 2001, 66 (10), 777-784 beschrieben.

In ihren natürlichen Quellen liegen die erfindungsgemäß verwendeten Vanillyllignane in der Regel in gebundener Form (z.B. glycosidisch gebunden, an unlösliche Matrixbestandteile gebunden) vor. Zudem sind die Lignane in Lebensmitteln (mit Ausnahme von Lein und Sesam) regelmäßig nur in geringen Konzentrationen enthalten, meist zusammen mit anderen Lignanen in einer Gesamtmenge von höchstens 30 mg pro 1 kg Frischmasse (J. Agric Food Chem. 2010, 58, 4959-4969, Br. J. Nutr., 2005, 93, 393-402). In bestimmten Ölsaaten wie Sesamsamen oder Leinsamen kommen die erfindungsgemäß einzusetzenden Vanillyllignane in vergleichsweise hohen Konzentrationen von 300 bis zu 3000 mg/kg vor (J. Agric Food Chem. 2010, 58, 4959-4969), dann allerdings immer vergesellschaftet mit dem dominierenden Secoisolariciresinol (Br. J. Nutr., 2005, 93, 393-402), welches in den Konzentrationen, in denen es dort jeweils enthalten ist, schon als bitter empfunden wird.

Die in natürlichen Quellen vorliegende Konzentration an frei vorliegenden, d.h. nicht glycosidisch gebundenen, erfindungsgemäß zu verwendenden Vanillyllignanen - sofern diese darin überhaupt in freier Form vorhanden sind - nicht ausreichend, um wahrnehmbare maskierende Effekte auf ebenfalls im gegebenenfalls gleichen Lebensmittel vorkommende Bitterstoffe verursachen zu können.

Als Beispiele für Lebensmittel, die neben Bitterstoffen auch Lignane, jedoch nicht in wirksamen Konzentrationen enthalten, seien Zitrusfrüchte, insbesondere Grapefruit, sowie Tee oder Kakao genannt. Der gemessene Lignangehalt von Grapefruit (Lariciresinol, Pinoresinol, Matairesinol und Secoisolariciresinol) liegt bei ca. 1500 µg/kg (1,5 ppm); der von Orangen bei ca. 800 µg/kg (0,8 ppm) (Br. J. Nutr., 2005, 93, 393-402). Der in der Literatur beschriebene Gehalt des Bitterstoffes Naringin liegt in Grapefruit liegt bei 200 bis 300 mg/100 g Frischgewicht (J. Agric. Food Chem., 2005, 53, 3980-3985). In dieser Konzentration trägt Naringin deutlich zur Bitterkeit von Grapefruit bei. In Kakao wurde ein Lignangehalt von 600 µg/kg (0,6 ppm) beschrieben (Br. J. Nutr., 2005, 93, 393-402). Die Konzentration des Bitterstoffs Theobromin in Kakao liegt deutlich höher bei 11450 mg/kg, Coffein bei ca. 1010 mg/kg. In diesen Konzentrationen tragen beide ebenfalls zum bitteren Geschmack von gerösteten Kakaobohnen bei (J. Agric. Food Chem., 2006, 54, 5530-5539). In Schwarztee, bzw. Grüntee sind Lignane (Secoisolariciresinol und Matairesinol) in einer Konzentration zwischen 15 und 20 mg/kg enthalten. Der überwiegende Anteil der in Tee vorkommenden Lignane entfällt dabei auf Secoisolariciresinol (Br. J. Nutr., 1998, 79, 37-45), das, wie nachfolgend gezeigt, jedoch nicht bittermaskierend, sondern bitterverstärkend wirkt (siehe Beispiel 1). Der Gehalt an den verschiedenen Catechinen, sowie Coffein, die alle zum bitteren Geschmack des Tees beitragen, liegt zwischen 200 und 2000 mg/kg (Gesamtmenge an Catechinen), bzw. ca. 75 bis 900 mg/kg (Coffein) (J. Agric. Food Chem. 2003, 51, 4427-4435).

Die beschriebenen Beispiele machen deutlich, dass der natürlich vorkommende Gehalt an Lignanen in diesen Fällen nicht ausreichend ist, um die Bitterkeit der genannten Lebensmittel positiv zu beeinflussen oder zu maskieren. Zudem können die Lignane, die in der Literatur als bitter beschrieben werden (Chem. Berichte, 1957, 90, 2857-2869; Acta Pharm., 2010, 60, 119-128) und oft mit den erfindungsgemäßen verwendeten Lignanen vergesellschaftet sind, in höheren Konzentrationen zu einem unangenehmen, bitteren Nebengeschmack in einem Lebensmittel führen. Als typisches Beispiel ist hier Leinsamen zu nennen, der im Vergleich zu den erfindungsgemäß verwendeten Lignanen Matairesinol hohe Konzentrationen an nicht-erfindungsgemäß einzusetzendem Secoisolariciresinol enthält. Darüberhinaus ist Secoisolariciresinol auch in der Lage, bittere Geschmackseindrücke zu verstärken (siehe nachfolgendes Beispiel 1).

Ferner wurde bereits eine Vielzahl gesundheitsförderlicher Effekte für Lignane beschrieben. Extrakte aus Leinsamen, enthaltend große Mengen an Lignanen, insbesondere Secoisolariciresinoldiglucosid (SDG), werden in Nahrungsergänzungsmitteln, Nutraceuticals, Nutracosmetics/ Cosmeceuticals, sowie funktionellen Lebensmitteln und Getränken eingesetzt. Ebenso werden aufgereinigte Extrakte, beispielsweise aus Tannenholz (*Picea abies*), die große Mengen Hydroxymatairesinol enthalten, zu diesem Zweck verwendet. Diese Extrakte sind keine Zubereitungen im Sinne der vorliegenden Erfindung, insbesondere keine der Ernährung, der Mundpflege oder dem Genuss dienenden Zubereitungen im Sinne der vorliegenden Erfindung.

US 6,451,849 B1, US 6,689,809 B2 und US 7,005,447 B2 beschreiben u.a. die Verwendung von Lignanen, insbesondere von Hydroxymatairesinol, zur Verwendung in funktionellen Lebensmitteln, Nahrungsergänzungsmitteln oder pharmazeutischen Zubereitungen für die Prävention einer Reihe von Krebserkrankungen, hormonabhängigen, sowie und kardiovaskulären Erkrankungen. Die dort beschrieben Konzentrationen liegen im Bereich 1 bis 20 mg Hydroxymatairesinol pro 100 g Lebensmittel. EP 1 377 182 B1 beschreibt die Verwendung bestimmter Lignane, vor allem aus Leinsaat, insbesondere Secoisolariciresinol und Matairesinol, zur Herstellung von Lebensmitteln mit entzündungshemmender oder anti-ageing Wirkung.

Den oben genannten Veröffentlichungen ist kein Hinweis darauf zu entnehmen, dass die erfindungsgemäß zu verwendenden Vanillyllignane, deren Gemische und/oder deren Salze maskierende Wirkungen gegenüber einem unangenehmen Geschmackseindruck, insbesondere gegenüber bitteren, adstringierenden und/oder metallischen Geschmackseindrücken. Es wird in der Literatur vielmehr beschrieben, dass insbesondere Hydroxymatairesinol als Reinstoff einen stark bitteren Geschmack aufweist (Chem. Berichte, 1957, 90, 2857-2869). Ebenfalls die Vanillyllignane Arctigenin, Trachelogenin und Nortracheloside werden als bitter beschrieben (Acta Pharm., 2010, 60, 119-128).

Die Gewinnung bzw. Herstellung einiger besonders bevorzugter erfindungsgemäß einzusetzender Vanillyllignane ist nachstehend etwas ausführlicher beschrieben.

Verbindung (1-(-)), Matairesinol ((3R,4R)-3,4-Bis[(4-hydroxy-3-methoxyphenyl)methyl]oxolan-2-on), ist in einer Vielzahl verschiedener Samen, Getreide, Gemüse und Früchten enthalten, wurde jedoch auch in Tee, Kaffee und Wein nachgewiesen (Br. J. Nutr. 1998, 79, 37-45; 2005, 93, 393-402). Leinsamen (*Linum usitatissimum*), zum Beispiel ist eine der besten Nahrungsquellen für Lignane (J. Agric. Food Chem. 2001, 49, 3178-3186). Bei den Getreiden wiederum weist Roggen hohe Gehalte der Pflanzenlignane Matairesinol und Secoisolariciresinol auf. Aber nicht nur ballaststoffhaltige Lebensmittel tragen zum zur täglichen Aufnahme von Lignanen aus der Nahrung bei, sondern auch Getränke wie Tee und Kaffee (Br. J. Nutr. 2005, 93, 393-402). Die Extraktion von glycosidisch gebundenem Matairesinol aus verschiedenen Lebensmitteln erfolgte dort mittels Methanol-Wasser (70:30 v/v) mit 0,3 M NaOH bei 60°C für 1 h. Anschließend wurden die erhaltenen Extrakte enzymatisch hydrolisiert und mit Diethylether extrahiert.

Die Herstellung der Verbindung der Formel (1-(-)) kann z.B. auch ausgehend von Verbindung (2-(-)) (-)-7-Hydroxymatairesinol erfolgen, beispielsweise analog zu dem in Org. Lett., 2003, 5 (4), 491-493 beschriebenen Verfahren.

Verbindung (2-(-)), (-)-7-Hydroxymatairesinol ((3R,4R)-4-[(S)-Hydroxy-(4-hydroxy-3-methoxyphenyl)methyl]-3-[(4-hydroxy-3-methoxyphenyl)methyl]oxolan-2-on), ist, wie bereits für Verbindung (1-(-)) beschrieben, in einer Vielzahl verschiedener Lebensmittel enthalten. Besonders hohe Gehalte wurden in Sesamsamen (*Sesamum indicum*) beschrieben (Br. J. Nutr., 2005, 93, 393-402). Aber auch Getreide, wie Weizen (*Triticum sp.*) oder Roggen (*Secale cereale*) enthalten größere Mengen Hydroxymatairesinol (J. Agric. Food Chem., 2007, 55, 1337-1346). Eine der besten Quellen für Verbindung (2) stellt Tannenholz (*Picea abies*) dar (Phytochemistry 2005, 2, 331-340; Holzforschung 2003, 57, 27-36). Die Extraktion aus Tannenholz erfolgt mittels Aceton in einem Soxhlet Apparat. Der gewonnene Extrakt wurde anschließend über Kieselgel aufgereinigt, um Hydroxymatairesinol zu erhalten (J. Agric. Food Chem. 2003, 51 (26), 7600-7606).

Verbindung (3-(+)), Lariciresinol (4-[[(3R,4R,5S)-5-(4-Hydroxy-3-methoxyphenyl)-4-(hydroxymethyl)oxolan-3-yl]methyl]-2-methoxyphenol), ist ein weiteres wichtiges Pflanzenlignan, das in größeren Mengen in verschiedenen Ölsaaten, wie z.B. Leinsamen oder Sesam nachgewiesen wurde, aber auch in Getreiden und Gemüsen (z.B. Kohl, Grünkohl, Rosenkohl, etc.) (Br. J. Nutr. 2005, 93, 393-402).

Verbindung (4-(-)), Arctigenin ((3R,4R)-4-[(3,4-Dimethoxyphenyl)methyl]-3-[(4-hydroxy-3-methoxyphenyl)methyl]oxolan-2-on), wurde u.a. in den Samen von *Arcticum lappa* gefunden (Phytochemistry, 1994, 37 (4), 1161-1164).

Verbindung (6-(-)), α-Conidendrin ((3aR,9R,9aS)-7-Hydroxy-9-(4-hydroxy-3-methoxyphenyl)-6-methoxy-3a,4,9,9a-tetrahydro-1H-benzo[f][2]benzofuran-3-on), wurde in verschiedene Hölzern, z.B. Picea sp., Taxus sp. oder Tsuga sp. beschrieben (Chem. Berichte, 1957, 90, 2857-2867; J. Org. Chem., 1945, 10, 216; 1945, 10, 219; Biol. Pharm. Bull., 2006, 29 (11), 2310-2312).

Entsprechend den vorstehenden Ausführungen kann ein bzw. können mehrere oder sämtliche der erfindungsgemäß zu verwendenden Vanillyllignane und/oder deren Salze Bestandteil eines aus Pflanzen gewonnenen Materials sein und insbesondere in Form von (gegebenenfalls nach Hydrolyse erhaltenen) pflanzlichen Extrakten verwendet werden, vorzugsweise erhalten aus einer der vorstehend genannten Pflanzen.

Die Erfindung betrifft daher auch die Verwendung eines aus pflanzlichem Material, vorzugsweise mittels Extraktion und gegebenenfalls anschließender Hydrolyse, erhältlichen oder erhaltenen Produktes umfassend
ein, zwei oder mehrere verschiedene Vanillyllignane wie oben definiert,
ein, zwei oder mehrere verschiedene Salze eines, zweier oder mehrerer verschiedener Vanillyllignane wie oben definiert
oder
ein Gemisch eines, zweier oder mehrerer verschiedener Vanillyllignane wie oben definiert mit einem, zwei oder mehreren verschiedenen Salzen eines, zweier oder mehrerer verschiedener Vanillyllignane wie oben definiert,
zum Maskieren des unangenehmen Geschmackseindrucks, vorzugsweise des bitteren, adstringierenden und/oder metallischen Geschmackseindrucks, eines unangenehm schmeckenden Stoffes, vorzugsweise eines Bitterstoffes.

Die Herstellung solcher aus pflanzlichem Material erhältlichen oder erhaltenen Produkte erfolgt vorzugsweise durch Extraktion der entsprechenden Pflanzen oder Pflanzenteilen und kann mehrere verschiedene Vanillyllignane enthalten, z.B. wenn die entsprechende Pflanze mehrere Vanillyllignane enthält oder ein Gemisch verschiedener Pflanzen extrahiert wurde. Je nach Pflanze enthält der erhaltene Extrakt Vanillyllignane (nicht glycosidisch gebundene Vanillyllignane, siehe Verbindungen (1) bis (30)) oder glycosidisch gebundene Vanillyllignane. Sofern ein Extrakt glycosidisch gebundene Vanillyllignane enthält, können die entsprechenden nicht glycosidisch gebundenen Vanillyllignane durch Hydrolyse der glycosidisch gebundene Vanillyllignane erhalten werden.

Die erfindungsgemäß einzusetzenden Verbindungen sind verhältnismäßig einfach zu isolieren und besitzen in den erfindungsgemäß vorzugsweise einzusetzenden Konzentrationen keinen nennenswerten Eigengeschmack.

Es wurde auch gefunden, dass die erfindungsgemäß einzusetzenden Vanillyllignane den gegebenenfalls in höheren Einsatzkonzentrationen auftretenden bitteren Eigengeschmack eines anderen erfindungsgemäß zu verwendenden Vanillyllignans maskieren können.

Unangenehm schmeckende Stoffe im Rahmen dieses Textes sind:
(a) Stoffe, die bitter, adstringierend, pappig, kalkig, staubig, trocken, mehlig, ranzig und/oder metallisch schmecken sowie
(b) Stoffe, die einen bitteren, adstringierenden, pappigen, kalkigen, staubigen, trockenen, mehligen, ranzigen oder metallischen Nachgeschmack aufweisen.

Die vorgenannten unangenehm schmeckenden Stoffe können weitere, nicht unangenehme Geschmacks- und/oder Geruchsqualitäten besitzen.

Im Rahmen dieses Textes sind als nicht unangenehme Geschmacksqualitäten bevorzugt die Eindrücke würzig, umami, süß, salzig, sauer, scharf, kühlend, wärmend, brennend oder kribbelnd zu nennen.

Stoffe, die unangenehme Geschmackseindrücke, insbesondere die Geschmackseindrücke bitter, adstringierend und/oder metallisch, vermitteln (sowie gegebenenfalls zusätzlich pappig, kalkig, staubig, trocken, mehlig und/oder ranzig), sind beispielsweise: Xanthinalkaloide Xanthine (Coffein, Theobromin, Theophyllin), Alkaloide (Chinin, Brucin, Strychnin, Nicotin), phenolische Glycoside (z.B. Salicin, Arbutin), Flavanoidglycoside (z.B. Neohesperedin, Eriocitrin, Neoeriocitrin, Narirutin, Hesperidin, Naringin), Chalcone oder Chalconglycoside, Dihydrochalconglycoside (Phloridzin, Trilobatin), hydrolisierbare Tannine (Gallus- oder Ellagsäureester von Kohlenhydraten, z.B. Pentagalloylglucose), nichthydrolisierbare Tannine (ggfs. galloylierte Catechine oder Epicatechine und deren Oligomeren, z.B. Proanthyocyanidine oder Procyanidine, Thearubigenin), Flavone und deren Glycoside (z.B. Quercetin, Quercitrin, Rutin, Taxifolin, Myricetin, Myrictrin), andere Polyphenole (γ-Oryzanol, Kaffeesäure oder deren Ester), terpenoide Bitterstoffe (z.B. Limonoide wie Limonin oder Nomilin aus Zitrusfrüchten, Lupolone und Humolone aus Hopfen, Iridoide, Secoiridoide), Absinthin aus Wermut, Amarogentin aus Enzian, metallische Salze (Kaliumchlorid, Natriumsulfat, Magnesiumsalze, Eisensalze, Aluminiumsalze, Zinksalze), pharmazeutische Wirkstoffe (z.B. Fluorchinolon-Antibiotika, Paracetamol, Aspirin, β -Lactam-Antibiotika, Ambroxol, Propylthiouracil [PROP], Guaifenesin), Vitamine (beispielsweise Vitamin H, Vitamine aus der B-Reihe wie Vitamin B1, B2, B6, B12, Niacin, Panthotensäure), Denatoniumbenzoat oder andere Denatoniumsalze, Sucraloseoctaacetat, Harnstoff, ungesättigte Fettsäuren, insbesondere ungesättigte Fettsäuren in Emulsionen, Aminosäuren (z.B. Leucin, Isoleucin, Valin, Tryptophan, Prolin, Histidin, Tyrosin, Lysin oder Phenylalanin), Peptide (insbesondere Peptide mit einer Aminosäure aus der Gruppe Leucin, Isoleucin, Valin, Tryptophan, Prolin oder Phenylalanin am N- oder C-Terminus). Die vorgenannten Stoffe können entweder einzeln oder als Gemisch vorkommen, bevorzugt auch als natürliche Extrakte aus frischen, getrockneten, gerösteten, und/oder fermentierten Pflanzen oder Pflanzenteilen, so z.B. als Extrakte aus Blättern, Früchten, Ästen, Wurzeln, Fruchtschalen, Kernen, Samen z.B. aus Camellia sinensis, Camellia japonica, Coffea ssp., Cocoa theobroma, Vitis vinifera, Citrus ssp. und Hybriden, Poncirus ssp. und Hybriden, Perilla, Humulus lupulus, oder verwandten Arten stammen.

Erfindungsgemäß zu maskierende Bitterstoffe sind dabei insbesondere Xanthine (insbesondere Coffein, Theobromin, Theophyllin), phenolische Glycoside (insbesondere Salicin, Arbutin), Flavanoidglycoside (insbesondere Neohesperedin, Eriocitrin, Neoeriocitrin, Narirutin, Hesperidin, Naringin), Chalcone oder Chalconglycoside, Dihydrochalconglycoside (insbesondere Phloridzin, Trilobatin), hydrolisierbare Tannine (insbesondere Gallus- oder Ellagsäureester von Kohlenhydraten, z.B. Pentagalloylglucose), nichthydrolisierbare Tannine (insbesondere galloylierte Catechine oder Epicatechine und deren Oligomeren, z.B. Proanthyocyanidine oder Procyanidine, Thearubigenin), Flavone und deren Glycoside (insbesondere Quercetin, Quercitrin, Rutin, Taxifolin, Myricetin, Myrictrin), Kaffeesäure oder deren Ester, terpenoide Bitterstoffe (insbesondere Limonin, Nomilin, Lupolone und Humolone), metallische Salze (Kaliumchlorid, Natriumsulfat, Magnesiumsalze, Eisensalze, Aluminiumsalze, Zinksalze), pharmazeutische Wirkstoffe (z.B. Fluorchinolon-Antibiotika, Paracetamol, Aspirin, β-Lactam-Antibiotika, Ambroxol, Propylthiouracil [PROP], Guaifenesin), Aminosäuren (z.B. Leucin, Isoleucin, Valin, Tryptophan, Prolin, Histidin, Tyrosin, Lysin oder Phenylalanin), Peptide (insbesondere Peptide mit einer Aminosäure aus der Gruppe Leucin, Isoleucin, Valin, Tryptophan, Prolin oder Phenylalanin am N- oder C-Terminus).

Weiter bevorzugte erfindungsgemäß zu maskierende Bitterstoffe sind ausgewählt aus der Gruppe bestehend aus Coffein, Theobromin, Chinin, Salicin, Arbutin, Neohesperedin, Eriocitrin, Neoeriocitrin, Narirutin, Hesperidin, Naringin, Phloridzin, Catechin, Epicatechin, Epigallocatechingallat (EGCG), Gallocatechin, Gallocatechin-3-gallat, Procyanidin B2, Procyanidin B5, Procyanidin C1, Thearubigenin, Quercetin, Quercitrin, Rutin, Taxifolin, Myricetin, Myrictrin, Kaffeesäure oder deren Ester, Limonin und Nomilin, Aminosäuren (z.B. Leucin, Isoleucin, Valin, Tryptophan, Prolin, Histidin, Tyrosin, Lysin oder Phenylalanin), Peptide mit einer Aminosäure aus der Gruppe Leucin, Isoleucin, Valin, Tryptophan, Prolin oder Phenylalanin am N- oder C-Terminus, Kaliumchlorid, Paracetamol, Aspirin und β -Lactam-Antibiotika.

Stoffe, die einen bitteren, adstringierenden, pappigen, kalkigen, staubigen, trockenen, mehligen, ranzigen und/oder metallischen Neben- und/oder Nachgeschmack haben, können Aroma- oder Geschmacksstoffe mit einem nicht unangenehmen Primärgeschmack (beispielsweise süß, salzig, würzig, sauer) und/oder -geruch sein, und z.B. zur Gruppe der Süßstoffe, Zuckeraustauschstoffe oder der Aromastoffe gehören. Beispielsweise seien genannt: Aspartam, Neotam, Superaspartam, Alitam, Saccharin, Sucralose, Tagatose, Monellin, Monatin, Stevioside, Rubusosid, Steviosid, Rebaudiosid A, Rebaudioside C, Thaumatin, Miraculin, Glycyrrhizin, Glycyrrhetinsäure oder deren Derivate, Cyclamat oder die pharmazeutisch akzeptablen Salze der vorgenannten Verbindungen.

In einer erfindungsgemäß bevorzugten Verwendung wird zumindest eine weitere Substanz zum Verändern oder Maskieren des unangenehmen Geschmackseindruckes eines unangenehm schmeckenden Stoffes in Kombination eingesetzt.

In einer weiteren Ausgestaltung betrifft die vorliegende Erfindung daher eine wie oben beschriebene Verwendung der erfindungsgemäß zu verwendenden Vanillyllignane in Kombination mit einer, zwei oder mehreren weiteren Substanzen zum Verändern oder Maskieren des unangenehmen, insbesondere bitteren, Geschmackseindrucks eines unangenehm schmeckenden Stoffes, vorzugsweise eines Bitterstoffes.

Weitere Substanzen zum Verändern oder Maskieren eines unangenehmen Geschmackseindrucks und/oder zum Verstärken eines angenehmen Geschmackseindrucks bzw. Geschmackskorrigenzien sind dabei vorzugsweise ausgewählt aus der folgenden Gruppe (M):
Nucleotide (z.B. Adenosin-5'-monophosphat, Cytidin-5'-monophosphat) oder deren pharmazeutisch akzeptable Salze, Lactisole, Natriumsalze (z.B. Natriumchlorid, Natriumlactat, Natriumcitrat, Natriumacetat, Natriumgluconoat), Hydroxyflavanone, wie zum Beispiel Eriodictyol, Sterubin (Eriodictyol-7-methylether), Homoeriodictyol, und deren Natrium-, Kalium-, Calcium-, Magnesium- oder Zinksalze (insbesondere solche wie beschrieben in EP 1 258 200 A2, die bezüglich der darin offenbarten entsprechenden Verbindungen auf dem Wege der Verweisung Bestandteil dieser Anmeldung wird), Hydroxybenzoesäureamide, wie zum Beispiel 2,4-Dihydroxybenzoesäurevanillylamid, 2,4-Dihydroxybenzoesäure-*N*-(4-hydroxy-3-methoxybenzyl)amid, 2,4,6-Trihydroxybenzoesäure-*N*-(4-hydroxy-3-methoxybenzyl)-amid, 2-Hydroxy-benzoesäure-*N*-4-(hydroxy-3-methoxybenzyl)amid, 4-Hydroxybenzoe-säure-*N*-(4-hydroxy-3-methoxybenzyl)amid, 2,4-Dihydroxybenzoesäure-*N-*(4-hydroxy-3-methoxybenzyl)amid-Mono-natriumsalz, 2,4-Dihydroxybenzoesäure-*N*-2-(4-hydroxy-3-methoxyphenyl)ethylamid, 2,4-Dihydroxybenzoesäure-*N*-(4-hydroxy-3-ethoxybenzyl)amid, 2,4-Dihydroxybenzoesäure-*N*-(3,4-dihydroxybenzyl)amid und 2-Hydroxy-5-methoxy-N-[2-(4-hydroxy-3-methoxyphenyl)ethyl]amid; 4-Hydroxybenzoesäurevanillylamid (insbesondere solche wie beschrieben in WO 2006/024587, die bezüglich der darin offenbarten entsprechenden Verbindungen auf dem Wege der Verweisung Bestandteil dieser Anmeldung wird); Hydroxydeoxybenzoine, wie zum Beispiel 2-(4-Hydroxy-3-methoxyphenyl)-1-(2,4,6-trihydroxyphenyl)ethanon, 1-(2,4-Dihydroxyphenyl)-2-(4-hydroxy-3-methoxyphenyl)-ethanon, 1-(2-Hydroxy-4-methoxyphenyl)-2-(4-hydroxy-3-methoxyphenyl)ethanon) (insbesondere solche wie beschrieben in WO 2006/106023, die bezüglich der darin offenbarten entsprechenden Verbindungen auf dem Wege der Verweisung Bestandteil dieser Anmeldung wird); Hydroxyphenylalkandione, wie zum Beispiel Gingerdion-[2], Gingerdion-[3], Gingerdion-[4], Dehydrogingerdion-[2], Dehydrogingerdion-[3], Dehydrogingerdion-[4]) (insbesondere solche wie beschrieben in WO 2007/003527, die bezüglich der darin offenbarten entsprechenden Verbindungen auf dem Wege der Verweisung Bestandteil dieser Anmeldung wird); Diacetyltrimere (insbesondere solche wie beschrieben in WO 2006/058893, die bezüglich der darin offenbarten entsprechenden Verbindungen auf dem Wege der Verweisung Bestandteil dieser Anmeldung wird); gamma-Aminobuttersäuren (insbesondere solche wie beschrieben in WO 2005/096841, die bezüglich der darin offenbarten entsprechenden Verbindungen auf dem Wege der Verweisung Bestandteil dieser Anmeldung wird); Divanilline (insbesondere solche wie beschrieben in WO 2004/078302, die bezüglich der darin offenbarten entsprechenden Verbindungen auf dem Wege der Verweisung Bestandteil dieser Anmeldung wird) und 4-Hydroxydihydrochalcone (vorzugsweise wie beschrieben in US 2008/0227867 A1, die bezüglich der darin offenbarten entsprechenden Verbindungen auf dem Wege der Verweisung Bestandteil dieser Anmeldung wird), dabei insbesondere Phloretin und Davidigenin, Aminosäuren oder Gemische von MolkeProteinen mit Lecithinen, Hesperetin wie in der WO 2007/014879 offenbart, die hinsichtlich dieser Verbindungen auf dem Wege der Verweisung Bestandteil dieser Anmeldung wird, 4-Hydroxydihydrochalkone wie in der WO 2007/107596 offenbart, die hinsichtlich dieser Verbindungen auf dem Wege der Verweisung Bestandteil dieser Anmeldung wird, oder Propenylphenylglycoside (Chavicolglycoside) wie in EP 1 955 601 A1 beschrieben, die hinsichtlich dieser Verbindungen auf dem Wege der Verweisung Bestandteil dieser Anmeldung wird, oder Extrakte aus Rubus suavissimus wie in US Provisional Application 61/333,435 (Symrise) und den darauf basierenden Patentanmeldungen beschrieben, die hinsichtlich dieser Extrakte auf dem Wege der Verweisung Bestandteil dieser Anmeldung werden, oder Extrakte aus Hydrangea macrophylla wie in EP 2 298 084 A1 beschrieben, die hinsichtlich dieser Extrakte auf dem Wege der Verweisung Bestandteil dieser Anmeldung wird, Pellitorin und abgeleitete Aromakompositionen wie in EP 2 008 530 A1 beschrieben, Umami-Verbindungen wie in WO 2008/046895 A1 und EP 1 989 944 A1 beschrieben, die jeweils hinsichtlich dieser Verbindungen auf dem Wege der Verweisung Bestandteil dieser Anmeldung werden sowie Umami-Verbindungen wie beschrieben in EP 2 064 959 A1 bzw. EP 2 135 516 A1, die bezüglich der darin offenbarten entsprechenden Verbindungen auf dem Wege der Verweisung Bestandteil dieser Anmeldung werden.

Da sich die Bitterintensität verschiedener Bitterstoffe deutlich unterscheidet, wird die Bitterkeit einer Verbindung im Folgenden in relativen Bitterequivalenten (RBE) angegeben. Als Bezugssubstanz wird hier der bekannte Bitterstoff Coffein verwendet. Die Bestimmung des RBE-Wertes als Maß für die relative Bitterkeit einer Probe erfolgt mit Hilfe einer Skala von 1 bis 10. Eine relative Bitterkeit von 1, d.h. eine RBE-Wert von 1, entspricht dabei der Bitterkeit einer Menge von Coffein in der Dosierung von 100 mg/kg zu untersuchender Probe. Eine relative Bitterkeit von 5, d.h. eine RBE-Wert von 5, entspricht dabei der Bitterkeit einer Menge von Coffein in der Dosierung von 500 mg/kg zu untersuchender Probe. Die zu untersuchende Probe kann dabei in ihrer Zusammensetzung stark variieren. So kann es sich bei der zu untersuchenden Probe beispielsweise um eine der Ernährung, der Mundpflege, dem Genuss dienende Zubereitung, eine orale pharmazeutischen Zubereitung oder eine kosmetischen Zubereitung, beispielsweise um ein Lebensmittel, ein Getränk, ein Kaugummi, ein Mundwasser, ein Bonbon, einen Hustensaft oder eine Tablette handeln.

Die verwendete Skala zur Bestimmung der RBE-Werte entspricht ISO 4121 [Sensory Analysis - Guidelines for the use of quantitative response scales; A.3 Beispiel 2].

Die Auswahl der Panelisten zur Bestimmung der RBE-Werte erfolgt gemäß ISO 8586-1 [Sensory analysis - General guidance for the selection, training, and monitoring,of assessors - Part 1: Selected assessors].

Die Zahl der Panelisten entspricht dabei ISO 8586-I, 4.2.3 [Number of persons to be selected, zusammen mit ISO 6658 Sensory analysis - Methodology - General guidance - 5.3.5 Scoring (5 oder mehr ausgewählte Panelisten)].

Überraschenderweise wurde gefunden, dass die erfindungsgemäß zu verwendenden Vanillyllignane, deren Gemische und/oder deren Salze - auch und bereits in sehr geringen Konzentrationen - unangenehme Geschmackseindrücke, insbesondere den bitteren Geschmackseindruck, einer Vielzahl von Stoffen, maskieren, d.h. reduzieren oder sogar vollständig unterdrücken, können.

Insbesondere der bittere Geschmackseindruck von Methylxanthinen wie z.B. Coffein, Theobromin, Alkaloiden, wie z.B. Chinin, Flavonoiden wie z.B. Naringin, (Gallo-)Catechinen und deren Gallaten, (Gallo-)-Epicatechinen und deren Gallaten, Phenolen wie z.B. Arbutin, Salicin, anorganischen Salzen wie Kaliumchlorid oder Magnesiumsulfat, pharmazeutischen Wirkstoffen wie z.B. Denatoniumbenzoat, Acetylsalicylsäure, Acetaminophen, Dextromorphan oder β-Lactamantibiotika kann maskiert werden, wobei es besonders vorteilhaft ist, dass erfindungsgemäß zu verwendende Vanillyllignane, deren Gemische und/oder deren Salze in den vorzugsweise verwendeten geringen Konzentrationen nahezu keinen Eigengeschmack besitzen.

Dabei ist der zu maskierende Stoff vorzugsweise ein Bitterstoff, der in der Zubereitung in einer Konzentration entsprechend mindestens einem RBE-Wert von 1, bevorzugt von mindestens 2, enthalten ist.

Wie bereits erwähnt, betrifft ein Aspekt der vorliegenden Erfindung die Verwendung der erfindungsgemäß einzusetzenden Vanillyllignane, deren Gemische und/oder deren Salze zur Maskierung des unangenehmen Geschmackseindruckes eines unangenehm schmeckenden Stoffes, d. h. als Geschmackskorrigenz.

Vorzugsweise werden die erfindungsgemäß zu verwendenden Vanillyllignane, deren Gemische und/oder deren Salze in einer der Ernährung, der Mundpflege oder dem Genuss dienenden oder oralen pharmazeutischen Zubereitung oder kosmetischen Zubereitung (vorzugsweise zur Applikation im Bereich des Kopfes) eingesetzt, wobei die Zubereitung üblicherweise einen oder mehrere unangenehm schmeckende Stoffe, vorzugsweise einen oder mehrere bitter schmeckende Stoffe, umfasst.

In einem weiteren Aspekt betrifft die Erfindung eine wie oben beschriebene Verwendung in einer Zubereitung ausgewählt aus der Gruppe bestehend aus
(1) der Ernährung, der Nahrungsergänzung, der Mundpflege oder dem Genuss dienenden Zubereitungen,
(2) kosmetischen Zubereitungen, vorzugsweise zur Applikation im Bereich des Kopfes,
(3) zur oralen Aufnahme bestimmten pharmazeutischen Zubereitungen,
(4) Zwischenprodukte zur Herstellung einer der in (1) bis (3) genannten Zubereitungen.

Bei den Zwischenprodukten (4) kann es sich um Vorprodukte, Halbfertigwaren, Konzentrate, Aroma-, Riech- oder Geschmacksstoffkompositionen oder um Würzmischungen handeln.

Ferner betrifft die vorliegende Erfindung eine Zubereitung ausgewählt aus der Gruppe bestehend aus
(1) der Ernährung, der Nahrungsergänzung, der Mundpflege oder dem Genuss dienenden Zubereitungen,
(2) kosmetischen Zubereitungen, vorzugsweise zur Applikation im Bereich des Kopfes,
(3) zur oralen Aufnahme bestimmten pharmazeutischen Zubereitungen,
(4) Zwischenprodukte zur Herstellung einer der in (1) bis (3) genannten Zubereitungen, enthaltend
   - einen, zwei oder mehrere unangenehm, insbesondere bitter, schmeckende Stoffe
sowie
- ein, zwei oder mehrere verschiedene Vanillyllignane wie oben definiert, oder
- ein, zwei oder mehrere verschiedene Salze eines, zweier oder mehrerer verschiedener Vanillyllignane wie oben definiert, oder
- ein Gemisch eines, zweier oder mehrerer verschiedener Vanillyllignane wie oben definiert mit einem, zwei oder mehreren verschiedenen Salzen eines, zweier oder mehrerer verschiedener Vanillyllignane wie oben definiert,
wobei die Menge des bzw. der unangenehm, insbesondere bitter, schmeckenden Stoffe ausreicht, um in einer Vergleichszubereitung, die weder eines der oben definierten Vanillyllignane noch eines der oben definierten Salze enthält, aber ansonsten identisch zusammengesetzt ist, als unangenehmer, insbesondere bitterer, Geschmack wahrgenommen zu werden,
und
die Menge des oder der oben definierten Vanillyllignane bzw. des oder der oben definierten Salze bzw. des oben definierten Gemisches ausreicht, um im Vergleich mit der Vergleichszubereitung den unangenehmen, insbesondere bitteren, Geschmackseindruck des bzw. der unangenehm, insbesondere bitter, schmeckenden Stoffe zu maskieren,
mit der Maßgabe, dass vorzugsweise zumindest einer der in der Zubereitung enthaltenen unangenehm, insbesondere bitter, schmeckenden Stoffe nicht Secoisolariciresinol ist.

Anders ausgedrückt bedeutet dies, dass eine erfindungsgemäße Zubereitung zumindest einen unangenehm, insbesondere bitter, schmeckenden Stoff in entsprechender Menge und kein Secoisolariciresinol enthält, oder, dass eine erfindungsgemäße Zubereitung neben Secoisolariciresinol zumindest einen weiteren unangenehm, insbesondere bitter, schmeckenden Stoff in entsprechender Menge enthält.

Der Fachmann kann eine erfindungsgemäße Zubereitung von einer nicht erfindungsgemäßen Zubereitung durch einen einfachen Vergleichstest unterscheiden. Bei diesem Vergleichstest untersucht der Fachmann zwei Zubereitungen, die identisch zusammengesetzt sind, bis auf die Tatsache, dass eine der beiden Zubereitungen, nämlich die Vergleichszubereitung, weder eines der oben definierten erfindungsgemäß einzusetzenden Vanillyllignane noch eines der oben definierten Salze enthält. Sofern bei der sensorischen Untersuchung dieser beiden Zubereitungen bei der Vergleichszubereitung der unangenehm, insbesondere bitter, schmeckende Stoff verändert, insbesondere stärker, wahrnehmbar ist, handelt es sich bei der anderen untersuchten Zubereitung um eine erfindungsgemäße Zubereitung.

In einer erfindungsgemäß bevorzugten Zubereitung ist das molare Verhältnis der Gesamtmenge glycosidisch gebundener Vanillyllignane zu der Gesamtmenge nicht glycosidisch gebundener Vanillyllignane 1:1 oder kleiner, bevorzugt 1:10 oder kleiner, bevorzugt 1:50 oder kleiner, besonders bevorzugt 1:100 oder kleiner.

In einer erfindungsgemäß bevorzugten Zubereitung ist das Verhältnis der Gesamtmasse glycosidisch gebundener Vanillyllignane zu der Gesamtmasse nicht glycosidisch gebundener Vanillyllignane 2:1 oder kleiner, bevorzugt 1:1 oder kleiner, bevorzugt 1:5 oder kleiner, weiter bevorzugt 1:10 oder kleiner, besonders bevorzugt 1:25 oder kleiner und insbesondere bevorzugt 1:50 oder kleiner.

In einer bevorzugten Ausgestaltung ist eine erfindungsgemäße Zubereitung dadurch gekennzeichnet, dass
der oder einer der unangenehm schmeckenden Stoffe ein Bitterstoff ist, der in einer Konzentration vorliegt, die mindestens 2 relativen Bitterequivalenten entspricht,
oder
mehrere oder sämtliche der unangenehm schmeckenden Stoffe Bitterstoffe sind, wobei die Gesamtkonzentration aller Bitterstoffe mindestens 2 relativen Bitterequivalenten entspricht.

In einer weiteren, besonders bevorzugten Ausführung der Erfindung werden die erfindungsgemäß zu verwendenden Vanillyllignane, deren Salze oder Gemische in den erfindungsgemäßen Zubereitungen in Kombination mit zumindest einem Stoff verwendet, der einen süßen Primärgeschmack und einen bitteren Neben- und/oder Nachgeschmack hat. Bevorzugt sind dabei Kombinationen der erfindungsgemäß zu verwendenden Vanillyllignane, deren Salze oder Gemische mit einem Stoff, der einen süßen Primärgeschmack und zusätzlich einen Bittergeschmack von mindestens einem RBE-Wert von 1 aufweist, bevorzugt von mindestens einem RBE-Wert von 2. Hierbei kann durch Maskierung des bitteren Neben- oder Nachgeschmacks der süße Geschmackseindruck des süß schmeckenden Stoffs wesentlich verbessert werden. Besonders bevorzugt ist ferner auch die weitere Kombination der vorgenannten Mischungen mit einem oder mehreren den angenehmen, insbesondere den süßen Geschmack verstärkenden Stoffen.

Eine erfindungsgemäß bevorzugte Zubereitung ist dadurch gekennzeichnet, dass die Menge des oder der oben definierten Vanillyllignane bzw. des oder der oben definierten Salze bzw. des oben definierten Gemisches ausreicht, um den unangenehmen, insbesondere bitteren, Geschmackseindruck des bzw. der unangenehm, insbesondere bitter, schmeckenden Stoffe zu maskieren, dass er dem Geschmackseindruck einer Vergleichszubereitung entspricht, die (i) weder eines der oben definierten Vanillyllignane noch eines der oben definierten Salze sowie (ii) 90 Gew.-% oder weniger, vorzugsweise 80 Gew.-% oder weniger, bevorzugt 75 Gew.-% oder weniger, besonders bevorzugt 70 Gew.-% oder weniger des bzw. der unangenehm, insbesondere bitter, schmeckenden Stoffe enthält, aber ansonsten identisch zusammengesetzt ist.

Eine erfindungsgemäß weiter bevorzugte Zubereitung ist dadurch gekennzeichnet, dass die Menge des oder der oben definierten Vanillyllignane bzw. des oder der oben definierten Salze bzw. des oben definierten Gemisches ausreicht, um den unangenehmen, insbesondere bitteren, Geschmackseindruck des bzw. der unangenehm, insbesondere bitter, schmeckenden Stoffe sensorisch so zu maskieren, dass er dem Geschmackseindruck einer Vergleichszubereitung entspricht, die (i) weder eines der oben definierten Vanillyllignane noch eines der oben definierten Salze sowie (ii) 50 Gew.-% oder weniger, noch weiter bevorzugt 40 Gew.-% oder weniger, insbesondere bevorzugt 30 Gew.-% oder weniger, und ganz besonders bevorzugt 20 Gew.-% oder weniger des bzw. der unangenehm, insbesondere bitter, schmeckenden Stoffe enthält, aber ansonsten identisch zusammengesetzt ist.

Eine erfindungsgemäß bevorzugte Zubereitung ist dadurch gekennzeichnet dass der oder einer der unangenehm schmeckenden Stoffe ein Bitterstoff ist, der in einer Konzentration von zumindest dem zweifachen seines Bitterschwellenwerts, vorzugsweise im Bereich des zwei- bis tausendfachen seines Bitterschwellenwerts, vorliegt. Bevorzugt liegt der Bitterstoff in einer Konzentration des fünf- bis fünfhundertfachen Bitterschwellenwerts vor, weiter bevorzugt in einer Konzentration des zehn- bis zweihundertfachen.

Die Definition des Bitterschwellenwertes und die Bestimmung des Bitterschwellenwertes in einer Zubereitung ist dem Fachmann bekannt (siehe hierzu auch J. Agric. Food Chem. 2005, 53, 5407-5418 und J. Agric. Food Chem. 2005, 53, 5377-5384).

Eine erfindungsgemäß bevorzugte Zubereitung enthält einen, zwei oder mehrere der folgenden Bitterstoffe:
- Catechine und Proanthocyanidine in einer Gesamtmenge von zumindest 0,05 Gew.- %, vorzugsweise von zumindest 0,1 Gew.-%, bevorzugt im Bereich von 0,2 Gew.-% bis 1 Gew.-%,
- Coffein und Theobromin in einer Gesamtmenge von zumindest 0,05 Gew.-%, vorzugsweise von zumindest 0,25 Gew.-%, bevorzugt von zumindest 0,5 Gew.-%, weiter bevorzugt im Bereich von 1 Gew.-% bis 2,5 Gew.-%,
- Naringin in einer Konzentration von zumindest 0,025 Gew.-%, vorzugsweise von zumindest 0,1 Gew.-%, bevorzugt im Bereich von 0,2 Gew.-% bis 2 Gew.-%,
- Süßstoffe in einer Gesamtmenge von zumindest 0,005 Gew.-%, vorzugsweise von zumindest 0,05 Gew.-%, bevorzugt im Bereich von 0,1 Gew.-% bis 2 Gew.-%,
jeweils bezogen auf das Gesamtgewicht der Zubereitung.

Erfindungsgemäße Zubereitungen können beispielsweise als Halbfertigware, als Riech-, Aroma- oder Geschmacksstoffkomposition oder als Würzmischung vorliegen.

Erfindungsgemäße Zubereitungen enthalten vorzugsweise zumindest einen, zwei, drei, vier, fünf, sechs, sieben, acht oder mehr weitere Aromastoffe.

Im Rahmen der vorliegenden Erfindung bevorzugt einzusetzende (einen oder mehrere) Aromastoffe werden vorzugsweise gewählt aus der folgenden Gruppe (A) bestehend aus:
Acetophenon, Allylcapronat, alpha-Ionon, beta-Ionon, Anisaldehyd, Anisylacetat, Anisylformiat, Benzaldehyd, Benzothiazol, Benzylacetat, Benzylalkohol, Benzylbenzoat, beta-Ionon, Butylbutyrat, Butylcapronat, Butylidenphthalid, Carvon, Camphen, Caryophyllen, Cineol, Cinnamylacetat, Citral, Citronellol, Citronellal, Citronellylacetat, Cyclohexylacetat, Cymol, Damascon, Decalacton, Dihydrocumarin, Dimethylanthranilat, Dimethylanthranilat, Dodecalacton, Ethoxyethylacetat, Ethylbuttersäure, Ethylbutyrat, Ethylcaprinat, Ethylcapronat, Ethylcrotonat, Ethylfuraneol, Ethylguajakol, Ethylisobutyrat, Ethylisovalerianat, Ethyllactat, Ethylmethylbutyrat, Ethylpropionat, Eucalyptol, Eugenol, Ethylheptylat, 4-(p-Hydroxyphenyl)-2-butanon, gamma-Decalacton, Geraniol, Geranylacetat, Geranylacetat, Grapefruitaldehyd, Methyldihydrojasmonat (z.B. Hedion®), Heliotropin, 2-Heptanon, 3-Heptanon, 4-Heptanon, trans-2-Heptenal, cis-4-Heptenal, trans-2-Hexenal, cis-3-Hexenol, trans-2-Hexensäure, trans-3-Hexensäure, cis-2-Hexenylacetat, cis-3-Hexenylacetat, cis-3-Hexenylcapronat, trans-2-Hexenylcapronat, cis-3-Hexenylformiat, cis-2-Hexylacetat, cis-3-Hexylacetat, trans-2-Hexylacetat, cis-3-Hexylformiat, para-Hydroxybenzylaceton, Isoamylalkohol, Isoamylisovalerianat, Isobutylbutyrat, Isobutyraldehyd, Isoeugenolmethylether, Isopropylmethylthiazol, Laurinsäure, Leavulinsäure, Linalool, Linalooloxid, Linalylacetat, Menthol, Menthofuran, Methylanthranilat, Methylbutanol, Methylbuttersäure, 2-Methylbutylacetat, Methylcapronat, Methylcinnamat, 5-Methylfurfural, 3,2,2-Methylcyclopentenolon, 6,5,2-Methylheptenon, Methyldihydrojasmonat, Methyljasmonat, 2-Methylmethylbutyrat, 2-Methyl-2-Pentenolsäure, Methylthiobutyrat, 3,1-Methylthiohexanol, 3-Methylthiohexylacetat, Nerol, Nerylacetat, trans,trans-2,4-Nonadienal, 2,4-Nonadienol, 2,6-Nonadienol, 2,4-Nonadienol, Nootkaton, delta Octalacton, gamma Octalacton, 2-Octanol, 3-Octanol, 1,3-Octenol, 1-Octylacetat, 3-Octylacetat, Palmitinsäure, Paraldehyd, Phellandren, Pentandion, Phenylethylacetat, Phenylethylalkohol, Phenylethylalkohol, Phenylethylisovalerianat, Piperonal, Propionaldehyd, Propylbutyrat, Pulegon, Pulegol, Sinensal, Sulfurol, Terpinen, Terpineol, Terpinolen, 8,3-Thiomenthanon, 4,4,2-Thiomethylpentanon, Thymol, delta-Undecalacton, gamma-Undecalacton, Valencen, Valeriansäure, Vanillin, Acetoin, Ethylvanillin, Ethylvanillinisobutyrat (= 3-Ethoxy-4-isobutyryloxybenzaldehyd), 2,5-Dimethyl-4-hydroxy-3(2H)-furanon und dessen Abkömmlinge (dabei vorzugsweise Homofuraneol (= 2-Ethyl-4-hydroxy-5-methyl-3(2H)-furanon), Homofuronol (= 2-Ethyl-5-methyl-4-hydroxy-3(2H)-furanon und 5-Ethyl-2-methyl-4-hydroxy-3(2H)-furanon), Maltol und Maltol-Abkömmlinge (dabei vorzugsweise Ethylmaltol), Cumarin und Cumarin-Abkömmlinge, gamma-Lactone (dabei vorzugsweise gamma-Undecalacton, gamma-Nonalacton, gamma-Decalacton), delta-Lactone (dabei vorzugsweise 4-Methyldeltadecalacton, Massoilacton, Deltadecalacton, Tuberolacton), Methylsorbat, Divanillin, 4-Hydroxy-2(oder 5)-ethyl-5(oder 2)-methyl-3(2H)furanon, 2-Hydroxy-3-methyl-2-cyclopentenon, 3-Hydroxy-4,5-dimethyl-2(5H)-furanon, Essigsäureisoamylester, Buttersäureethylester, Buttersäure-n-butylester, Buttersäureisoamylester, 3-Methyl-buttersäureethylester, n-Hexansäureethylester, n-Hexansäureallylester, n-Hexansäure-n-butylester, n-Octansäureethylester, Ethyl-3-methyl-3-phenylglycidat, Ethyl-2-trans-4-cis-decadienoat, 4-(p-Hydroxyphenyl)-2-butanon, 1,1-Dimethoxy-2,2,5-trimethyl-4-hexan, 2,6-Dimethyl-5-hepten-1-al und Phenylacetaldehyd, 2-Methyl-3-(methylthio)furan, 2-Methyl-3-furanthiol, Bis(2-Methyl-3-furyl)disulfid, Furfurylmercaptan, Methional, 2-Acetyl-2-thiazolin, 3-Mercapto-2-pentanon, 2,5-Dimethyl-3-furanthiol, 2,4,5-Trimethylthiazol, 2-Acetylthiazol, 2,4-Dimethyl-5-ethylthiazol, 2-Acetyl-1-pyrrolin, 2-Methyl-3-ethylpyrazin, 2-Ethyl-3,5-dimethylpyrazin, 2-Ethyl-3,6-dimethylpyrazin, 2,3-Diethyl-5-methylpyrazin, 3-Isopropyl-2-methoxypyrazin, 3-Isobutyl-2-methoxypyrazin, 2-Acetylpyrazin, 2-Pentylpyridin, (E,E)-2,4-Decadienal, (E,E)-2,4-Nonadienal, (E)-2-Octenal, (E)-2-Nonenal, 2-Undecenal, 12-Methyltridecanal, 1-Penten-3-on, 4-Hydroxy-2,5-dimethyl-3(2H)-furanon, Guajakol, 3-Hydroxy-4,5-dimethyl-2(5H)-furanon, 3-Hydroxy-4-methyl-5-ethyl-2(5H)-furanon, Zimtaldehyd, Zimtalkohol, Methylsalicylat, Isopulegol sowie (hier nicht explizit genannte) Stereoisomere, Enantiomere, Stellungsisomere, Diastereomere, cis/trans-Isomere bzw. Epimere dieser Substanzen.

Der Ernährung oder dem Genuss dienende Zubereitungen sind im Rahmen dieses Textes z.B. Backwaren (z.B. Brot, Trockenkekse, Kuchen, sonstiges Gebäck), Süßwaren (z.B. Schokoladen, Schokoladenriegelprodukte, sonstige Riegelprodukte, Fruchtgummi, Hart- und Weichkaramellen, Kaugummi), alkoholische oder nicht-alkoholische Getränke (z.B. Kaffee, Tee, Wein, weinhaltige Getränke, Bier, bierhaltige Getränke, Liköre, Schnäpse, Weinbrände, fruchthaltige Limonaden, isotonische Getränke, Erfrischungsgetränke, Nektare, Obst- und Gemüsesäfte, Frucht- oder Gemüsesaftzubereitungen), Instantgetränke (z.B. Instant-Kakao-Getränke, Instant-Tee-Getränke, Instant-Kaffeegetränke), Fleischprodukte (z.B. Schinken, Frischwurst- oder Rohwurstzubereitungen, gewürzte oder marinierte Frisch- oder Pökelfleischprodukte), Eier oder Eiprodukte (Trockenei, Eiweiß, Eigelb), Getreideprodukte (z.B. Frühstückscerealien, Müsliriegel, vorgegarte Fertigreis-Produkte), Milchprodukte (z.B. Milchgetränke, Milcheis, Joghurt, Kefir, Frischkäse, Weichkäse, Hartkäse, Trockenmilchpulver, Molke, Butter, Buttermilch, teilweise oder ganz hydrolisierte Milchprotein-haltige Produkte), Produkte aus Sojaprotein oder anderen Sojabohnen-Fraktionen (z.B. Sojamilch und daraus gefertigte Produkte, Sojalecithin-haltige Zubereitungen, fermentierte Produkte wie Tofu oder Tempe oder daraus gefertigte Produkte, Sojasoßen), Fruchtzubereitungen (z.B. Konfitüren, Fruchteis, Fruchtsoßen, Fruchtfüllungen), Gemüsezubereitungen (z.B. Ketchup, Soßen, Trockengemüse, Tiefkühlgemüse, vorgegarte Gemüse, in Essig eingelegte Gemüse, eingekochte Gemüse), Knabberartikel (z.B. gebackene oder frittierte Kartoffelchips oder Kartoffelteigprodukte, Brotteigprodukte, Extrudate auf Mais- oder Erdnussbasis), Produkte auf Fett- und Ölbasis oder Emulsionen derselben (z.B. Mayonnaise, Remoulade, Dressings, Würzzubereitungen), sonstige Fertiggerichte und Suppen (z.B. Trockensuppen, Instant-Suppen, vorgegarte Suppen), Gewürze, Würzmischungen sowie insbesondere Aufstreuwürzungen (englisch: Seasonings), die beispielsweise im Snackbereich Anwendung finden.

Die Zubereitungen im Sinne der Erfindung können auch als Halbfertigware zur Herstellung weiterer der Ernährung oder dem Genuss dienenden Zubereitungen dienen. Die Zubereitungen im Sinne der Erfindung können auch in Form von Kapseln, Tabletten (nichtüberzogene sowie überzogene Tabletten, z.B. magensaftresistente Überzüge), Dragees, Granulaten, Pellets, Feststoffmischungen, Dispersionen in flüssigen Phasen, als Emulsionen, als Pulver, als Lösungen, als Pasten oder als andere schluck- oder kaubare Zubereitungen als Nahrungsergänzungsmittel vorliegen.

Eine erfindungsgemäß bevorzugte Zubereitung enthält
ein, zwei oder mehrere verschiedene Vanillyllignane wie oben definiert,
und/oder
ein, zwei oder mehrere verschiedene Salze eines, zweier oder mehrerer verschiedener Vanillyllignane wie oben definiert
in einer Gesamtmenge der oben definierten Vanillyllignane und der oben definierten Salze von 10 bis weniger als 300 mg/kg, bevorzugt von 12 bis 100 mg/kg, bezogen auf das Gesamtgewicht der Zubereitung,
mit der Maßgabe, dass vorzugsweise zumindest einer der in der Zubereitung enthaltenen unangenehm, insbesondere bitter, schmeckenden Stoffe nicht Secoisolariciresinol ist.

Erfindungsgemäße Zubereitungen und erfindungsgemäß bevorzugte Zubereitungen unterscheiden sich damit unter anderem von direkt verzehrbaren Lebensmitteln wie beispielsweise die Ölsaaten von Sesam oder Lein, welche die erfindungsgemäß zu verwendenden Vanillyllignane zusammen mit Secoisolariciresinol in freier, d.h. nicht gylcosidisch gebundener, Form in hohen Konzentration enthalten. Erfindungsgemäß nicht bevorzugt sind direkt verzehrbare Zubereitungen, welchen zu einem anderem als dem erfindungsgemäßen Verwendungszweck Vanillyllignane in einer hohen Konzentration, besonders in Mengen deutlich oberhalb als 300 mg/kg, zugesetzt werden. Erfindungsgemäß ebenfalls nicht bevorzugt sind Zubereitungen wie beispielsweise Nahrungsergänzungsmittel, die Vanillyllignane auf Grund ihrer gesundheitsförderlichen Effekte enthalten, da diese die betreffenden Vanillyllignane regelmäßig in hohen Dosierungen enthalten.

Der Mundpflege dienende Zubereitungen sind im Rahmen dieses Textes insbesondere Mund- und/oder Zahnpflegemittel wie Zahnpasten, Zahngele, Zahnpulver, Mundwässer, Kaugummis und andere Mundpflegemittel, enthaltend mindestens einen bitter schmeckenden Stoff mit einem RBE-Wert von 2 oder mehr.

Orale pharmazeutische Zubereitungen sind im Rahmen dieses Textes Zubereitungen, die z.B. in Form von Kapseln, Tabletten (nichtüberzogene sowie überzogene Tabletten, z.B. magensaftresistente Überzüge), Dragees, Granulaten, Pellets, Feststoffmischungen, Dispersionen in flüssigen Phasen, als Emulsionen, als Pulver, als Lösungen, als Pasten oder als andere schluck- oder kaubare Zubereitungen vorliegen und als verschreibungspflichtige, apothekenpflichtige oder sonstige Arzneimittel oder als Nahrungsergänzungsmittel verwendet werden und vorzugsweise mindestens einen bitter schmeckenden Stoff mit einem RBE-Wert von 2 oder mehr beinhalten.

Weitere übliche Wirk-, Grund-, Hilfs- und Zusatzstoffe für erfindungsgemäße Zubereitungen, insbesondere der Ernährung, der Mundpflege oder dem Genuss dienende Zubereitungen oder orale pharmazeutische Zubereitungen, können vorzugsweise in Mengen von 1 bis 99,999 Gew.-%, bevorzugt von 10 bis 80 Gew.-%, bezogen auf das Gesamtgewicht der Zubereitung, enthalten sein. Ferner können die Zubereitungen Wasser in einer Menge bis zu 99,9 Gew.-%, vorzugsweise von 5 bis 80 Gew.-%, bezogen auf das Gesamtgewicht der Zubereitung, aufweisen.

Die erfindungsgemäßen Zubereitungen, enthaltend eines oder mehrere der erfindungsgemäß zu verwendenden Vanillyllignane bzw. deren Salze oder Gemische, werden gemäß einer bevorzugten Ausgestaltung hergestellt, indem die erfindungsgemäß zu verwendenden Vanillyllignane, deren Salze oder Gemische als Substanzen, als Lösung oder in Form eines Gemischs mit einem festen oder flüssigen Trägerstoff in eine der Ernährung, der Mundpflege oder dem Genuss dienende oder orale pharmazeutische Basis-Zubereitung eingearbeitet werden. Vorteilhafterweise können als Lösung vorliegende erfindungsgemäße Zubereitungen auch durch Sprühtrocknung in eine feste Zubereitung überführt werden.

Gemäß einer weiteren bevorzugten Ausführungsform werden zur Herstellung erfindungsgemäßer Zubereitungen die erfindungsgemäß zu verwendenden Vanillyllignane bzw. deren Salze oder Gemische und gegebenenfalls andere Bestandteile der erfindungsgemäßen Zubereitung auch vorher in Emulsionen, in Liposomen, z.B. ausgehend von Phosphatidylcholin, in Microsphären, in Nanosphären oder auch in Kapseln, Granulaten oder Extrudaten aus einer für Lebens- und Genussmittel geeigneten Matrix, z.B. aus Stärke, Stärkederivaten, Cellulose oder Cellulosederivaten (z.B. Hydroxypropylcellulose), anderen Polysacchariden (z.B. Alginat), natürlichen Fetten, natürlichen Wachsen (z.B. Bienenwachs, Carnaubawachs) oder aus Proteinen, z.B. Gelatine, eingearbeitet.

In einem weiteren bevorzugten Herstellungsverfahren für erfindungsgemäße Zubereitungen werden die erfindungsgemäß zu verwendenden Vanillyllignane, deren Salze oder Gemische vorher mit einem oder mehreren geeigneten Komplexbildnern, beispielsweise mit Cyclodextrinen oder Cyclodextrinderivaten, bevorzugt α- oder β-Cyclodextrin, komplexiert und in dieser komplexierten Form eingesetzt.

Besonders bevorzugt ist eine erfindungsgemäße Zubereitung, bei der die Matrix so gewählt wird, dass die erfindungsgemäß zu verwendenden Vanillyllignane, deren Salze oder Gemische verzögert von der Matrix freigegeben werden, so dass man eine langanhaltende Wirkung erhält.

Als weitere Bestandteile für erfindungsgemäße Zubereitungen, vorzugsweise der Ernährung oder dem Genuss dienende Zubereitungen, können übliche Grund-, Hilfs- und Zusatzstoffe für Nahrungs- oder Genussmittel verwendet werden, z.B. Wasser, Gemische frischer oder prozessierter, pflanzlicher oder tierischer Grund- oder Rohstoffe (z.B. rohes, gebratenes, getrocknetes, fermentiertes, geräuchertes und/oder gekochtes Fleisch, Knochen, Knorpel, Fisch, Gemüse, Früchte, Kräuter, Nüsse, Gemüse- oder Fruchtsäfte oder - pasten oder deren Gemische), verdauliche oder nicht verdauliche Kohlenhydrate (z.B. Saccharose, Maltose, Fructose, Glucose, Dextrine, Amylose, Amylopektin, Inulin, Xylane, Cellulose, Tagatose), Zuckeralkohole (z.B. Sorbit, Erythritol), natürliche oder gehärtete Fette (z.B. Talg, Schmalz, Palmfett, Kokosfett, gehärtetes Pflanzenfett), Öle (z.B. Sonnenblumenöl, Erdnussöl, Maiskeimöl, Olivenöl, Fischöl, Sojaöl, Sesamöl), Fettsäuren oder deren Salze (z.B. Kaliumstearat), proteinogene oder nicht-proteinogene Aminosäuren und verwandte Verbindungen (z.B. γ-Aminobuttersäure, Taurin), Peptide (z.B. Glutathion), native oder prozessierte Proteine (z.B. Gelatine), Enzyme (z.B. Peptidasen), Nukleinsäuren, Nucleotide, andere Geschmackskorrigenzien für unangenehme Geschmackseindrücke, Geschmacksmodulatoren für weitere, in der Regel nicht unangenehme Geschmackseindrücke, geschmacksmodulierende Stoffe (z.B. Inositolphosphat, Nucleotide wie Guanosinmonophosphat, Adenosinmonophosphat oder andere Stoffe wie Natriumglutamat oder 2-Phenoxypropionsäure), Emulgatoren (z.B. Lecithine, Diacylglycerole, Gummi Arabicum), Stabilisatoren (z.B. Carrageenan, Alginat), Konservierungsstoffe (z.B. Benzoesäure, Sorbinsäure), Antioxidantien (z.B. Tocopherol, Ascorbinsäure), Chelatoren (z.B. Citronensäure), organische oder anorganische Säuerungsmittel (z.B. Äpfelsäure, Essigsäure, Citronensäure, Weinsäure, Phosphorsäure), zusätzliche Bitterstoffe (z.B. Chinin, Coffein, Limonin, Amarogentin, Humolone, Lupolone, Catechine, Tannine), Süßstoffe (z.B. Saccharin, Cyclamat, Aspartam, Neotam), mineralische Salze (z.B. Natriumchlorid, Kaliumchlorid, Magnesiumchlorid, Natriumphosphate), die enzymatische Bräunung verhindernde Stoffe (z.B. Sulfit, Ascorbinsäure), etherische Öle, Pflanzenextrakte, natürliche oder synthetische Farbstoffe oder Farbpigmente (z.B. Carotinoide, Flavonoide, Anthocyane, Chlorophyll und deren Derivate), Gewürze, trigeminal wirksame Stoffe oder Pflanzenextrakte, enthaltend solche trigeminal wirksamen Stoffe, synthetische, natürliche oder naturidentische Aromastoffe oder Riechstoffe sowie Geruchskorrigentien.

Erfindungsgemäße Zahnpflegemittel (als Basis für der Mundpflege dienende Zubereitungen), die die erfindungsgemäß zu verwendenden Vanillyllignane, deren Salze oder Gemische enthalten, umfassen im allgemeinen ein abrasives System (Schleif- oder Poliermittel), wie z.B. Kieselsäuren, Calciumcarbonate, Calciumphosphate, Alumiuniumoxide und/oder Hydroxylapatite, oberflächenaktive Substanzen wie z.B. Natriumlaurylsulfat, Natriumlaurylsarcosinat und/oder Cocamidopropylbetain, Feuchthaltemitteln wie z.B. Glycerin und/oder Sorbit, Verdickungsmittel, wie z.B. Carboxymethylcellulose, Polyethylenglycole, Carrageenan und/oder Laponite^{®}, Süßstoffe, wie z.B. Saccharin, Geschmackskorrigenzien für unangenehme Geschmackseindrücke, Geschmackskorrigenzien für weitere, in der Regel nicht unangenehme Geschmackseindrücke, geschmacksmodulierende Stoffe (z.B. Inositolphosphat, Nucleotide wie Guanosinmonophosphat, Adenosinmonophosphat oder andere Stoffe wie Natriumglutamat oder 2-Phenoxypropionsäure), Kühlwirkstoffen wie z.B. Menthol, Mentholderivate (z.B. L-Menthol, L-Menthyllactat, L-Menthylalkylcarbonate, Menthonketale, Menthancarbonsäureamide), 2,2,2-Trialkylessigsäureamiden (z.B. 2,2-Diisopropylpropionsäuremethylamid), Icilin-Derivate, Stabilisatoren und aktive Wirkstoffe, wie z.B. Natriumfluorid, Natriummonofluorphosphat, Zinndifluorid, quartären Ammoniumfluoriden, Zinkcitrat, Zinksulfat, Zinnpyrophosphat, Zinndichlorid, Mischungen verschiedener Pyrophosphate, Triclosan, Cetylpyridiniumchlorid, Aluminiumlactat, Kaliumcitrat, Kaliumnitrat, Kaliumchlorid, Strontiumchlorid, Wasserstoffperoxid, Aromen und/oder Natriumbicarbonat oder Geruchskorrigentien.

Als weitere Bestandteile für erfindungsgemäße (orale) pharmazeutische Zubereitungen können alle üblicherweise weiteren Wirk-, Grund-, Hilfs- und Zusatzstoffe für orale pharmazeutische Zubereitungen verwendet werden. Als Wirkstoffe können insbesondere auch unangenehm schmeckende oral formulierbare pharmazeutische Wirkstoffe verwendet werden. Die Wirk-, Grund-, Hilfs- und Zusatzstoffe können in an sich bekannter Weise in die oralen Applikationsformen überführt werden. Dies geschieht regelmäßig unter Verwendung inerter, nichttoxischer, pharmazeutisch geeigneter Hilfsstoffe. Hierzu zählen u.a. Trägerstoffe (z.B. mikrokristalline Cellulose), Lösungsmittel (z.B. flüssige Polyethylenglycole), Emulgatoren (z.B. Natriumdodecylsulfat), Dispergiermittel (z.B. Polyvinylpyrrolidon), synthetische und natürliche Biopolymere (z.B. Albumin), Stabilisatoren (z.B. Antioxidantien wie Ascorbinsäure), Farbstoffe (z.B. anorganische Pigmente wie Eisenoxide) und Geruchskorrigentien sowie weitere und/oder nicht den bitteren Geschmack betreffende Geschmackskorrigentien.

Bevorzugt können die erfindungsgemäßen Zubereitungen auch eine Aromakomposition enthalten, um den Geschmack und/oder Geruch der Zubereitung abzurunden und zu verfeinern. Geeignete Aromakompositionen enthalten z.B. synthetische oder natürliche Aroma-, Riech- und Geschmacksstoffe sowie geeignete Hilfs- und Trägerstoffe. Als besonders vorteilhaft wird dabei angesehen, dass ein bitterer, adstringierender und/oder metallischer Geschmackseindruck, der von in den Zubereitungen ohne die erfindungsgemäß zu verwendenden Vanillyllignane, deren Salze oder Gemische enthaltenen Aroma- oder Riechstoffen ausgehen würde, maskiert werden kann und damit das gesamte Aroma- oder Geschmacksprofil verbessert wird.

Bevorzugt enthalten erfindungsgemäße Zubereitungen eine Aromakomposition, um den Geschmack und/oder Geruch der Zubereitung abzurunden oder zu verfeinern. Geeignete Aromakompositionen enthalten z.B. synthetische oder natürliche Aroma-, Riech- und/oder Geschmacksstoffe, dabei auch speichelfördernde, prickelnd, scharf oder warm schmeckende Substanzen, ätherische Öle oder Pflanzenextrakte, sowie geeignete Hilfs- und Trägerstoffe. Als besonders vorteilhaft ist dabei, dass der möglicherweise zusätzliche unangenehme, insbesondere bittere, adstringierende und/oder metallische, Geschmackseindruck von in den Aromakompositionen enthaltenen Aroma-, Riech- und/oder Geschmacksstoffen maskiert werden kann, wodurch ein insgesamt verbessertes Aroma- oder Geschmacksprofil der erfindungsgemäßen Zubereitungen resultiert.

Erfindungsgemäße Zubereitungen in Form einer Halbfertigware, d.h. eines Vorproduktes, enthalten vorzugsweise ferner eine Aromakomposition, wobei die Aromakomposition mindestens einen, zwei, drei, vier, fünf oder mehr synthetische oder natürliche Aroma-, Riech- und/oder Geschmacksstoffe umfasst. Diese Halbfertigwaren können zur Maskierung unangenehmer Geschmackseindrücke, insbesondere zur Maskierung bitterer, adstringierender und/oder metallischer Geschmackseindrücke, von Fertigware-Zubereitungen dienen, die unter Verwendung der Halbfertigware hergestellt werden.

Erfindungsgemäße Zubereitungen, die als Halbfertigwaren dienen, enthalten in vorzugsweise 0,001 Gew.-% bis 95 Gew.-%, bevorzugt 0,005 bis 80 Gew.-%, insbesondere bevorzugt 0,01 Gew.-% bis 50 Gew.-%, bezogen auf das Gesamtgewicht der Halbfertigware, an erfindungsgemäß zu verwendenden Vanillyllignanen, deren Salzen oder Gemischen.

Eine Reihe von erfindungsgemäßen Zusammensetzungen sind bevorzugt. Dazu gehören Zusammensetzungen, insbesondere zum Verzehr geeignete Zusammensetzung, umfassend oder bestehend aus einem oder mehreren Vanillyllignanen, deren Salzen oder Gemischen wie vorstehend definiert und einem oder mehreren weiteren zum Verzehr geeigneten Bestandteilen.

Ein erfindungsgemäßes Vorprodukt bzw. eine erfindungsgemäße Zubereitung enthält vorzugsweise einen oder mehrere Trägerstoffe, wobei diese Trägerstoffe fest oder flüssig sein können (bei 25°C und 1013 mbar). Als Trägerstoffe können Einzelsubstanzen oder auch Substanzgemische eingesetzt werden.

In einer Ausgestaltung sind erfindungsgemäße Zubereitungen vorzugsweise sprühgetrocknet, die als zum Verzehr geeignete Bestandteile feste Trägerstoffe und gegebenenfalls eine Aromakomposition umfassen. Ebenfalls bevorzugt sind Zusammensetzungen wie vorstehend beschrieben, wobei die Zusammensetzungen sprühgetrocknet sind.

Vorteilhafte feste Trägerstoffe in diesen bevorzugten erfindungsgemäßen (vorzugsweise sprühgetrockneten) Zusammensetzungen sind Siliciumdioxid (Kieselsäure, Kieselgel), Kohlenhydrate und/oder Kohlenhydratpolymere (Polysaccharide), Cyclodextrine, Stärken, abgebaute Stärken (Stärkehydrolysate), chemisch oder physikalisch modifizierte Stärken, modifizierte Cellulosen, Gummi Arabicum, Ghatti-Gummi, Traganth, Karaya, Carrageenan, Guarkernmehl, Johannisbrotkernmehl, Alginate, Pektin, Inulin oder Xanthan Gum zu nennen. Bevorzugte Stärkehydrolysate sind Maltodextrine und Dextrine.

Bevorzugte feste Trägerstoffe sind Siliciumdioxid, Gummi Arabicum und Maltodextrine, wobei hier wiederum Maltodextrine mit DE-Werten im Bereich 5 bis 20 bevorzugt sind. Es ist dabei unerheblich, welche Pflanze ursprünglich die Stärke zur Herstellung der Stärkehydrolysate geliefert hat. Geeignet und leicht verfügbar sind Mais-basierende Stärken sowie Stärken aus Tapioka, Reis, Weizen oder Kartoffeln. Die Trägerstoffe können dabei auch gleichzeitig als Fließhilfsmittel fungieren, wie beispielsweise im Falle von Siliciumdioxid.

Die bevorzugten bzw. besonders bevorzugten Trägerstoffe sind auch deshalb bevorzugt, da sie geschmacksneutral bzw. im Wesentlichen geschmacksneutral sind. Dadurch können bevorzugte erfindungsgemäße Vorprodukte in vielen verschiedenen Produkttypen und Zubereitungen eingesetzt werden, da diese Vorprodukte das sonstige sensorische Profile, insbesondere das Aroma- und Geschmacksprofil - abgesehen von den unangenehmen, zu maskierenden Geschmackseindrücken - nicht oder nicht nennenswert beeinflussen.

Bevorzugte feste Trägerstoffe sind Maltodextrine, wobei Maltodextrine mit DE-Werten im Bereich 15 bis 20 wiederum vorteilhaft sind.

Ebenfalls bevorzugt sind Mischungen von Maltodextrin und Gummi Arabicum.

Der Zersetzungsgrad der Stärke wird üblicherweise mit der Kennzahl "Dextrose-Equivalent" (DE) angegeben, welche die Grenzwerte 0 für ein langkettiges Glucosepolymer und 100 für die reine Glucose annehmen kann.

Vorzugsweise ist mindestens einer der festen Trägerstoffe nicht ausgewählt aus der Gruppe bestehend aus Zucker, Stärke und Gelatine.

Bevorzugte flüssige Trägerstoffe sind Ethanol, Isopropanol, Glycerin, 1,2-Propylenglycol, Diacetin, Triacetin und deren Mischungen.

Ebenfalls geeignete Trägerstoffe sind Trigylceride, vorzugsweise flüssige Trigylceride wie beispielsweise pflanzliche Öle. Bevorzugt sind Trigylceride mit gleichen oder verschiedenen C₆ bis C₁₀ - Fettsäureresten (MCT, medium-chain trigylcerides), da diese ebenfalls im Wesentlichen geschmacksneutral sind.

Hierin beschrieben ist daher auch ein Vorprodukt, vorzugsweise zur Herstellung einer erfindungsgemäßen Zubereitung, bevorzugt einer Zubereitung in einer der als bevorzugt gekennzeichneten Ausgestaltungen, enthaltend
- ein, zwei oder mehrere verschiedene Vanillyllignane wie oben definiert, oder
- ein, zwei oder mehrere verschiedene Salze eines, zweier oder mehrerer verschiedener Vanillyllignane wie oben definiert, oder
- ein Gemisch eines, zweier oder mehrerer verschiedener Vanillyllignane wie oben definiert mit einem, zwei oder mehreren verschiedenen Salzen eines, zweier oder mehrerer verschiedener Vanillyllignane wie oben definiert,
und einen oder mehrere zum Verzehr geeignete Trägerstoffe, vorzugsweise ausgewählt aus der Gruppe bestehend aus Ethanol, Isopropanol, Glycerin, 1,2-Propylenglycol, Diacetin, Triacetin, Maltodextrin, Gummi Arabicum, Siliciumdioxid und deren Mischungen,
sowie vorzugsweise zusätzlich ein, zwei, drei, vier, fünf oder mehrere verschiedene Aromastoffe.

Vorprodukte, die einen oder mehrere der vorstehend genannten Trägerstoffe enthalten, insbesondere die als bevorzugt gekennzeichneten festen oder flüssigen Trägerstoffe, sind auch wegen ihrer (weitgehenden) Geschmacksneutralität hervorragend geeignet, um zu erfindungsgemäßen verzehrbaren Zubereitungen weiterverarbeitet zu werden.

In einem solchen Vorprodukt ist das molare Verhältnis der Gesamtmenge glycosidisch gebundener Vanillyllignane zu der Gesamtmenge nicht glycosidisch gebundener Vanillyllignane vorzugsweise 1:1 oder kleiner, bevorzugt 1:10 oder kleiner, bevorzugt 1:50 oder kleiner, besonders bevorzugt 1:100 oder kleiner.

Ein bevorzugtes Vorprodukt umfasst ein, zwei, drei, vier, fünf oder mehrere verschiedene Aromastoffe, vorzugsweise ausgewählt aus der oben angegebenen Gruppe (A).

Ein bevorzugtes Vorprodukt umfasst ein, zwei, drei oder mehrere verschiedene weitere Substanzen zum Verändern oder Maskieren eines unangenehmen Geschmackseindrucks und/oder zum Verstärken eines angenehmen Geschmackseindrucks bzw. Geschmackskorrigenzien, vorzugsweise ausgewählt aus der oben angegebenen Gruppe (M).

In einer weiteren bevorzugten Ausgestaltung umfasst ein Vorprodukt neben ein, zwei, drei, vier, fünf oder mehrere verschiedenen Aromastoffen ausgewählt aus der oben angegebenen Gruppe (A) zusätzlich ein, zwei, drei oder mehrere verschiedene weitere Substanzen zum Verändern oder Maskieren eines unangenehmen Geschmackseindrucks und/oder zum Verstärken eines angenehmen Geschmackseindrucks bzw. Geschmackskorrigenzien ausgewählt aus der oben angegebenen Gruppe (M).

In einer besonders bevorzugten Ausführung werden die erfindungsgemäß zu verwendenden Vanillyllignane, deren Salze oder Gemische in den erfindungsgemäßen Zubereitungen in Kombination mit zumindest einer weiteren Substanz zum Verändern oder Maskieren des unangenehmen Geschmackseindrucks eines unangenehm schmeckenden Stoffes verwendet. Auf diese Weise kann eine besonders wirksame Maskierung erreicht werden. Insbesondere die Kombination der erfindungsgemäß einzusetzenden Vanillyllignane, deren Salze oder Gemische mit anderen Geschmackskorrigenzien für unangenehme, insbesondere bittere, Geschmackseindrücke ist dabei bevorzugt.

Die Erfindung betrifft ferner eine Verfahren zum
(a) Maskieren des unangenehmen, insbesondere bitteren, Geschmackseindrucks eines, zweier oder mehrerer unangenehm, insbesondere bitter, schmeckender Stoffe, und/oder
(b) Herstellen einer erfindungsgemäßen Zubereitung, vorzugsweise in einer der als bevorzugt gekennzeichneten Ausgestaltungen, mit folgendem Schritt:
   in Kontakt bringen oder Mischen des oder der unangenehm, insbesondere bitter, schmeckenden Stoffe mit
      - einem, zwei oder mehreren verschiedenen Vanillyllignanen wie oben definiert,
      oder
      - einem, zwei oder mehreren verschiedenen Salzen eines, zweier oder mehrerer verschiedener Vanillyllignane wie oben definiert,
      oder
      - einem Gemisch eines, zweier oder mehrerer verschiedener Vanillyllignane wie oben definiert mit einem, zwei oder mehreren verschiedenen Salzen eines, zweier oder mehrerer verschiedener Vanillyllignane wie oben definiert.

Dabei wird das Verfahren in der Weise durchgeführt wird, dass die Menge des oder der oben definierten Vanillyllignane bzw. des oder der oben definierten Salze bzw. des oben definierten Gemisches ausreicht, um im Vergleich mit der Vergleichszubereitung, die weder eines der oben definierten Vanillyllignane noch eines der oben definierten Salze enthält, den unangenehmen, insbesondere bitteren, Geschmackseindruck des bzw. der unangenehm, insbesondere bitter, schmeckenden Stoffe zu maskieren.

Ein erfindungsgemäß bevorzugtes Verfahren umfasst die Schritte:
(i) Herstellen eines Extrakts umfassend
   - ein, zwei oder mehrere verschiedene Vanillyllignane wie oben definiert,
   - ein, zwei oder mehrere verschiedene Salze eines, zweier oder mehrerer verschiedener Vanillyllignane wie oben definiert
   oder
   - ein Gemisch eines, zweier oder mehrerer verschiedener Vanillyllignane wie oben definiert mit einem, zwei oder mehreren verschiedenen Salzen eines, zweier oder mehrerer verschiedener Vanillyllignane wie oben definiert,
      durch Extrahieren von pflanzlichem Material;
(ii) optional Weiterverarbeiten des in Schritt (i) hergestellten Extrakts zu einem weiterverarbeiteten Produkt umfassend
   - ein, zwei oder mehrere verschiedene Vanillyllignane wie oben definiert,
   - ein, zwei oder mehrere verschiedene Salze eines, zweier oder mehrerer verschiedener Vanillyllignane wie oben definiert
   oder
   - ein Gemisch eines, zweier oder mehrerer verschiedener Vanillyllignane wie oben definiert mit einem, zwei oder mehreren verschiedenen Salzen eines, zweier oder mehrerer verschiedener Vanillyllignane wie oben definiert,
(iii) in Kontakt bringen oder Vermischen des oder der unangenehm, insbesondere bitter, schmeckenden Stoffe mit dem in Schritt (i) hergestellten Extrakts bzw. dem in Schritt (ii) hergestellten weiterverarbeiteten Produkt.

In einer weiteren Ausgestaltung betrifft die Erfindung eine Zubereitung, vorzugsweise in einer der als bevorzugt gekennzeichneten Ausgestaltungen, herstellbar nach einem erfindungsgemäßen Verfahren, vorzugsweise in der als bevorzugt gekennzeichneten Ausgestaltung.

### Beispiele

Die Beispiele dienen nur zur Verdeutlichung der Erfindung, ohne diese einzuschränken. Sofern nicht anders angegeben, beziehen sich alle Angaben auf das Gewicht.

### Anwendungsbeispiel 1: Bitter-Reduzierung einer Bitterstofflösung

Um die Reduzierung des Bitter-Eindrucks in einer Probe zu quantifizieren, wurde die Bitterkeit einer 500 ppm enthaltenden Coffeinlösung von einer Expertengruppe jeweils mit einer Probe verglichen, die 500 ppm Coffein und zusätzlich die jeweils angegebene Menge einer (hinsichtlich der Fähigkeit zur Bitter-Reduzierung) zu beurteilenden Substanz enthielt (Einstufung auf einer Skala von 1 [nicht bitter] bis 10 [extrem bitter]). Für die Auswertung, d.h. die Berechnung der Reduzierung (in %) des Bitter-Eindrucks wurden jeweils die Durchschnittswerte der Einschätzungen der Expertengruppe für die Coffeinlösung und die zu vergleichende, Coffein und eine zu beurteilende Substanz enthaltende Probe verwendet. Zusätzlich zu Coffein wurden auch andere Bitterstoffe wie Theobromin, Naringin, Chininhydrochlorid-Dihydrat und Salicin nach der gleichen Methode getestet.

| Test-Substanz | Bitterstoff | Bitter-Eindruck (Skala: 1-10) | | Reduzierung des Bitter-Eindrucks um |
|---|---|---|---|---|
| | | a) ohne Test-substanz | b) mit Test-substanz | |
| Vergleichsbeispiel: | 500 ppm Coffein | 3,9 ±1,8 | 5,2 + 2,6 | **Verstärkung** um 34% |
| 25 ppm Secoisolariciresinol | | | | |
| 25 ppm (-)-Matairesinol (1-(-)) | 500 ppm Coffein | 4,1 ± 0,9 | 2,7 ±1,77 | 35,5 %* |
| 25 ppm (-)-Hydroxymatairesinol (2-(-)) | 500 ppm Coffein | 4,4 ± 2,15 | 2,6 ± 1,72 | 41,9 %* |
| 25 ppm (+)-Lariciresinol (3-(+)) | 500 ppm Coffein | 4,7 ± 1,11 | 2,9 ± 1,41 | 38,6 %* |
| 25 ppm (-)-Arctigenin (4) | 500 ppm Coffein | 3,2 ± 1,65 | 2,8 ± 1,68 | 11,5 % |
| 25 ppm (+)-Isolariciresinol (5-(+)) | 500 ppm Coffein | 4,5 ± 2,61 | 4,1 ± 2,21 | 10,3 % |
| 25 ppm (-)-α-Conidendrin (6-(-)) | 500 ppm Coffein | 3,5 ±1,77 | 2,5 ± 0,94 | 20,8 % |
| 25 ppm (-)-Matairesinol (1-(-)) | 300 ppm Theobromin | 4,5 ± 2,01 | 3,4 ± 1,49 | 24,7 % |
| 25 ppm (-)-Matairesinol (1-(-)) | 100 ppm Naringin | 5,8 ± 2,19 | 4,9 ± 2,38 | 15,1 % |
| 25 ppm (+)-Lariciresinol (3-(+)) | 300 ppm Theobromin | 4,2 ± 1,65 | 3,7 ± 2,24 | 10,7 % |
| 25 ppm (+)-Lariciresinol (3-(+)) | 250 ppm Salicin | 6,8 ± 2,36 | 5,7 ± 2,97 | 17,1 % |
| 25 ppm (+)-Lariciresinol (3-(+)) | 5 ppm Chininhydrochlorid-Dihydrat | 3,6 ± 1,81 | 2,5 ± 1,02 | 30,9 %* |
| 25 ppm (+)-Lariciresinol (3-(+)) | 100 ppm Naringin | 6,0 ± 1,65 | 3,6 ± 1,75 | 39,5 %* |

| | | | | |
|---|---|---|---|---|
| * signifikant | | | | |

Die Lösung enthaltend Verbindung 1 wurde zudem mit folgenden sensorischen Eindrücken beschrieben: "leicht süßlich".

Die Lösung enthaltend Verbindung 2 wurde als sensorischen neutral beschrieben.

Die Lösung enthaltend Verbindung 3 wurde zudem mit folgenden sensorischen Eindrücken beschrieben: "licht süß, milchig".

Die Lösung enthaltend Verbindung 4 wurde zudem mit folgenden sensorischen Eindrücken beschrieben: "sehr neutral, milchig".

Die Lösung enthaltend Verbindung 5 wurde zudem mit folgenden sensorischen Eindrücken beschrieben: "anästhesierend, leicht holzig".

Die Lösung enthaltend Verbindung 6 wurde zudem mit folgenden sensorischen Eindrücken beschrieben: " milchig".

### Anwendungsbeispiel 2: Bitter- bzw. Adstringenz-Reduzierung einer Bitterlösung im zeitlichen Verlauf

Um die Reduzierung des Bitter- bzw. Adstringenz-Eindrucks in einer Probe über einen bestimmten Zeitverlauf zu quantifizieren, wurde die Bitterkeit bzw. Adstringenz einer Lösung enthaltend 750 ppm Epigallocatechingallat (EGCG) von einer Expertengruppe jeweils mit einer Probe verglichen, die 750 ppm Epigallocatechingallat und zusätzlich die jeweils angegebene Menge einer (hinsichtlich der Fähigkeit zur Bitter- bzw. Adstringenz-Reduzierung) zu beurteilenden Substanz enthielt, in diesem Fall Matairesinol (Verbindung 1-(-).

Die Bewertung erfolgte auf einer Skala von 1 [nicht bitter] bis 10 [extrem bitter] bzw. 1 [nicht adstringierend] bis 10 [extrem adstringierend]. Die Bewertung der Panelisten erfolgte zu festgelegten Zeitpunkten (10 Sekunden, 30 Sekunden, 50 Sekunden und 70 Sekunden nach Aufnahme der jeweiligen Probe). Die Proben wurden nacheinander nach Neutralisierung durch die Panelisten bewertet. Für die Auswertung, d.h. die Berechnung der Reduzierung (in %) des Bitter- bzw. Adstringenz-Eindrucks wurden zu jedem Messzeitpunkt jeweils die Durchschnittswerte der Einschätzungen der Expertengruppe für die Epigallocatechingallatlösung und die damit zu vergleichende Probe verwendet, die Epigallocatechingallat und die zu beurteilende Substanz (hier: Matairesinol (Verbindung 1-(-)) enthielt.

| Test-Substanz | Bitterstoff | Zeit (sek.) | % Reduzierung des Bitter-Eindrucks | % Reduzierung des Adstringenz-Eindrucks |
|---|---|---|---|---|
| 100 ppm (-)-Matairesinol (1-(-)) | 750 ppm EGCG | 0 | -15% | -11 % |
| | | 10 | -30 %* | -10 %* |
| | | 30 | -38 %* | -15 % |
| | | 50 | -33 %* | -20 % |
| | | 70 | -28 % | -23 % |

| | | | | |
|---|---|---|---|---|
| * signifikant | | | | |

### Anwendungsbeispiel 3: Aromakompositionen

| | **Aromakomposition (Einsatz in Gew.-%)** | | | | | | | |
|---|---|---|---|---|---|---|---|---|
| Inhaltsstoff | A | B | C | D | E | F | G | H |
| (-)-Hydroxymatairesinol (2-(-)) | 10 | | 65 | | | | | 35 |
| Homoeriodictyol | 5 | | 2,5 | | | | | |
| Eriodictyol | | 2,5 | | | | | | |
| Phloretin | | | | 1 | | | | |
| Hesperetin | | | | | 0,5 | | | |
| 10 Gew.-% trans-Pellitorin (z.B. nach WO 2004/043906) in 1,2-Propylenglycol / Diethylmalonat | | | | 0,25 | 0,25 | 0,5 | 0,25 | |
| Extrakt aus *Hydrangea macrophylla* enthaltend Phyllodulcin (gemäß EP 2 298 084 A1) | 2,5 | | 2,5 | | | | | 2,5 |
| Extrakt aus *Rubus suavissimus* enthaltend Rubusosid (gemäß US Provisional Application 61/333,435 (Symrise)) | | 2,5 | 2,5 | | | | | |
| 1,2-Propylenglycol | - | 20 | - | ad 100 | ad 100 | 20 | ad 100 | - |
| Glycerin | - | ad 100 | - | 20 | 20 | ad 100 | 20 | - |
| Maltodextrin | ad 100 | - | ad 100 | - | - | - | - | ad 100 |

Die Inhaltsstoffe - mit Ausnahme von 1,2-Propylenglycol, Glycerin und Maltodextrin - werden in den oben jeweils angegebenen Mengenverhältnissen miteinander gemischt und anschließend entweder in 1,2-Propylenglycol und/oder Glycerin aufgenommen bzw. durch leichtes Erwärmen darin gelöst, oder mit dem festen Trägerstoff Maltodextrin homogen vermischt.

### Anwendungsbeispiel 4: Sprühgetrocknete Zubereitung als Halbfertigware zur Aromatisierung von Fertigwaren

| Inhaltsstoff | Einsatz in Gew.-% | | |
|---|---|---|---|
| Zubereitung | A | B | C |
| Trinkwasser | 60,8 % | 60,8 % | 60,8 % |
| Maltodextrin aus Weizen | 24,3 % | 24,3 % | 24,3 % |
| Gummi Arabicum | 6,1 % | 6,1 % | 6,1 % |
| (-)-Matairesinol, Verbindung 1-(-) | 8,8 % | --- | 4,4 % |
| (-)-Hydroxymatairesinol, Verbindung 2-(-) | --- | 8,8 % | 4,4 % |

Das Trinkwasser wird in einem Behälter vorgelegt und das Maltodextrin und das Gummi Arabicum darin gelöst. Anschließend wird Verbindung 1 und/oder Verbindung 2 mit einem Turrax in die Trägerstofflösung emulgiert. Die Temperatur der Sprühlösung sollte 30°C nicht überschreiten. Das Gemisch wird dann sprühgetrocknet (Solltemperatur Eingang: 185 - 195°C, Solltemperatur Ausgang: 70 - 75°C). Die sprühgetrocknete Halbfertigware enthält ca. 18 - 22 % der Verbindungen 1 und/oder 2.

### Anwendungsbeispiel 5: Tee-Zubereitung

| Inhaltsstoff | Einsatz in Gew.-% | | |
|---|---|---|---|
| Zubereitung | A | B | C |
| schwarzer Tee, Ceylon, Blattware | 94 % | --- | --- |
| grüner Tee, China, Blattware | --- | 92 % | --- |
| Mate Tee, Peru, Blattware | --- | --- | 95 % |
| Halbfertigware A aus Anwendungsbeispiel 2 | 6 % | --- | --- |
| Halbfertigware B aus Anwendungsbeispiel 3 | --- | 8 % | --- |
| Halbfertigware C aus Anwendungsbeispiel 3 | --- | --- | 5% |

Der Tee und die Halbfertigware werden gemischt und in Teebeutel aus Filterpapier abgepackt. Zur Anwendung wird ein Teebeutel in 100 - 250 ml kochendes Wasser aufgegossen und 2 - 5 min ziehen gelassen.

### Anwendungsbeispiel 6: Schwarztee-Zubereitung

| Inhaltsstoff | Einsatz in Gew.-% |
|---|---|
| schwarzer Tee, Ceylon, Blattware | 94 |
| Halbfertigware A aus Anwendungsbeispiel 3 | 3 |
| Halbfertigware B aus Anwendungsbeispiel 3 | 3 |

Der Tee und die Halbfertigwaren werden gemischt und in Teebeutel aus Filterpapier abgepackt. Zur Anwendung wird ein Teebeutel in 100 - 250 ml kochendes Wasser aufgegossen und 2 - 5 min ziehen gelassen.

### Anwendungsbeispiel 7: Eistee-Getränk (Schwarztee)

Die Verbindungen (-)-Matairesinol (Verbindung 1-(-)), bzw. (-)-Hydroxymatairesinol (Verbindung 2-(-)) wurden jeweils 10 % in Ethanol vorgelöst. Schwarztee-Extrakt wurde in Wasser gelöst und zusammen mit Zucker, einer Aromazubereitung (Pfirsichgeschmack), sowie den ethanolischen Lösungen der Verbindungen 1-(-) (Zubereitung A), bzw. 2-(-) (Zubereitung B) in einem Becherglas verrührt.

| Inhaltsstoff | Einsatz in Gew.-% | |
|---|---|---|
| Zubereitung | A | B |
| Schwarztee-Extrakt | 1,4 % | 1,4 % |
| Wasser | 89,5 % | 89,5 % |
| Aromazubereitung (Typ Pfirsich) | 0,65 % | 0,65 % |
| Zucker | 7 % | 7 % |
| Citronensäure (krist.) | 1,2 % | 1,2 % |
| Ascorbinsäure | 0,2 % | 0,2 % |
| (-)-Matairesinol (Verbindung 1-(-)) in Ethanol (10 %) | 0,05 % | --- |
| (-)-Hydroxymatairesinol (Verbindung 2-(-)) in Ethanol (10 %) | --- | 0,05 % |

### Anwendungsbeispiel 8: Eistee-Getränk (Grüntee, zuckerreduziert)

Die Verbindungen (-)-Matairesinol (Verbindung 1-(-)), bzw. (-)-Hydroxymatairesinol (Verbindung 2-(-)) wurden jeweils 10 % in Ethanol vorgelöst. Grüntee-Extrakt wurde in Wasser gelöst und zusammen mit Zucker, sowie dem Süßstoff Saccharin bzw. Rebaudiosid A, einer Aromazubereitung (Zitronengeschmack), sowie den ethanolischen Lösungen der Verbindungen 1-(-) (Zubereitung A), bzw. 2-(-) (Zubereitung B) in einem Becherglas verrührt.

| Inhaltsstoff | Einsatz in Gew.-% | |
|---|---|---|
| Zubereitung | A | B |
| Grüntee-Extrakt | 1,4 % | 1,4 % |
| Wasser | 92,95 % | 93,03 % |
| Aromazubereitung (Typ Zitrone) | 0,65 % | 0,65 % |
| Zucker | 3,45 % | 3,45 % |
| Süßstoff Saccharin | 0,1 % | --- |
| Süßstoff Rebaudiosid A | --- | 0,02 % |
| Citronensäure (krist.) | 1,2 % | 1,2 % |
| Ascorbinsäure | 0,2 % | 0,2 % |
| (-)-Matairesinol (Verbindung 1-(-)) in Ethanol (10 %) | 0,05 % | --- |
| (-)-Hydroxymatairesinol (Verbindung 2-(-)) in Ethanol (10 %) | --- | 0,05 % |

### Anwendungsbeispiel 9: Eistee-Getränk (Schwarztee, zuckerfrei)

Die Verbindungen (-)-Matairesinol (Verbindung 1-(-)), bzw. (-)-Hydroxymatairesinol (Verbindung 2-(-)) wurden jeweils in Ethanol vorgelöst. Schwarztee-Extrakt wurde in Wasser gelöst und zusammen mit dem Süßstoff Rebaudiosid A, einer Aromazubereitung (Zitronengeschmack), sowie den ethanolischen Lösungen der Verbindungen 1-(-) (Zubereitung A), bzw. 2-(-) (Zubereitung B) in einem Becherglas verrührt.

| Inhaltsstoff | Einsatz in Gew.-% | |
|---|---|---|
| Zubereitung | A | B |
| Schwarztee-Extrakt | 1,4 % | 1,4 % |
| Wasser | 96,465 % | 96,465 % |
| Saccharin | 0,035 % | 0,035 % |
| Aromazubereitung (Typ Zitrone) | 0,65 % | 0,65 % |
| Citronensäure (kristallin) | 1,2 % | 1,2 % |
| Ascorbinsäure | 0,2% | 0,2% |
| (-)-Matairesinol (Verbindung 1-(-)), 10% in Ethanol | 0,05 % | --- |
| (-)-Hydroxymatairesinol (Verbindung 2-(-)), 10% in Ethanol | --- | 0,05% |

### Anwendungsbeispiel 10: Lösliches Cappuccino-Getränk

Die angegebenen Rohstoffe werden vermischt. Jeweils 12,5 g des hergestellten Instant-Cappuccino-Pulvers werden in 150 ml heißem Wasser gelöst.

| Inhaltsstoff | Einsatz in Gew.-% | |
|---|---|---|
| Zubereitung | A | B |
| Kaffee-Extrakt, sprühgetrocknet | 14,0 | 16,0 |
| Zucker | 28,3 | 25,3 |
| Fettpulver | 18,2 | 18,2 |
| Kaffeeweißer, schäumend | Ad 100 | Ad 100 |
| Hydrokolloide/ Emulgatoren | 1,8 | 1,8 |
| Lactose | 4,7 | 4,7 |
| Halbfertigware A aus Anwendungsbeispiel 3 | 3,0 | --- |
| Halbfertigware B aus Anwendungsbeispiel 3 | --- | 6,0 |

### Anwendungsbeispiel 11: Soja-Getränk

Die Verbindungen Matairesinol (Verbindung 1-(-)), bzw. Hydroxymatairesinol (Verbindung 2-(-)) wurden jeweils in Ethanol vorgelöst und zu einer Sojamilch aus einem lokalen Supermarkt hinzugefügt. Die Mischung wurde zusammen mit dem Milcharoma im Becherglas verrührt.

| Inhaltsstoff | Einsatz in Gew.-% | | | |
|---|---|---|---|---|
| Zubereitung | A | B | C | D |
| Sojamilch (lokaler Supermarkt, nicht aromatisiert, ungesüßt) | 96,75 % | 99,725 % | 98,33 % | 97,65 % |
| Vanillearoma | 0,1 % | 0,1 % | | 0,05 % |
| Milcharoma | | | 0,1 % | 0,05 % |
| Saccharose | 3% | | 1,5 % | 2% |
| Sucralose | | 0,025 % | 0,01 % | |
| Na-Saccharin | | | 0,01 % | |
| Emulgum | 0,1 % | 0,1 % | | 0,1 % |
| (-)-Matairesinol (Verbindung 1-(-)), 10 % in Ethanol | 0,05 % | | 0,05 % | |
| (-)-Hydroxymatairesinol (Verbindung 2-(-)), 10 % in Ethanol | | 0,05 % | | 0,05 % |
| Hesperetin, 5 % in Ethanol | | | | 0,1 % |

### Anwendungsbeispiel 12: Soja-Getränk (mit-γ-Aminobuttersäure)

γ-Aminobuttersäure wurde in Wasser und (-)-Hydroxymatairesinol (Verbindung 2-(-)) in Ethanol vorgelöst und zu einer Sojamilch aus einem lokalen Supermarkt hinzugefügt. Die resultierende Mischung wurde zusammen mit dem Milcharoma im Becherglas verrührt.

| Inhaltsstoff | Einsatz in Gew.-% |
|---|---|
| Sojamilch (lokaler Supermarkt) | 99,75 % |
| Milcharoma | 0,1 % |
| (-)-Hydroxymatairesinol (Verbindung 2-(-)), 10 % in Ethanol | 0,05 % |
| γ-Aminobuttersäure (1 % in Wasser) | 0,1 % |

### Anwendungsbeispiel 13: Verwendung in einem Grapefruitsaft

(-)-Hydroxymatairesinol (Verbindung 2-(-)) wurde in Ethanol vorgelöst und zu einem Grapefruitsaft aus einem lokalen Supermarkt hinzugefügt. Die resultierende Mischung wurde in einem Becherglas verrührt.

| Inhaltsstoff | Einsatz in Gew.-% |
|---|---|
| Grapefruit-Saft (lokaler Supermarkt) | 99,95 % |
| (-)-Hydroxymatairesinol (Verbindung 2-(-)), 10 % in Ethanol | 0,05 % |

### Anwendungsbeispiel 14: Bittere Schokolade

Eine bittere Schokolade wurde aus folgenden Rohstoffen hergestellt und anschließend in rechteckigen Formen ausgegossen:

| Inhaltsstoff | Einsatz in Gew.-% | Einsatz in Gew.-% |
|---|---|---|
| Kakaomasse | 55,55 | Ad 100 |
| Kakaobutter | 11,70 | 11,70 |
| Zucker | 29,50 | 29,50 |
| Magermilch | 3,00 | 3,00 |
| Lecithin | 0,2 | 0,2 |
| Vanillin | 0,035 | 0,035 |
| (-)-Matairesinol (Verbindung 1-(-)), 10 % in Ethanol | --- | 0,05 |
| (-)-Hydoxymatairesinol (Verbindung 2-(-)), 10 % in Ethanol | 0,05 | --- |

### Anwendungsbeispiel 15: Kaugummi

| Teil | Inhaltsstoff | Einsatz in Gew.-% |
|---|---|---|
| A | Kaugummibase, Company "Jagum T" | 30,00 |
| B | Sorbit, pulverisiert | 39,00 |
| | Isomalt^{®} (Palatinit GmbH) | 9,50 |
| | Xylit | 2,00 |
| | Mannit | 3,00 |
| | Aspartam^{®} | 0,10 |
| | Acesulfam^{®} K | 0,10 |
| | Emulgum^{®} (Colloides Naturels, Inc.) | 0,30 |
| C | Sorbitol, 70% | 14,00 |
| | Glycerin | 1,00 |
| D | Aroma, enthaltend 1 % (-)-Hydroxymatairesinol (Verbindung 2), bezogen auf das Gesamtgewicht des Aromas | 1,00 |

Teile A bis D werden gemischt und intensiv geknetet. Die Rohmasse kann z.B. in Form von dünnen Streifen zu verzehrsfertigen Kaugummis verarbeitet werden.

### Anwendungsbeispiel 16: Zahnpasta

| Teil | Inhaltsstoff | Einsatz in Gew.-% |
|---|---|---|
| A | demineralisiertes Wasser | 22,00 |
| | Sorbitol (70%) | 45,00 |
| | Solbrol^{®} M, Natriumsalz (Bayer AG, p-Hydroxybenzoesäurealkylester) | 0,15 |
| | Trinatriumphosphat | 0,10 |
| | Saccharin, 450 fach | 0,20 |
| | Natriummonofluorphosphat | 1,12 |
| | Polyethylenglycol 1500 | 5,00 |
| B | Sident 9 (abrasives Siliciumdioxid) | 10,00 |
| | Sident 22 S (verdickendes Siliciumdioxid) | 8,00 |
| | Natriumcarboxymethylcellulose | 0,90 |
| | Titandioxid | 0,50 |
| C | demineralisiertes Wasser | 4,53 |
| | Natriumlaurylsulfat | 1,50 |
| D | Aroma, enthaltend 1 % (-)-Matairesinol (Verbindung 1-(-)), bezogen auf das Gesamtgewicht des Aromas | 1,00 |

Die Inhaltsstoffe der Teile A und B werden jeweils für sich vorgemischt und zusammen unter Vakuum bei 25 - 30°C 30 min gut verrührt. Teil C wird vorgemischt und zu A und B gegeben; D wird hinzugefügt und die Mischung unter Vakuum bei 25 - 30°C 30 min gut verrührt. Nach Entspannung ist die Zahnpasta fertig und kann abgefüllt werden.

## Patentansprüche

1. Verwendung eines, zweier oder mehrerer verschiedener Vanillyllignane ausgewählt aus der Gruppe bestehend aus
(1)Matairesinol (3,4-Bis[(4-hydroxy-3-methoxyphenyl)methyl]oxolan-2-on);
(2)7-Hydroxymatairesinol (4-[Hydroxy-(4-hydroxy-3-methoxyphenyl)methyl]-3-[(4-hydroxy-3-methoxyphenyl)methyl]oxolan-2-on);
(3)Lariciresinol (4-[[5-(4-Hydroxy-3-methoxyphenyl)-4-(hydroxymethyl)-oxolan-3-yl]methyl]- 2-methoxyphenol);
(4)Arctigenin (4-[(3,4-Dimethoxyphenyl)methyl]-3-[(4-hydroxy-3-methoxyphenyl) methyl]oxolan-2-on);
(5)Isolariciresinol (1,2,3,4-Tetrahydro-7-hydroxy-1-(4-hydroxy-3-methoxyphenyl)-6-methoxy-2,3-naphthalendimethanol);
(6)α-Conidendrin (7-Hydroxy-9-(4-hydroxy-3-methoxyphenyl)-6-methoxy-3a,4,9,9a-tetrahydro-1 H-benzo[f][2]benzofuran-3-on);
(7)Nortrachelogenin (3-Hydroxy-3,4-bis[(4-hydroxy-3-methoxyphenyl)methyl]-oxolan-2-on);
(8) Pinoresinol (4-[6-(4-Hydroxy-3-methoxyphenyl)-1,3,3a,4,6,6a-hexahydrofuro [3,4-c] furan-3-yl]-2-methoxyphenol);
(9)5-Hydroxylariciresinol (3,5-Bis[(4-hydroxy-3-methoxy-phenyl)methyl]-4-(hydroxylmethyl)tetrahydrofurn-2-ol);
(10) 2-Hydroxyarctigenin (4-[(3,4-Dimethoxyphenyl)-hydroxy-methyl]-3-[(4-hydroxy-3-methoxy-phenyl)methyl]tetrahydrofuran-2-on);
(11) Trachelogenin (3-Hydroxy-3,4-bis[(4-hydroxy-3-methoxy-phenyl)methyl]tetrahydrofuran-2-on);
(12) Thujastandin (3,4-Dihydroxy-3,4-bis[(4-hydroxy-3-methoxyphenyl)methyl]tetrahydrofuran-2-on);
(13) Busaliol (4-[[Hydroxy-[4-(4-hydroxy-3-phenyl)methyl]-tetrahydrofuran-3-yl]-methyl]-2,6-dimethoxyphenol);
(14) Shonanin (4-[[Hydroxy-(4-hydroxy-3-methoxyphenyl)methyl]tetrahydrofuran-3-yl]methyl]-2-methoxyphenol);
(15) Liovil (4-[Hydroxy-[4-[hydroxy-(4-hydroxy-3-methoxy-phenyl)methyl]tetrahydrofuran-3-yl]methyl]-2-methoxyphenol);
(16) Isoliovil (Todolactol A) (4-[Hydroxy-(4-hydroxy-3-methoxyphenyl)methyl)-3-[4-hydroxy-3-methoxyphenyl)methyl]tetrahydrofuran-2-ol);
(17) Koreanol (4-[[4-[Hydroxy-(4-hydroxy-3-methoxyphenyl)methyl]-2-methoxy-tetrahydrofuran-3-yl]methyl]-2-methoxyphenol);
(18) Taxiresinol (4-[4-[(4-Hydroxy-3-methoxyphenyl)methyl]-3-(hydroxymethyl]tetrahydrofuran-2-yl]benzen-1,2-diol);
(19) Phillygenol (4-[6-(3,4-Dimethoxyphenyl)-1,3,3a,4,6,6a-hexahydrofuro[3,4-c] furan-3-yl]2-methoxyphenol);
(20) Guaiaretinsäure (4-[E-4-(4-Hydroxy-3-methoxyphenyl)-2,3-dimethyl-but-3-enyl]-2-methoxyphenol);
(21) Gnidifolin (3-[(2,4-Dihydroxy-3-methoxyphenyl)methyl]-4-[(4-hydroxy-3-methoxyphenyl)methyl]tetrahydrofuran-2-on);
(22) Fragransin A₂ (4-[5-(4-Hydroxy-3-methoxyphenyl)-3,4-dimethyl-tetrahydrofuran-2-yl]-2-methoxyphenol);
(23) Fragransin C_{3b} (4-[5-(4-Hydroxy-3-methoxyphenyl)-3,4-dimethyl-tetrahydrofuran-2-yl]-2,6-dimethoxyphenol);
(24) Astralignin (4-[5-(3,4-Dimethoxyphenyl)-3,4-dimethyl-tetrahydrofuran-2-yl]-2-methoxyphenol);
(25) Massoniresinol (2-(4-Hydroxy-3-methoxyphenyl)-4-[(4-hydroxy-3-methoxy-phenyl)methyl]-3-(hydroxymethyl)tetrahydrofuran-3,4-diol);
(26) Olivil (5-(4-Hydroxy-3-methoxyphenyl)-3-[(4-hydroxy-3-methoxyphenyl)methyl]-4-(hydroxymethyl)tetrahydrofuran-3-ol);
(27) Isoolivil (Cycloolivil) (4-(4-Hydroxy-3-methoxyphenyl)-2,3-bis(hydroxymethyl)-7-methoxy-tetralin-2,6-diol);
(28) Neo-Olivil (4-[5-(4-Hydroxy-3-methoxphenyl)-3,4-bis(hydroxymethyl)-tetrahydrofuran-2-yl]-2-methoxyphenol);
(29) Vitedoin (6-Hydroxy-4-(4-hydroxy-3-methoxyphenyl)-3-(hydroxymethyl)-5-methoxy-3,4-dihydronaphthalen-2-carbaldehyd); und
(30) Vitrofolal E (6-Hydroxy-4-(4-hydroxy-3-methoxyphenyl)-7-methoxy-naphthalen-2-carbaldehyd),
oder
eines, zweier oder mehrerer verschiedener Salze eines, zweier oder mehrerer verschiedener Vanillyllignane ausgewählt aus der Gruppe wie oben definiert
oder
eines Gemisches eines, zweier oder mehrerer verschiedener Vanillyllignane ausgewählt aus der Gruppe wie oben definiert mit einem, zwei oder mehreren verschiedenen Salzen eines, zweier oder mehrerer verschiedener Vanillyllignane ausgewählt aus der Gruppe wie oben definiert
zum Maskieren des unangenehmen Geschmackseindrucks, vorzugsweise des bitteren, adstringierenden und/oder metallischen Geschmackseindrucks, eines unangenehm schmeckenden Stoffes, vorzugsweise eines Bitterstoffes.

2. Verwendung nach Anspruch 1, wobei ein, zwei, mehrere oder sämtliche der eingesetzten Vanillyllignane jeweils ausgewählt sind aus der Gruppe bestehend aus
(1)Matairesinol (3,4-Bis[(4-hydroxy-3-methoxyphenyl)methyl]oxolan-2-on);
(2)7-Hydroxymatairesinol (4-[Hydroxy-(4-hydroxy-3-methoxyphenyl)methyl]-3-[(4-hydroxy-3-methoxyphenyl)methyl]oxolan-2-on);
(3)Lariciresinol (4-[[5-(4-Hydroxy-3-methoxyphenyl)-4-(hydroxymethyl)-oxolan-3-yl]methyl]- 2-methoxyphenol);
(4)Arctigenin (4-[(3,4-Dimethoxyphenyl)methyl]-3-[(4-hydroxy-3-methoxy-phenyl)methyl]oxolan-2-on);
(5)Isolariciresinol (1,2,3,4-Tetrahydro-7-hydroxy-1-(4-hydroxy-3-methoxyphenyl)-6-methoxy-2,3-naphthalendimethanol);
(6)α-Conidendrin (7-Hydroxy-9-(4-hydroxy-3-methoxyphenyl)-6-methoxy-3a,4,9,9a-tetrahydro-1H-benzo[f][2]benzofuran-3-on);
(7)Nortrachelogenin (3-Hydroxy-3,4-bis[(4-hydroxy-3-methoxyphenyl)methyl]-oxolan-2-on);
(8)Pinoresinol (4-[6-(4-Hydroxy-3-methoxyphenyl)-1,3,3a,4,6,6a-hexahydrofuro [3,4-c] furan-3-yl]-2-methoxyphenol).
und deren Salzen.

3. Verwendung nach Anspruch 1 oder 2, wobei eine, zwei, mehrere oder sämtliche der eingesetzten Vanillyllignane jeweils ausgewählt sind aus der Gruppe bestehend aus
(1-(-)) (-)-Matairesinol ((3R,4R)-3,4-Bis[(4-hydroxy-3-methoxyphenyl)methyl] oxolan-2-on);
(2-(-)) (-)-7-Hydroxymatairesinol ((3R,4R)-4-[(S)-Hydroxy-(4-hydroxy-3-methoxy-phenyl)methyl]-3-[(4-hydroxy-3-methoxyphenyl)methyl]oxolan-2-on);
(3-(+) (+)-Lariciresinol (4-[[(3R,4R,5S)-5-(4-Hydroxy-3-methoxyphenyl)-4-(hydroxy-methyl)-oxolan-3-yl]methyl]- 2-methoxyphenol);
(4-(-)) (-)-Arctigenin ((3R,4R)-4-[(3,4-Dimethoxyphenyl)methyl]-3-[(4-hydroxy-3-methoxy-phenyl)methyl]oxolan-2-on);
(5-(+)) (+)-Isolariciresinol (1,2,3,4-Tetrahydro-7-hydroxy-1-(4-hydroxy-3-methoxy-phenyl)-6-methoxy-2,3-naphthalendimethanol);
(6-(-)) (-)-α-Conidendrin ((3aR,9R,9aS)-7-Hydroxy-9-(4-hydroxy-3-methoxyphenyl)-6-methoxy-3a,4,9,9a-tetrahydro-1H-benzo[f][2]benzofuran-3-on);
(7-(-)) (-)-Nortrachelogenin ((3S,4S)-3-Hydroxy-3,4-bis[(4-hydroxy-3-methoxyphenyl)methyl]-oxolan-2-on);
(8-(+)) (+)-Pinoresinol (4-[(3S,3aR,6S,6aR)-6-(4-Hydroxy-3-methoxyphenyl)-1,3,3a,4,6,6a-hexahydrofuro[3,4-c]furan-3-yl]-2-methoxyphenol),
und deren Salzen.

4. Verwendung eines, zweier oder mehrerer verschiedener Salze eines, zweier oder mehrerer verschiedener Vanillyllignane wie in einen der vorhergehenden Ansprüche definiert
oder
eines Gemischs eines, zweier oder mehrerer verschiedener Vanillyllignane wie in einen der vorhergehenden Ansprüche definiert mit einem, zwei oder mehreren verschiedenen Salzen eines, zweier oder mehrerer verschiedener Vanillyllignane wie in einen der vorhergehenden Ansprüche definiert,
wobei das bzw. die Gegenkationen des bzw. eines, mehrerer oder sämtlicher der Salze vorzugsweise ausgewählt ist bzw. sind aus der Gruppe bestehend aus Na⁺, K⁺, NH₄⁺, Ca²⁺, Mg²⁺, Al³⁺ und Zn²⁺.

5. Verwendung eines aus pflanzlichem Material, vorzugsweise mittels Extraktion und gegebenenfalls anschließender Hydrolyse, erhältlichen oder erhaltenen Produktes umfassend
ein, zwei oder mehrere verschiedene Vanillyllignane wie in einem der Ansprüche 1 bis 3 definiert,
ein, zwei oder mehrere verschiedene Salze eines, zweier oder mehrerer verschiedener Vanillyllignane wie in einem der Ansprüche 1 bis 4 definiert
oder
ein Gemisch eines, zweier oder mehrerer verschiedener Vanillyllignane wie in einem der Ansprüche 1 bis 3 definiert mit einem, zwei oder mehreren verschiedenen Salzen eines, zweier oder mehrerer verschiedener Vanillyllignane wie in einem der Ansprüche 1 bis 4 definiert,
zum Maskieren des unangenehmen Geschmackseindrucks, vorzugsweise des bitteren, adstringierenden und/oder metallischen Geschmackseindrucks, eines unangenehm schmeckenden Stoffes, vorzugsweise eines Bitterstoffes.

6. Verwendung nach einem der vorangehenden Ansprüche in Kombination mit einer, zwei oder mehreren weiteren Substanzen zum Verändern oder Maskieren des unangenehmen, insbesondere bitteren, Geschmackseindrucks eines unangenehm schmeckenden Stoffes, vorzugsweise eines Bitterstoffes.

7. Zubereitung ausgewählt aus der Gruppe bestehend aus
(1)der Ernährung, der Nahrungsergänzung, der Mundpflege oder dem Genuss dienenden Zubereitungen,
(2)kosmetischen Zubereitungen, vorzugsweise zur Applikation im Bereich des Kopfes,
(3)zur oralen Aufnahme bestimmten pharmazeutischen Zubereitungen,
(4)Zwischenprodukte zur Herstellung einer der in (1) bis (3) genannten Zubereitungen enthaltend
- einen, zwei oder mehrere unangenehm, insbesondere bitter, schmeckende Stoffe
sowie
- ein, zwei oder mehrere verschiedene Vanillyllignane wie in einem der Ansprüche 1 bis 3 definiert, oder
- ein, zwei oder mehrere verschiedene Salze eines, zweier oder mehrerer verschiedener Vanillyllignane wie in einem der Ansprüche 1 bis 4 definiert, oder
- ein Gemisch eines, zweier oder mehrerer verschiedener Vanillyllignane wie in einem der Ansprüche 1 bis 3 definiert mit einem, zwei oder mehreren verschiedenen Salzen eines, zweier oder mehrerer verschiedener Vanillyllignane wie in einem der Ansprüche 1 bis 4 definiert,
wobei die Menge des bzw. der unangenehm, insbesondere bitter, schmeckenden Stoffe ausreicht, um in einer Vergleichszubereitung, die weder eines der oben definierten Vanillyllignane noch eines der oben definierten Salze enthält, aber ansonsten identisch zusammengesetzt ist, als unangenehmer, insbesondere bitterer, Geschmack wahrgenommen zu werden,
und
die Menge des oder der oben definierten Vanillyllignane bzw. des oder der oben definierten Salze bzw. des oben definierten Gemisches ausreicht, um im Vergleich mit der Vergleichszubereitung den unangenehmen, insbesondere bitteren, Geschmackseindruck des bzw. der unangenehm, insbesondere bitter, schmeckenden Stoffe zu maskieren,
mit der Maßgabe, dass vorzugsweise zumindest einer der in der Zubereitung enthaltenen unangenehm, insbesondere bitter, schmeckenden Stoffe nicht Secoisolariciresinol ist.

8. Zubereitung nach Anspruch 7, **dadurch gekennzeichnet, dass**
in der Zubereitung das molare Verhältnis der Gesamtmenge glycosidisch gebundener Vanillyllignane zu der Gesamtmenge nicht glycosidisch gebundener Vanillyllignane 1:1 oder kleiner ist, bevorzugt 1:10 oder kleiner, bevorzugt 1:50 oder kleiner, besonders bevorzugt 1:100 oder kleiner.

9. Zubereitung nach Anspruch 7 oder 8, **dadurch gekennzeichnet, dass**
der oder einer der unangenehm schmeckenden Stoffe ein Bitterstoff ist, der in einer Konzentration vorliegt, die mindestens 2 relativen Bitterequivalenten entspricht,
oder
mehrere oder sämtliche der unangenehm schmeckenden Stoffe Bitterstoffe sind, wobei die Gesamtkonzentration aller Bitterstoffe mindestens 2 relativen Bitterequivalenten entspricht.

10. Zubereitung nach einem der Ansprüche 7 bis 9, enthaltend
ein, zwei oder mehrere verschiedene Vanillyllignane wie in einem der Ansprüche 1 bis 3 definiert,
und/oder
ein, zwei oder mehrere verschiedene Salze eines, zweier oder mehrerer verschiedener Vanillyllignane wie in einem der Ansprüche 1 bis 4 definiert
in einer Gesamtmenge der oben definierten Vanillyllignane und der oben definierten Salze von 10 bis weniger als 300 mg/kg, bevorzugt von 12 bis 100 mg/kg, bezogen auf das Gesamtgewicht der Zubereitung,
mit der Maßgabe, dass vorzugsweise zumindest einer der in der Zubereitung enthaltenen unangenehm, insbesondere bitter, schmeckenden Stoffe nicht Secoisolariciresinol ist.

11. Zubereitung nach einem der Ansprüche 7 bis 10, **dadurch gekennzeichnet, dass**
die Menge des oder der oben definierten Vanillyllignane bzw. des oder der oben definierten Salze bzw. des oben definierten Gemisches ausreicht, um den unangenehmen, insbesondere bitteren, Geschmackseindruck des bzw. der unangenehm, insbesondere bitter, schmeckenden Stoffe so zu maskieren, dass er dem Geschmackseindruck einer Vergleichszubereitung entspricht, die (i) weder eines der oben definierten Vanillyllignane noch eines der oben definierten Salze sowie (ii) 90 Gew.-% oder weniger, vorzugsweise 80 Gew.-% oder weniger, bevorzugt 75 Gew.-% oder weniger, besonders bevorzugt 70 Gew.-% oder weniger des bzw. der unangenehm, insbesondere bitter, schmeckenden Stoffe enthält, aber ansonsten identisch zusammengesetzt ist,
und/oder
der oder einer der unangenehm schmeckenden Stoffe ein Bitterstoff ist, der in einer Konzentration von zumindest dem zweifachen seines Bitterschwellenwerts, vorzugsweise im Bereich des zwei- bis tausendfachen seines Bitterschwellenwerts, vorliegt.

12. Zubereitung nach einem der Ansprüche 7 bis 11, **dadurch gekennzeichnet, dass**
die Zubereitung einen, zwei oder mehrere der folgenden Bitterstoffe enthält:
- Catechine und Proanthocyanidine in einer Gesamtmenge von zumindest 0,05 Gew.-%, vorzugsweise von zumindest 0,1 Gew.-%, bevorzugt im Bereich von 0,2 Gew.-% bis 1 Gew.-%,
- Coffein und Theobromin in einer Gesamtmenge von zumindest 0,05 Gew.-%, vorzugsweise von zumindest 0,25 Gew.-%, bevorzugt von zumindest 0,5 Gew.-%, weiter bevorzugt im Bereich von 1 Gew.-% bis 2,5 Gew.-%,
- Naringin in einer Konzentration von zumindest 0,025 Gew.-%, vorzugsweise von zumindest 0,1 Gew.-%, bevorzugt im Bereich von 0,2 Gew.-% bis 2 Gew.-%,
- Süßstoffe in einer Gesamtmenge von zumindest 0,005 Gew.-%, vorzugsweise von zumindest 0,05 Gew.-%, bevorzugt im Bereich von 0,1 Gew.-% bis 2 Gew.-%,
jeweils bezogen auf das Gesamtgewicht der Zubereitung.

13. Verfahren zum (a) Maskieren des unangenehmen, insbesondere bitteren, Geschmackseindrucks eines, zweier oder mehrerer unangenehm, insbesondere bitter, schmeckender Stoffe und/oder (b) Herstellen einer Zubereitung nach einem der Ansprüche 7 bis 12, mit folgendem Schritt:
in Kontakt bringen oder Mischen des oder der unangenehm, insbesondere bitter, schmeckenden Stoffe mit
- einem, zwei oder mehreren verschiedenen Vanillyllignanen wie in einem der Ansprüche 1 bis 4 definiert,
oder
- einem, zwei oder mehreren verschiedenen Salzen eines, zweier oder mehrerer verschiedener Vanillyllignane wie in einem der Ansprüche 1 bis 4 definiert,
oder
- einem Gemisch eines, zweier oder mehrerer verschiedener Vanillyllignane wie in einem der Ansprüche 1 bis 4 definiert mit einem, zwei oder mehreren verschiedenen Salzen eines, zweier oder mehrerer verschiedener Vanillyllignane wie in einem der Ansprüche 1 bis 4 definiert.

14. Verfahren nach Anspruch 13, umfassend die Schritte
(i) Herstellen eines Extrakts umfassend
- ein, zwei oder mehrere verschiedene Vanillyllignane wie in einem der Ansprüche 1 bis 3 definiert,
- ein, zwei oder mehrere verschiedene Salze eines, zweier oder mehrerer verschiedener Vanillyllignane wie in einem der Ansprüche 1 bis 4 definiert
oder
- ein Gemisch eines, zweier oder mehrerer verschiedener Vanillyllignane wie in einem der Ansprüche 1 bis 3 definiert mit einem, zwei oder mehreren verschiedenen Salzen eines, zweier oder mehrerer verschiedener Vanillyllignane wie in einem der Ansprüche 1 bis 4 definiert,
durch Extrahieren von pflanzlichem Material;
(ii) optional Weiterverarbeiten des in Schritt (i) hergestellten Extrakts zu einem weiterverarbeiteten Produkt umfassend
- ein, zwei oder mehrere verschiedene Vanillyllignane wie in einem der Ansprüche 1 bis 3 definiert,
- ein, zwei oder mehrere verschiedene Salze eines, zweier oder mehrerer verschiedener Vanillyllignane wie in einem der Ansprüche 1 bis 4 definiert
oder
- ein Gemisch eines, zweier oder mehrerer verschiedener Vanillyllignane wie in einem der Ansprüche 1 bis 3 definiert mit einem, zwei oder mehreren verschiedenen Salzen eines, zweier oder mehrerer verschiedener Vanillyllignane wie in einem der Ansprüche 1 bis 4 definiert,
(iii) in Kontakt bringen oder Vermischen des oder der unangenehm, insbesondere bitter, schmeckenden Stoffe mit dem in Schritt (i) hergestellten Extrakt bzw. dem in Schritt (ii) hergestellten weiterverarbeiteten Produkt.

## Claims

1. Use of one, two or several different vanillyl lignans selected from the group consisting of
(1) Matairesinol (3,4-Bis[(4-hydroxy-3-methoxyphenyl)methyl]oxolan-2-one);
(2) 7-Hydroxymatairesinol (4-[Hydroxy-(4-hydroxy-3-methoxyphenyl)methyl]-3-[(4-hydroxy-3-methoxyphenyl)methyl]oxolan-2-one);
(3) Lariciresinol (4-[[5-(4-Hydroxy-3-methoxyphenyl)-4-(hydroxymethyl)-oxolan-3-yl]methyl]-2-methoxyphenol);
(4) Arctigenin (4-[(3,4-Dimethoxyphenyl)methyl]-3-[(4-hydroxy-3-methoxyphenyl) methyl]oxolan-2-one);
(5) Isolariciresinol (1,2,3,4-Tetrahydro-7-hydroxy-1-(4-hydroxy-3-methoxyphenyl)-6-methoxy-2,3-naphthalenedimethanol);
(6) α-Conidendrin (7-Hydroxy-9-(4-hydroxy-3-methoxyphenyl)-6-methoxy-3a,4,9,9a-tetrahydro-1H-benzo[f][2]benzofuran-3-one);
(7) Nortrachelogenin (3-Hydroxy-3,4-bis[(4-hydroxy-3-methoxyphenyl)methyl]-oxolan-2-one);
(8) Pinoresinol (4-[6-(4-Hydroxy-3-methoxyphenyl)-1,3,3a,4,6,6a-hexahydrofuro [3,4-c] furan-3-yl]-2-methoxyphenol);
(9) 5-Hydroxylariciresinol (3,5-Bis[(4-hydroxy-3-methoxy-phenyl)methyl]-4-(hydroxylmethyl)tetrahydrofuran-2-ol);
(10) 2-Hydroxyarctigenin (4-[(3,4-Dimethoxyphenyl)-hydroxy-methyl]-3-[(4-hydroxy-3-methoxy-phenyl)methyl]tetrahydrofuran-2-one);
(11) Trachelogenin (3-Hydroxy-3,4-bis[(4-hydroxy-3-methoxy-phenyl)methyl]tetrahydrofuran-2-one);
(12) Thujastandin (3,4-Dihydroxy-3,4-bis[(4-hydroxy-3-methoxyphenyl)methyl]tetrahydrofuran-2-one);
(13) Busaliol (4-[[Hydroxy-[4-(4-hydroxy-3-phenyl)methyl]-tetrahydrofuran-3-yl]-methyl]-2,6-dimethoxyphenol);
(14) Shonanin (4-[[Hydroxy-(4-hydroxy-3-methoxyphenyl)methyl]tetrahydrofuran-3-yl]methyl]-2-methoxyphenol);
(15) Liovil (4-[Hydroxy-[4-[hydroxy-(4-hydroxy-3-methoxy-phenyl)methyl]tetrahydrofuran-3-yl]methyl]-2-methoxyphenol);
(16) Isoliovil (Todolactol A) (4-[Hydroxy-(4-hydroxy-3-methoxyphenyl)methyl)-3-[4-hydroxy-3-methoxyphenyl)methyl]tetrahydrofuran-2-ol);
(17) Koreanol (4-[[4-[Hydroxy-(4-hydroxy-3-methoxyphenyl)methyl]-2-methoxy-tetrahydrofuran-3-yl]methyl]-2-methoxyphenol);
(18) Taxiresinol (4-[4-[(4-Hydroxy-3-methoxyphenyl)methyl]-3-(hydroxymethyl]tetrahydrofuran-2-yl]benzene-1,2-diol);
(19) Phillygenol (4-[6-(3,4-Dimethoxyphenyl)-1,3,3a,4,6,6a-hexahydrofuro[3,4-c] furan-3-yl]2-methoxyphenol);
(20) Guaiaretic acid (4-[E-4-(4-Hydroxy-3-methoxyphenyl)-2,3-dimethyl-but-3-enyl]-2-methoxyphenol);
(21) Gnidifolin (3-[(2,4-Dihydroxy-3-methoxyphenyl)methyl]-4-[(4-hydroxy-3-methoxyphenyl)methyl]tetrahydrofuran-2-one);
(22) Fragransin A₂ (4-[5-(4-Hydroxy-3-methoxyphenyl)-3,4-dimethyl-tetrahydrofuran-2-yl]-2-methoxyphenol);
(23) Fragransin C_{3b} (4-[5-(4-Hydroxy-3-methoxyphenyl)-3,4-dimethyltetrahydrofuran-2-yl]-2,6-dimethoxyphenol);
(24) Astralignin (4-[5-(3,4-Dimethoxyphenyl)-3,4-dimethyl-tetrahydrofuran-2-yl]-2-methoxyphenol);
(25) Massoniresinol (2-(4-Hydroxy-3-methoxyphenyl)-4-[(4-hydroxy-3-methoxyphenyl)methyl]-3-(hydroxymethyl)tetrahydrofuran-3,4-diol);
(26) Olivil (5-(4-Hydroxy-3-methoxyphenyl)-3-[(4-hydroxy-3-methoxy-phenyl)methyl]-4-(hydroxymethyl)tetrahydrofuran-3-ol);
(27) Isoolivil (Cycloolivil) (4-(4-Hydroxy-3-methoxyphenyl)-2,3-bis(hydroxymethyl)-7-methoxy-tetralin-2,6-diol);
(28) Neo-Olivil (4-[5-(4-Hydroxy-3-methoxphenyl)-3,4-bis(hydroxymethyl)-tetrahydrofuran-2-yl]-2-methoxyphenol);
(29) Vitedoin (6-Hydroxy-4-(4-hydroxy-3-methoxyphenyl)-3-(hydroxymethyl)-5-methoxy-3,4-dihydronaphthalene-2-carbaldehyde); and
(30) Vitrofolal E (6-Hydroxy-4-(4-hydroxy-3-methoxyphenyl)-7-methoxy-naphthalene-2-carbaldehyde),
or
of one, two or several different salts of one, two or several different vanillyl lignans selected from the group as defined above
or
of a mixture of one, two or several different vanillyl lignans selected from the group as defined above with one, two or several different salts of one, two or several different vanillyl lignans selected from the group as defined above
for masking the unpleasant taste impression, preferably a bitter, astringent, and/or metallic taste impression, of an unpleasantly tasting substance, preferably of a bittering agent.

2. Use according to claim 1, wherein one, two, several or all of the used vanillyl lignans are, respectively, selected from the group consisting of
(1) Matairesinol (3,4-Bis[(4-hydroxy-3-methoxyphenyl)methyl]oxolan-2-one);
(2) 7-Hydroxymatairesinol (4-[Hydroxy-(4-hydroxy-3-methoxyphenyl)methyl]-3-[(4-hydroxy-3-methoxyphenyl)methyl]oxolan-2-one);
(3) Lariciresinol (4-[[5-(4-Hydroxy-3-methoxyphenyl)-4-(hydroxymethyl)-oxolan-3-yl]methyl]-2-methoxyphenol);
(4) Arctigenin (4-[(3,4-Dimethoxyphenyl)methyl]-3-[(4-hydroxy-3-methoxy-phenyl)methyl]oxolan-2-one);
(5) Isolariciresinol (1,2,3,4-Tetrahydro-7-hydroxy-1-(4-hydroxy-3-methoxyphenyl)-6-methoxy-2,3-naphthalenedimethanol);
(6) α-Conidendrin (7-Hydroxy-9-(4-hydroxy-3-methoxyphenyl)-6-methoxy-3a,4,9,9a-tetrahydro-1H-benzo[f][2]benzofuran-3-one);
(7) Nortrachelogenin (3-Hydroxy-3,4-bis[(4-hydroxy-3-methoxyphenyl)methyl]-oxolan-2-one);
(8) Pinoresinol (4-[6-(4-Hydroxy-3-methoxyphenyl)-1,3,3a,4,6,6a-hexahydrofuro [3,4-c]furan-3-yl]-2-methoxyphenol).
and salts thereof.

3. Use according to claim 1 or 2, wherein one, two, several or all of the used vanillyl lignans are, respectively, selected from the group consisting of
(1-(-)) (-)-Matairesinol ((3R,4R)-3,4-Bis[(4-hydroxy-3-methoxyphenyl)methyl] oxolan-2-one);
(2-(-)) (-)-7-Hydroxymatairesinol ((3R,4R)-4-[(S)-Hydroxy-(4-hydroxy-3-methoxy-phenyl)methyl]-3-[(4-hydroxy-3-methoxyphenyl)methyl]oxolan-2-one);
(3-(+)) (+)-Lariciresinol (4-[[(3R,4R,5S)-5-(4-Hydroxy-3-methoxyphenyl)-4-(hydroxy-methyl)-oxolan-3-yl]methyl]-2-methoxyphenol);
(4-(-)) (-)-Arctigenin ((3R,4R)-4-[(3,4-Dimethoxyphenyl)methyl]-3-[(4-hydroxy-3-methoxy-phenyl)methyl]oxolan-2-one);
(5-(+)) (+)-Isolariciresinol (1,2,3,4-Tetrahydro-7-hydroxy-1-(4-hydroxy-3-methoxy-phenyl)-6-methoxy-2,3-naphthalenedimethanol);
(6-(-)) (-)-α-Conidendrin ((3aR,9R,9aS)-7-Hydroxy-9-(4-hydroxy-3-methoxyphenyl)-6-methoxy-3a,4,9,9a-tetrahydro-1H-benzo[f][2]benzofuran-3-one);
(7-(-)) (-)-Nortrachelogenin ((3S,4S)-3-Hydroxy-3,4-bis[(4-hydroxy-3-methoxyphenyl)methyl]-oxolan-2-on);
(8-(+)) (+)-Pinoresinol (4-[(3S,3aR,6S,6aR)-6-(4-Hydroxy-3-methoxyphenyl)-1,3,3a,4,6,6a-hexahydrofuro[3,4-c]furan-3-yl]-2-methoxyphenol),
and salts thereof.

4. Use of one, two, or several different salts of one, two or several different vanillyl lignans as defined in any one of the preceding claims
or
of a mixture of one, two, or several different vanillyl lignans as defined in any one of the preceding claims with one, two or several different salts of one, two or several different vanillyl lignans as defined in any one of the preceding claims,
wherein the counter ion(s) of the salt or of one, several or all of the salts, respectively, is or are, respectively, preferably selected from the group consisting of Na⁺, K⁺, NH₄⁺, Ca²⁺, Mg²⁺, Al³⁺ and Zn²⁺.

5. Use of a product obtained or obtainable from plant material, preferably by means of extraction and, where appropriate, subsequent hydrolysis, comprising
one, two or several different vanillyl lignans as defined in any one of claims 1 to 3,
one, two or several different salts of one, two or several different vanillyl lignans as defined in any one of claims 1 to 4
or
a mixture of one, two or several different vanillyl lignans as defined in any one of claims 1 to 3 with one, two or several different salts of one, two or several different vanillyl lignans as defined in any one of claims 1 to 4,
for masking the unpleasant taste impression, preferably the bitter, astringent, and/or metallic taste impression, of an unpleasantly tasting substance, preferably of a bittering agent.

6. Use according to any one of the preceding claims in combination with one, two or several further substances for modifying or masking the unpleasant, in particular bitter, taste impression of an unpleasantly tasting substance, preferably of a bittering agent.

7. Preparation selected from the group consisting of
(1) Preparations used for nutrition, food supplements, oral care or enjoyment,
(2) cosmetic preparations, preferably for application in the area of the head,
(3) pharmaceutical preparations for oral administration,
(4) intermediate products for production of any of the preparations specified in any one of (1) to (3) comprising
- one, two or several unpleasantly, in particular bitter, tasting substances as well as
- one, two or several different vanillyl lignans as defined in any one of claims 1 to 3, or
- one, two or several different salts of one, two or several different vanillyl lignans as defined in any one of claims 1 to 4, or
- a mixture of one, two or several different vanillyl lignans as defined in any one of claims 1 to 3 with one, two or several different salts of one, two or several different vanillyl lignans as defined in any one of claims 1 to 4,
wherein the amount of the unpleasantly, in particular bitter, tasting substance(s) is sufficient to be detected as an unpleasant, in particular bitter, taste impression in a comparative preparation, which neither comprises any of the vanillyl lignans defined above nor any of the salts defined above, but otherwise is of identical composition and
the amount of the vanillyl lignan(s) defined above and of the salt(s) defined above and of the mixture defined above, respectively, is sufficient to, in comparison with the comparative preparation, mask the unpleasant, in particular bitter, taste impression of the unpleasantly, in particular bitter, tasting substances,
with the proviso that preferably at least one of the unpleasantly, in particular bitter, tasting substances which are comprised in the preparation is not secoisolariciresinol.

8. Preparation according to claim 7, **characterised in that**
the molar ratio of the total amount of glycosidically bound vanillyl lignans to the total amount of non-glycosidically bound vanillyl lignans in the preparation is 1:1 or less, preferably 1:10 or less, preferably 1:50 or less, particularly preferably 1:100 or less.

9. Preparation according to claim 7 or 8, **characterized in that**
the one or one of the unpleasantly tasting substance(s) is a bittering agent, which is present in a concentration that corresponds to at least 2 relative bitter equivalents,
or
several or all of the unpleasantly tasting substances are bittering agents, wherein the total concentration of all bittering agents corresponds to at least 2 relative bitter equivalents.

10. Preparation according to any one of claims 7 to 9, comprising
one, two or several different vanillyl lignans as defined in any one of claims 1 to 3,
and/or
one, two or several different salts of one, two or several different vanillyl lignans as defined in any one of claims 1 to 4
in a total amount of the vanillyl lignans defined above and of the salts defined above of 10 to less than 300 mg/kg, preferably of 12 to 100 mg/kg, with regard to the total weight of the preparation,
with the proviso that preferably at least one of the unpleasantly, in particular bitter, tasting substances contained in the preparation is not secoisolariciresinol.

11. Preparation according to any one of claims 7 to 10, **characterized in that**
the amount of the vanillyl lignan(s) defined above or of the salt(s) defined above or of the mixture defined above, respectively, is sufficient to mask the unpleasant, in particular bitter, taste impresssion of the unpleasantly, in particular bitter, tasting substance(s) such that it corresponds to the taste impression of the comparative preparation, which comprises (i) neither any of the vanillyl lignans defined above, nor any of the salts defined above as well as (ii) 90 wt.-% or less, preferably 80 wt.-% or less, preferably 75 wt.-% or less, particularly preferably 70 wt.-% or less of the unpleasantly, in particular bitter, tasting substance(s), but otherwise is of identical composition,
and/or
the one or one of the unpleasantly tasting substance(s) is a bittering agent which is present in a concentration of at least twofold its bitter stimulus threshold, preferably in the range of twofold to thousandfold its bitter stimulus threshold.

12. Preparation according to any one of claims 7 to 11, **characterized in that** the preparation comprises one, two or several of the following bittering agents:
- catechins and proanthocyanidins in a total amount of at least 0.05 wt.-%, preferably of at least 0.1 wt.-%, preferably in the range of 0.2 wt.-% to 1 wt.-%,
- caffeine and theobromine in a total amount of at least 0.05 wt.-%, preferably of at least 0.25 wt.-%, preferably of at least 0.5 wt.-%, more preferably in the range of 1 wt.-% to 2.5 wt.-%,
- naringin in a concentration of at least 0.025 wt.-%, preferably of at least 0.1 wt.-%, preferably in the range of 0.2 wt.-% to 2 wt.-%,
- sweeteners in a total amount of at least 0.005 wt.-%, preferably of at least 0.05 wt.-%, preferably in the range of 0.1 wt.-% to 2 wt.-%,
with respect to the total weight of the preparation, respectively.

13. Process for (a) masking of the unpleasant, in particular bitter, taste impression of one, two or several unpleasantly, in particular bitter, tasting substances and/or (b) producing a preparation according to any one of claims 7 to 12 with the following step:
contacting or mixing the unpleasanlty, in particular bitter, tasting substance(s) with
- one, two or several different vanillyl lignans as defined in any one of claims 1 to 4,
or
- one, two or several different salts of one, two or several different vanillyl lignans as defined in any one of claims 1 to 4,
or
- a mixture of one, two or several different vanillyl lignans as defined in any one of claims 1 to 4 with one, two or several different salts of one, two or several different vanillyl lignans as defined in any one of claims 1 to 4.

14. Process according to claim 13, comprising the steps of
(i) production of an extract comprising
- one, two or several different vanillyl lignans as defined in any one of claims 1 to 3,
- one, two or several different salts of one, two or several different vanillyl lignans as defined in any one of claims 1 to 4
or
- a mixture of one, two or several different vanillyl lignans as defined in any one of claims 1 to 3 with one, two or several different salts of one, two or several different vanillyl lignans as defined in any one of claims 1 to 4,
by means of extraction of plant material;
(ii) optionally further processing of the extract produced in step (i) to a further processed product comprising
- one, two or several different vanillyl lignans as defined in any one of claims 1 to 3,
- one, two or several different salts of one, two or several different vanillyl lignans as defined in any one of claims 1 to 4
or
- a mixture of one, two or several different vanillyl lignans as defined in any one of claims 1 to 3 with one, two or several different salts of one, two or several different vanillyl lignans as defined in any one of claims 1 to 4,
(iii) contacting or mixing of the unpleasantly, in particular bitter, tasting substance(s) with the extract produced in step (i) or with the further processed product produced in step (ii), respectively.

## Revendications

1. Utilisation d'un, deux ou plusieurs vanillyllignanes différentes choisies dans le groupe constitué par :
(1) Matairesinol (3,4-Bis[(4-hydroxy-3-methoxyphenyl)methyl]oxolan-2-on);
(2) 7-Hydroxymatairesinol (4-[Hydroxy-(4-hydroxy-3-methoxyphenyl)methyl]-3-[(4-hydroxy-3-methoxyphenyl)methyl]oxolan-2-on);
(3) Lariciresinol (4-[[5-(4-Hydroxy-3-methoxyphenyl)-4-(hydroxymethyl)-oxolan-3-yl]methyl]- 2-methoxyphenol);
(4) Arctigenin (4-[(3,4-Dimethoxyphenyl)methyl]-3-[(4-hydroxy-3-metholyphenyl) methyl]ololan-2-on);
(5) Isolariciresinol (1,2,3,4-Tetrahydro-7-hydroxy-1-(4-hydroxy-3-methoxyphenyl)-6-methoxy-2,3-naphthalendimethanol);
(6) α-Conidendrin (7-Hydroxy-9-(4-hydroxy-3-methoxyphenyl)-6-methoxy-3a,4,9,9a-tetrahydro-1H-benzo[f][2]benzofuran-3-on);
(7) Nortrachelogenin (3-Hydroxy-3,4-bis[(4-hydroxy-3-methoxyphenyl)methyl]-oxolan-2-on);
(8) Pinoresinol (4-[6-(4-Hydroxy-3-methoxyphenyl)-1,3,3a,4,6,6a-hexahydrofuro [3,4-c] furan-3-yl]-2-methoxyphenol);
(9) 5-Hydroxylariciresinol (3,5-Bis[(4-hydroxy-3-methoxy-phenyl)methyl]-4-(hydroxylmethyl)tetrahydrofurn-2-ol);
(10) 2-Hydroxyarctigenin (4-[(3,4-Dimethoxyphenyl)-hydroxy-methyl]-3-[(4-hydroxy-3-methoxy-phenyl)methyl]tetrahydrofuran-2-on);
(11) Trachelogenin (3-Hydroxy-3,4-bis[(4-hydroxy-3-methoxy-phenyl)methyl]tetrahydrofuran-2-on);
(12) Thujastandin (3,4-Dihydroxy-3,4-bis[(4-hydroxy-3-methoxy-phenyl)methyl]tetrahydrofuran-2-on);
(13) Busaliol (4-[[Hydroxy-[4-(4-hydroxy-3-phenyl)methyl]-tetrahydrofuran-3-yl]-methyl]-2,6-dimethoxyphenol);
(14) Shonanin (4-[[Hydroxy-(4-hydroxy-3-methoxyphenyl)methyl]tetrahydrofuran-3-yl]methyl]-2-methoxyphenol);
(15) Liovil (4-[Hydroxy-[4-[hydroxy-(4-hydroxy-3-methoxy-phenyl) methyl]tetrahydrofuran-3-yl]methyl]-2-methoxyphenol);
(16) Isoliovil (Todolactol A) (4-[Hydroxy-(4-hydroxy-3-methoxyphenyl)methyl)-3-[4-hydroxy-3-methoxyphenyl)methyl]tetrahydrofuran-2-ol);
(17) Koreanol (4-[[4-[Hydroxy-(4-hydroxy-3-methoxyphenyl)methyl]-2-methoxy-tetrahydrofuran-3-yl]methyl]-2-methoxyphenol);
(18) Taxiresinol (4-[4-[(4-Hydroxy-3-methoxyphenyl)methyl]-3-(hydroxymethyl]tetrahydrofuran-2-yl]benzen-1,2-diol);
(19) Phillygenol (4-[6-(3,4-Dimethoxyphenyl)-1,3,3a,4,6,6a-hexahydrofuro[3,4-c] furan-3-yl]2-methoxyphenol);
(20) Guaiaretinsaure (4-[E-4-(4-Hydroxy-3-methoxyphenyl)-2,3-dimethylbut-3-enyl]-2-methoxyphenol);
(21) Gnidifolin (3-[(2,4-Dihydroxy-3-methoxyphenyl)methyl]-4-[(4-hydroxy-3-methoxyphenyl)methyl]tetrahydrofuran-2-on);
(22) Fragransin A₂ (4-[5-(4-Hydroxy-3-methoxyphenyl)-3,4-dimethyltetrahydrofuran-2-yl]-2-methoxyphenol);
(23) Fragransin C_{3b} (4-[5-(4-Hydroxy-3-methoxyphenyl)-3,4-dimethyltetrahydrofuran-2-yi]-2,6-dimethoxyphenol);
(24) Astralignin (4-[5-(3,4-Dimethoxyphenyl)-3,4-dimethyl-tetrahydrofuran-2-yl]-2-methoxyphenol);
(25) Massoniresinol (2-(4-Hydroxy-3-methoxyphenyl)-4-[(4-hydroxy-3-methoxy-phenyl)methyl]-3-(hydroxymethyl)tetrahydrofuran-3,4-diol);
(26) Olivil (5-(4-Hydroxy-3-methoxyphenyl>-3-[(4-hydroxy-3-methoxy-phenyl)methyl]-4-(hydroxymethyl)tetrahydrofuran-3-ol);
(27) Isoolivil (Cycloolivil) (4-(4-Hydroxy-3-methoxyphenyl)-2,3-bis(hydroxymethyl)-7-methoxy-tetralin-2,6-diol);
(28) Neo-Olivil (4-[5-(4-Hydroxy-3-methoxphenyl)-3,4-bis(hydroxymethyl)-tetrahydrofuran-2-yl]-2-methoxyphenol);
(29) Vitedoin (6-Hydroxy-4-(4-hydroxy-3-methoxyphenyl}-3-(hydroxymethyl)-5-methoxy-3,4-dihydronaphthalen-2-carbaldehyd);
et
(30) Vitrofolal E (6-Hydroxy-4-(4-hydroxy-3-methoxyphenyl)-7-methoxy-naphthalen-2-carbaldehyd),
ou
d'un, deux ou plusieurs sels différents d'un, deux ou plusieurs vanillyllignanes différentes choisies dans le groupe comme défini ci-dessus
ou
un mélange d'un, deux ou plusieurs vanillyllignanes différentes choisies dans le groupe comme défini ci-dessus avec une, deux ou plusieurs sels d'une, deux ou plusieurs vanillyllignanes différentes choisies dans le groupe comme défini ci-dessus
pour masquer l'impression de goût désagréable, singulièrement amer, astringent et/ou métallique, d'une substance au goût désagréable, de préférence une substance amère.

2. Utilisation selon revendication 1, où une, deux, plusieurs ou toutes des vanillyllignanes usées sont chaque fois choisies dans le group constitué par
(1) Matairesinol (3,4-Bis[(4-hydroxy-3-methoxyphenyl)methyl]oxolan-2-on);
(2) 7-Hydroxymatairesinol (4-[Hydroxy-(4-hydroxy-3-methoxyphenyl)methyl]-3-[(4-hydroxy-3-methoxyphenyl)methyl]oxolan-2-on);
(3) Lariciresinol (4-[[5-(4-Hydroxy-3-methoxyphenyl)-4-(hydroxymethyl)-oxolan-3-yl]methyl]- 2-methoxyphenol);
(4) Arctigenin (4-[(3,4-Dimethoxyphenyl)methyl]-3-[(4-hydroxy-3-methoxyphenyl)methyl]oxolan-2-on);
(5) Isolariciresinol (1,2,3,4-Tetrahydro-7-hydroxy-1-(4-hydroxy-3-methoxyphenyl)-6-methoxy-2,3-naphthalendimethanol);
(6) a-Conidendrin (7-Hydroxy-9-(4-hydroxy-3-methoxyphenyl)-6-methoxy-3a,4,9,9a-tetrahydro-1H-benzo[f][2]benzofuran-3-on);
(7) Nortrachelogenin (3-Hydroxy-3,4-bis[(4-hydroxy-3-methoxyphenyl)methyl]-oxolan-2-on);
(8) Pinoresinol (4-[6-(4-Hydroxy-3-methoxyphenyl)-1,3,3a,4,6,6a-hexahydrofuro [3,4-c] furan-3-yl]-2-methoxyphenol),
et leurs sels.

3. Utilisation selon revendication 1 ou 2, où une, deux, plusieurs ou toutes des vanillyllignanes usées sont chaque fois choisies dans le group constitué par
(1 -(-)) (-)-Matairesinol ((3R,4R)-3,4-Bis[(4-hydroxy-3-methoxyphenyl)methyl] oxolan-2-on); );
(2-(-)) (-)-7-Hydroxymatairesinol ((3R,4R)-4-[(S)-Hydroxy-(4-hydroxy-3-methoxy-phenyl)methyl]-3-[(4-hydroxy-3-methoxyphenyl)methyl]oxolan-2-on);
(3-(+) (+)-Lariciresinol (4-[[(3R,4R,5S)-5-(4-Hydroxy-3-methoxyphenyl)-4-(hydroxy-methyl)-oxolan-3-yl]methyl]- 2-methoxyphenol);
(4-(-)) (-)-Arctigenin ((3R,4R)-4-[(3,4-Dimethoxyphenyl)methyl]-3-[(4-hydroxy-3-methoxy-phenyl)methyl]oxolan-2-on);
(5-(+)) (+)-Isolariciresinol (1,2,3,4-Tetrahydro-7-hydroxy-1-(4-hydroxy-3-methoxyphenyl)-6-methoxy-2,3-naphthalendimethanol);
(6-(-)) (-)-a-Conidendrin (((3aR,9R,9aS)-7-Hydroxy-9-(4-hydroxy-3-methoxyphenyl)-6-methoxy-3a,4,9,9a-tetrahydro-1 H benzo[f][2]benzofuran-3-on);
(7-(-)) (-)-Nortrachelogenin ((3S,4S)-3-Hydroxy-3,4-bis[(4-hydroxy-3-methoxyphenyl )methy l]-oxolan-2-on);
(8-(+))(+)-Pinoresinol (4-[(3S,3aR,6S,6aR)-6-(4-Hydroxy-3-methoxyphenyl)-1,3,3a,4,6,6a-hexahydrofuro[3,4-c]furan-3-yl]-2-methoxyphenol),
et leurs sels.

4. Utilisation d'un, deux ou plusieurs sels différents d'une, deux ou plusieurs vanillyllignanes différentes comme définies selon l'une quelconque des revendications précédentes
ou
un mélange d'une, deux ou plusieurs vanillyllignanes différentes comme définies selon une des revendications précédentes avec un, deux ou plusieurs sels différents d'une, deux ou plusieurs vanillyllignanes différentes comme définies selon une des revendications précédentes,
où le respectivement les contrecations du respectivement d'un, plusieurs ou tous des sels est respectivement sont choisi/choisis de préférence dans le groupe constitué par Na⁺, K⁺, NH₄⁺, Ca²⁺ Mg²⁺, Al³⁺, Zn^{2+.}

5. Utilisation d'un produit productible ou produit de matériau végétal, de préférence par extraction et éventuellement hydrolyse ultérieure et ledit produit comprenant
une, deux ou plusieurs vanillyllignanes différentes comme définies selon l'une quelconque des revendications 1 à 3,
un, deux ou plusieurs sels différents d'une, deux ou plusieurs vanillyllignanes différentes comme définies selon l'une quelconque des revendications 1 à 4
ou
un mélange d'une, deux ou plusieurs vanillyllignanes différentes comme définies selon une des revendications 1 à 3 avec un, deux ou plusieurs sels différents d'une, deux ou plusieurs vanillyllignanes différentes comme définies selon l'une quelconque des revendications 1 à 4,
pour masquer l'impression de goût désagréable, singulièrement amer, astringent et/ou métallique, d'une substance au goût désagréable, de préférence une substance amère.

6. Utilisation selon l'une quelconque des revendications précédentes en combinaison avec une, deux ou plusieurs autres agents pour modifier ou masquer l'impression de goût désagréable, singulièrement l'impression de goût amer, d'une substance au goût désagréable, de préférence une substance amère.

7. Préparation choisie dans le groupe constitué par
(1) des préparations pour la nutrition, le supplément diététique, l'hygiène buccale ou la délectation,
(2) des préparations cosmétiques, de préférence pour l'application dans la zone de la tête
(3) des préparations pharmaceutiques pour l'ingestion orale,
(4) des produits intermédiaires pour la fabrication d'une des préparations selon (1) à (3) comprenant
- une, deux ou plusieurs substances au goût désagréable, singulièrement amer, aussi bien que
- une, deux ou plusieurs vanillyllignanes différentes comme définies selon l'une quelconque des revendications 1 à 4, ou
- un, deux ou plusieurs sels différents d'une, deux ou plusieurs vanillyllignanes différentes comme définies selon l'une quelconque des revendications 1 à 4
ou
- un mélange d'une, deux ou plusieurs vanillyllignanes différentes comme définies selon l'une quelconque des revendications 1 à 3 avec un, deux ou plusieurs sels différents d'une, deux ou plusieurs vanillyllignanes différentes comme définies selon l'une quelconque des revendications 1 à 4,
où la quantité de la respectivement des substances au goût désagréable, singulièrement amer, suffit pour être identifiée dans une préparation comparative, qui ne comprend ni une des vanillyllignanes comme définies ci-dessus ni un des sels comme définis ci-dessus, mais pour le reste est identiquement composée, comme un goût désagréable, singulièrement amer,
et
la quantité de la ou des vanillyllignanes comme définies ci-dessus respectivement du ou des sels comme définis ci-dessus respectivement du mélange comme défini ci-dessus suffit, pour masquer l'impression de goût désagréable, singulièrement amer, de la respectivement des substances au goût désagréable, singulièrement amer, par rapport à la préparation comparative,
avec la condition qu'au moins une des substances au goût désagréable, singulièrement amer, dans la préparation n'est pas de préférence secoisolariciresinol.

8. Préparation selon la revendication 7, **caractérisée en ce que**
le rapport molaire de la quantité totale de vanillyllignanes liées glycosidiquement à la quantité totale de vanillyllignanes pas liées glycosidiquement est 1:1 ou moins dans la préparation, de préférence 1:10 ou moins, de préférence 1:50 ou moins, particulièrement de préférence 1:100 ou moins.

9. Préparation selon la revendication 7 ou 8, **caractérisée en ce que**
la ou une des substances au goût désagréable est une substance amère, qui est présente en une concentration qui correspond au moins à 2 équivalents relatives d'amertume,
ou
plusieurs ou toutes les substances au goût désagréable sont des substances amères, où la concentration totale de toutes les substances amères correspond au moins à 2 équivalents relatives d'amertume.

10. Préparation selon l'une quelconque des revendications 7 à 9, contenant
une, deux ou plusieurs vanillyllignanes différentes comme définies selon l'une quelconque des revendications 1 à 3,
et/ou
un, deux ou plusieurs sels différents d'une, deux ou plusieurs vanillyllignanes différentes comme définies selon l'une quelconque des revendications 1 à 4
dans une quantité totale de vanillyllignanes comme définies ci-dessus et de sels comme définis ci-dessus de 10 à moins de 300 mg/kg, de préférence de 12 à moins de 100 mg/kg, par rapport au poids total de la préparation.
avec la condition qu'au moins une des substances au goût désagréable, singulièrement amer, dans la préparation n'est pas de préférence secoisolariciresinol.

11. Préparation selon l'une quelconque des revendications 7 à 10, **caractérisée par** ce que
la quantité de la ou des vanillyllignanes comme définies ci-dessus respectivement du ou des sels comme définis ci-dessus respectivement du mélange comme défini ci-dessus suffit pour masquer l'impression de goût désagréable, singulièrement amer, de la respectivement des substances au goût désagréable, singulièrement amer, en sorte qu'elle corresponde à l'impression de goût d'une préparation comparative, qui ne contient (i) ni une des vanillyllignanes comme définies ci-dessus ni un des sels comme définis ci-dessus ainsi que (ii) 90 % en poids ou moins, de préférence 80 % en poids ou moins, de préférence 75 % en poids ou moins, particulièrement préférée 70 % en poids au moins de la respectivement des substances au goût désagréable, singulièrement amer, mais pour le reste est composée identiquement,
et/ou
la ou une des substances au goût désagréable est une substance amère, qui est présente en concentration au moins du double de sa valeur de seuil d'amertume, de préférence dans le domaine de deux fois à mille fois sa valeur de seuil d'amertume.

12. Préparation selon l'une quelconque des revendications 7 à 11, **caractérisée par** ce que
ladite préparation contient une, deux ou plusieurs des substances amères suivantes :
- catechine et proanthocyanidine avec une quantité totale d'au moins 0,05 % en poids, de préférence d'au moins 0,1 % en poids, de préférence dans le domaine de 0,2 % en poids à 1 % en poids,
- caféine et theobromin avec une quantité totale d'au moins 0,05 % en poids, de préférence d'au moins 0,25 % en poids, de préférence d'au moins 0,5 % en poids, en plus de préférence dans le domaine de 1 % en poids à 2,5 % en poids,
- naringin en une concentration d'au moins 0,025 % en poids, de préférence d'au moins 0,1 % en poids, de préférence dans le domaine de 0,2 % en poids à 2 % en poids,
- édulcorants avec une quantité totale d'au moins 0,005 % en poids, de préférence d'au moins 0,05 % en poids, de préférence dans le domaine de 0,1 % en poids à 2 % en poids,
chaque fois par rapport au poids total de la préparation.

13. Procédé pour (a) masquer l'impression de goût désagréable, singulièrement amer, d'une, deux ou plusieurs substances au goût désagréable, singulièrement amer, et/ou (b) fabriquer une préparation selon l'une quelconque des revendications 7 à 12, avec l'étape suivante:
contacter ou mélanger la ou les substances au goût désagréable, singulièrement amer, avec
- une, deux ou plusieurs vanillyllignanes différentes comme définies selon l'une quelconque des revendications 1 à 4,
ou
- un, deux ou plusieurs sels différents d'une, deux ou plusieurs vanillyllignanes différentes comme définies selon l'une quelconque des revendications 1 à 4
ou
- un mélange d'une, deux ou plusieurs vanillyllignanes différentes comme définies selon une des revendications 1 à 3 avec un, deux ou plusieurs sels différents d'une, deux ou plusieurs vanillyllignanes différentes comme définies selon l'une quelconque des revendications 1 à 4.

14. Procédé selon la revendication 13, comprenant les étapes suivantes
(i) Fabriquer un extrait comprenant
- une, deux ou plusieurs vanillyllignanes différentes comme définies selon l'une quelconque des revendications 1 à 4,
ou
- un, deux ou plusieurs sels différents d'une, deux ou plusieurs vanillyllignanes différentes comme définies selon l'une quelconque des revendications 1 à 4
ou
- un mélange d'une, deux ou plusieurs vanillyllignanes différentes comme définies selon une des revendications 1 à 3 avec un, deux ou plusieurs sels différents d'une, deux ou plusieurs vanillyllignanes différentes comme définies selon l'une quelconque des revendications 1 à 4,
par extraction de matériau végétal;
(ii) i) facultativement, traiter l'extrait fabriqué dans l'étape (i) pour obtenir un produit traité comprenant
- une, deux ou plusieurs vanillyllignanes différentes comme définies selon l'une quelconque des revendications 1 à 4,
ou
- un, deux ou plusieurs sels différents d'une, deux ou plusieurs vanillyllignanes différentes comme définies selon l'une quelconque des revendications 1 à 4
ou
- un mélange d'une, deux ou plusieurs vanillyllignanes différentes comme définies selon une des revendications 1 à 3 avec un, deux ou plusieurs sels différents d'une, deux ou plusieurs vanillyllignanes différentes comme définies selon l'une quelconque des revendications 1 à 4,
(iii) contacter ou mélanger la ou les substances au goût désagréable, singulièrement amer, avec l'extrait fabriqué en étape (i) respectivement le produit traité et fabriqué en étape (ii).
